(19) Europäisches Patentamt
European Patent Office
Office européen des brevets

(11) **EP 4 712 424 A1**

(12) **EUROPEAN PATENT APPLICATION**
published in accordance with Art. 153(4) EPC

(43) Date of publication:
**18.03.2026 Bulletin 2026/12**

(21) Application number: **23936549.7**

(22) Date of filing: **08.05.2023**

(51) International Patent Classification (IPC):
***H04L 27/36*** *(2006.01)*

(52) Cooperative Patent Classification (CPC):
**H04L 27/36**

(86) International application number:
**PCT/JP2023/017347**

(87) International publication number:
**WO 2024/231995 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
- **SHIBAIKE, Naoya**
  **Tokyo 100-6150 (JP)**
- **ONODA, Takanobu**
  **Tokyo 100-6150 (JP)**
- **NAGATA, Satoshi**
  **Tokyo 100-6150 (JP)**
- **LIU, Wenjia**
  **Beijing, 100190 (CN)**
- **HOU, Xiaolin**
  **Beijing, 100190 (CN)**
- **CHEN, Lan**
  **Beijing, 100190 (CN)**
- **LIU, Liu**
  **Beijing, 100190 (CN)**
- **YAN, Xiaorui**
  **Beijing, 100081 (CN)**

(74) Representative: **Hoffmann Eitle**
**Patent- und Rechtsanwälte PartmbB**
**Arabellastraße 30**
**81925 München (DE)**

# (54) TERMINAL AND COMMUNICATION METHOD

(57) A terminal includes: a control unit configured to: map bit sequences to indices; output one-hot encoder vectors associated with the indices; and pre-train a neural network (NN) to output modulated symbols in response to the one-hot encoder vectors, a variance of phase noise, and a power amplifier (PA) saturation point, as inputs; and a transmitting unit configured to carry out a transmission to a base station by using modulated symbols that are selected based on a constellation generated by the pre-trained NN.

FIG.38

With modulation order $\log_2 N$, PN variance $\sigma_{PN}^2$ and PA saturation point PaSat:
• Bit-to-index mapping (for bit sequences with length $\log_2 N$) + Offline-trained NN (for $N$, $\sigma_{PN}^2$, and PaSat) = Bit-to-symbol mapping and constellation with robustness to PA non-linearity and PN
Proposed modulation at transmitter:
Bit sequence
Bit-to-index mapping
One-hot encoder vector
Offline-trained NN: defined by parameters pre-stored at transmitter
DNN
DNN
DNN
Modulated symbol
PA saturation point PaSat
PN variance, $\sigma_{PN}^2$
PA saturation point, PaSat
Tx symbol
Channel (with PN and variance $\sigma_{PN}^2$)
Rx Symbol
DNN
DNN
DNN
One-hot encoder vector
Bit-to-index de-mapping
Bit sequence
PN variance, $\sigma_{PN}^2$
PA saturation point, PaSat
Offline-trained NN: defined by parameters pre-stored at receiver
Proposed demodulation at receiver:



Processed by Luminess, 75001 PARIS (FR)

## Description

TECHNICAL FIELD

The present invention relates to a terminal and a communication method in a wireless communication system.

BACKGROUND ART

The requirements of "new radio" (NR, also referred to as "5G"), which is a successor system of long-term evolution (LTE), include large system capacity, high data transmission speed, low latency, simultaneous access from multiple terminals, low cost, power saving, and so forth, and a variety of techniques are under study to meet these requirements (see, for example, non-patent literature 1).

When, for example, a transmission is carried out using a higher frequency and a wider bandwidth than in the past, an RF oscillator may produce an increased amount of phase noise (PN) at higher carrier frequencies. Also, although a high-power amplifier (HPA) may be used to gain a higher signal-to-noise ratio (SNR), non-linear distortion may be produced.

CITATION LIST

NON-PATENT LITERATURE

Non-Patent Literature 1: 3GPP TS 38.300 V17.3.0 (2022-12)

Non-Patent Literature 2: C. Rapp, "Effects of HPA-Nonlinearity on a 4-DPSK/OFDM-Signal for a Digital Sound Broadcasting System", in Proceedings of the Second European Conference on Satellite Communications, Liege, Belgium, Oct. 22-24, 1991, pp. 179-184.

Non-Patent Literature 3: A. Ugolini, A. Piemontese and T. Eriksson, "Spiral Constellations for Phase Noise Channels", in IEEE Transactions on Communications, Vol. 67, No. 11, pp. 7799-7810, Nov. 2019, doi: 10.1109/TCOMM.2019.2937293.

Non-Patent Literature 4: Digital Video Broadcasting (DVB); Second generation framing structure, channel coding and modulation systems for Broadcasting, Interactive Services, News Gathering and other broadband satellite applications; Part 1: DVB-S2. (ETSI EN 302 307-1 V1.4.1 (2014-11))

Non-Patent Literature 5: Y. Ji, G. Zhang, J. Huang, J. Yang, G. Gui and H. Sari, "Deep Learning for Adaptive Modulation and Coding with Payload Length in Vehicle-to-Vehicle Communications Systems", 2021 IEEE 94th Vehicular Technology Conference (VTC2021-Fall), 2021, pp. 1-5, doi: 10.1109/VTC2021-Fall52928.2021.9625436.

Non-Patent Literature 6: L. -S. Chen, W. -H. Chung, I. -Y. Chen and S. -Y. Kuo, "AMC With a BP-ANN Scheme for 5G Enhanced Mobile Broadband", in IEEE Access, doi: 10.1109/ACCESS.2020.3024726.

Non-Patent Literature 7: J. P. Twarayisenze et al., "Artificial Neural Network Based Adaptive Spatial Modulation", 2021 IEEE 6th International Conference on Computer and Communication Systems (ICCCS), 2021, pp. 553-557, doi: 10.1109/ICCCS52626.2021.9449310.

Non-Patent Literature 8: N. Kurniawati and Y. K. Ningsih, "Reinforcement Learning-Based Adaptive Modulation for Vehicular Communication", 2021 18th International Conference on Electrical Engineering/Electronics, Computer, Telecommunications and Information Technology (ECTI-CON), 2021, pp. 224-227, doi: 10.1109/ECTI-CON51831.2021.9454740.

Non-Patent Literature 9: W. Su, J. Lin, K. Chen, L. Xiao and C. En, "Reinforcement Learning-Based Adaptive Modulation and Coding for Efficient Underwater Communications", in IEEE Access, Vol. 7, pp. 67539-67550, 2019, doi: 10.1109/ACCESS.2019.2918506.

Non-Patent Literature 10: J. P. Leite, P. H. P. de Carvalho and R. D. Vieira, "A flexible framework based on reinforcement learning for adaptive modulation and coding in OFDM wireless systems", 2012 IEEE Wireless Communications and Networking Conference (WCNC), 2012, pp. 809-814, doi: 10.1109/WCNC.2012.6214482.

Non-Patent Literature 11: D. Lee et al., "DQN-Based Adaptive Modulation Scheme Over Wireless Communication Channels", in IEEE Communications Letters, Vol. 24, No. 6, pp. 1289-1293, June 2020, doi: 10.1109/LCOMM.2020.2978390.

Non-Patent Literature 12: L. Zhang, J. Tan, Y. Liang, G. Feng and D. Niyato, "Deep Reinforcement Learning-Based Modulation and Coding Scheme Selection in Cognitive Heterogeneous Networks", in IEEE Transactions on Wireless Communications, Vol. 18, No. 6, pp. 3281-3294, June 2019, doi: 10.1109/TWC.2019.2912754.

Non-Patent Literature 13: S. Bicais, J. -B. Dore and J. Luis Gonzalez Jimenez, "Adaptive PSK Modulation Scheme in the Presence of Phase Noise", 2018 IEEE 19th International Workshop on Signal Processing Advances in Wireless Communications (SPAWC), Kalamata, Greece, 2018, pp. 1-5, doi: 10.1109/SPAWC.2018.8445933.
Non-Patent Literature 14: 3GPP TS 38.211 V17.4.0(2022-12)
Non-Patent Literature 15: "RF impairment models for 60GHz-band SYS/PHY simulation", doc.: IEEE 802.15-06-0477-01-003c
Non-Patent Literature 16: 3GPP TS 38.214 V17.4.0 (2022-12)

## SUMMARY OF INVENTION

## TECHNICAL PROBLEM

Existing modulation methods such as quadrature amplitude modulation (QAM) and amplitude phase shift keying (APSK) suffer a significant loss of performance due to phase noise. Furthermore, in existing adaptive modulation and coding (AMC), non-linear factors such as phase noise and power amplifier (PA) saturation points are not taken into account and therefore have a large impact on performance.

The present invention has been made in view of the foregoing, and aims to reduce the performance degradation due to phase noise and PA saturation points in a wireless communication system.

## SOLUTION TO PROBLEM

According to the technique disclosed herein, a terminal is provided. This terminal includes: a control unit configured to: map bit sequences to indices; output one-hot encoder vectors associated with the indices; and pre-train a neural network (NN) to output modulated symbols in response to the one-hot encoder vectors, a variance of phase noise, and a power amplifier (PA) saturation point as inputs; and a transmitting unit configured to carry out a transmission to a base station by using modulated symbols that are selected based on a constellation generated by the pre-trained NN.

## ADVANTAGEOUS EFFECTS OF INVENTION

According to the technique disclosed herein, it is possible to reduce the performance degradation due to phase noise and PA saturation points in a wireless communication system.

## BRIEF DESCRIPTION OF DRAWINGS

[FIG. 1] FIG. 1 is a diagram showing an example structure of a wireless communication system;
[FIG. 2] FIG. 2 is a diagram showing how performance may vary depending on the variance of phase noise;
[FIG. 3] FIG. 3 is a diagram showing how performance may vary depending on the variance of phase noise and the modulation method;
[FIG. 4] FIG. 4 is a diagram showing a first example of a spiral constellation;
[FIG. 5] FIG. 5 is a diagram showing a second example of a spiral constellation;
[FIG. 6] FIG. 6 is a diagram showing how 64QAM's performance may vary depending on power amplifier (PA) characteristics;
[FIG. 7] FIG. 7 is a diagram showing how a 64QAM constellation may change depending on PA characteristics;
[FIG. 8] FIG. 8 is a diagram showing how 64APSK's performance may vary depending on PA characteristics;
[FIG. 9] FIG. 9 is a diagram showing a 64APSK constellation;
[FIG. 10] FIG. 10 is a diagram showing how a 64APSK constellation may change depending on PA characteristics;
[FIG. 11] FIG. 11 is a diagram for explaining a first example of a system according to an embodiment of the present invention;
[FIG. 12] FIG. 12 is a diagram showing examples of constellations generated by a system according to an embodiment of the present invention;
[FIG. 13] FIG. 13 is a first example diagram showing performance curves associated with respective constellations generated by a system according to an embodiment of the present invention;
[FIG. 14] FIG. 14 is a second example diagram showing performance curves associated with respective constellations generated by a system according to an embodiment of the present invention;
[FIG. 15] FIG. 15 is a third example diagram showing performance curves associated with respective constellations generated by a system according to an embodiment of the present invention;
[FIG. 16] FIG. 16 is a fourth example diagram showing performance curves associated with respective constellations generated by a system according to an embodiment of the present invention;

[FIG. 17] FIG. 17 is a diagram for explaining a second example of a system according to an embodiment of the present invention;

[FIG. 18] FIG. 18 is a fifth example diagram showing performance curves associated with respective constellations generated by a system according to an embodiment of the present invention;

[FIG. 19] FIG. 19 is a sixth example diagram showing performance curves associated with respective constellations generated by a system according to an embodiment of the present invention;

[FIG. 20] FIG. 20 is a seventh example diagram showing performance curves associated with respective constellations generated by a system according to an embodiment of the present invention;

[FIG. 21] FIG. 21 is an eighth example diagram showing performance curves associated with respective constellations generated by a system according to an embodiment of the present invention;

[FIG. 22] FIG. 22 is a diagram showing an example of a system for reducing the impact of phase noise according to an embodiment of the present invention;

[FIG. 23] FIG. 23 is a diagram of a first example, showing a set of constellations generated by a system for reducing the impact of phase noise according to an embodiment of the present invention;

[FIG. 24] FIG. 24 is a diagram of a second example, showing a set of constellations generated by a system for reducing the impact of phase noise according to an embodiment of the present invention;

[FIG. 25] FIG. 25 is a diagram of a third example, showing a constellation generated by a system for reducing the impact of phase noise according to an embodiment of the present invention;

[FIG. 26] FIG. 26 is a diagram of a fourth example, showing a set of constellations generated by a system for reducing the impact of phase noise according to an embodiment of the present invention;

[FIG. 27] FIG. 27 is a diagram of a fifth example, showing set of constellations generated by a system for reducing the impact of phase noise according to an embodiment of the present invention;

[FIG. 28] FIG. 28 is a diagram showing an example of a PA characteristic curve;

[FIG. 29] FIG. 29 is a diagram for explaining an example of a system for reducing the impact of PA non-linearities according to an embodiment of the present invention;

[FIG. 30] FIG. 30 is a diagram of a first example, showing a set of constellations generated by a system for reducing the impact of PA non-linearities according to an embodiment of the present invention;

[FIG. 31] FIG. 31 is a diagram of a second example, showing a set of constellations generated by a system for reducing the impact of PA non-linearities according to an embodiment of the present invention;

[FIG. 32] FIG. 32 is a diagram of a third example, showing a set of constellations generated by a system for reducing the impact of PA non-linearities according to an embodiment of the present invention;

[FIG. 33] FIG. 33 is a diagram of a fourth example, showing a constellation generated by a system for reducing the impact of PA non-linearities according to an embodiment of the present invention;

[FIG. 34] FIG. 34 is a diagram of a fifth example, showing set of constellations generated by a system for reducing the impact of PA non-linearities according to an embodiment of the present invention;

[FIG. 35] FIG. 35 is a diagram of a sixth example, showing a set of constellations generated by a system for reducing the impact of PA non-linearities according to an embodiment of the present invention;

[FIG. 36] FIG. 36 is a diagram for explaining a third example of a system according to an embodiment of the present invention;

[FIG. 37] FIG. 37 is ninth example diagram, showing a set of constellations generated by a system according to an embodiment of the present invention;

[FIG. 38] FIG. 38 is a diagram for explaining an example of a system for reducing the impact of phase noise and PA non-linearities according to an embodiment of the present invention;

[FIG. 39] FIG. 39 is a diagram of a first example, showing a set of constellations generated by a system for reducing the impact of phase noise and PA non-linearities according to an embodiment of the present invention;

[FIG. 40] FIG. 40 is a diagram of a second example, showing a set of constellations generated by a system for reducing the impact of phase noise and PA non-linearities according to an embodiment of the present invention;

[FIG. 41] FIG. 41 is a diagram of a third example, showing a set of constellation generated by a system for reducing the impact of phase noise and PA non-linearities according to an embodiment of the present invention;

[FIG. 42] FIG. 42 is a diagram showing an example functional structure of a base station 10 according to an embodiment of the present invention;

[FIG. 43] FIG. 43 is a diagram showing an example functional structure of a terminal 20 according to an embodiment of the present invention;

[FIG. 44] FIG. 44 is a diagram showing an example hardware structure of the base station 10 or the terminal 20 according to an embodiment of the present invention; and

[FIG. 45] FIG. 45 is a diagram showing an example structure of a vehicle 2001 according to an embodiment of the present invention.

DESCRIPTION OF EMBODIMENTS

An embodiment of the present invention will be described below with reference to the accompanying drawings. Note that the embodiment described below is only an example, and the applicability of the present invention is by no means limited to the following embodiment.

Existing techniques may be used as appropriate to operate the wireless communication system according to the following embodiment of the present invention. Examples of such techniques may include, but are not limited to, existing LTE. Also, unless otherwise specified, the term "LTE" as used herein has a broad meaning, covering LTE-Advanced and systems that emerged after LTE-Advanced (for example, NR).

Also, in the following description of an embodiment of the present invention, terms that are used in existing LTE will be used, including "synchronization signal (SS)", "primary SS (PSS)", "secondary SS (SSS)", "physical broadcast channel (PBCH)", "physical random access channel (PRACH)", "physical downlink control channel (PDCCH)", "physical downlink shared channel (PDSCH)", "physical uplink control channel (PUCCH)", "physical uplink shared channel (PUSCH)", and so forth. The use of these terms is for ease of description, and signals, functions, and so forth that are the same or substantially the same as these may be referred to by other names. For example, in NR, the above terms correspond to "NR-SS", "NR-PSS", "NR-SSS", "NR-PBCH", "NR-PRACH", and so forth. The signals used in NR might not be always written with the prefix "NR-".

Also, in the following embodiment of the present invention, the duplex method may be time division duplex (TDD), frequency division duplex (FDD), or any other method (including flexible duplex, for example).

Also, in the following embodiment of the present invention, when a radio parameter or the like is "configured", this may mean that a predetermined value is configured in advance (or "pre-configured"), or mean that a radio parameter or the like that is indicated from a base station 10 or a terminal 20 is configured.

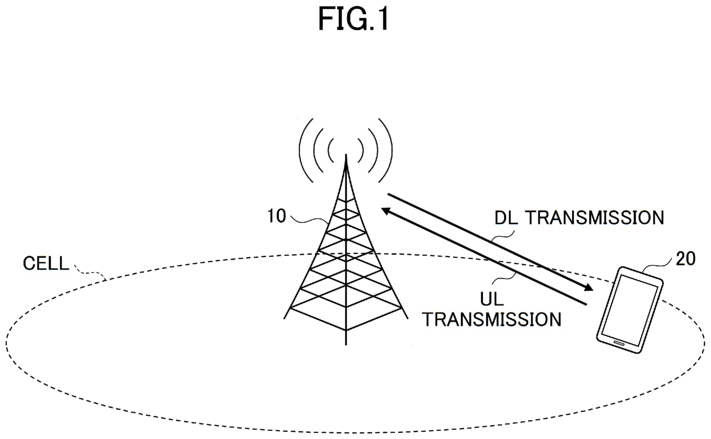

FIG. 1 is a diagram showing an example structure (1) of a wireless communication system according to an embodiment of the present invention. As shown in FIG. 1, according to an embodiment of the present invention, a wireless communication system may include a base station 10 and a terminal 20. Although one base station 10 and one terminal 20 are shown in FIG. 1, this is just one example, and there may be two or more of each.

The base station 10 may be a communication device that provides one or more cells and communicates with the terminal 20 via wireless means. Physical resources for radio signals may be given in the time domain and the frequency domain. The time domain resources may be indicated by the number of orthogonal frequency division multiplexing (OFDM) symbols, and the frequency domain resources may be indicated by the number of subcarriers or resource blocks. The base station 10 may transmit synchronization signals and system information to the terminal 20. The synchronization signals may include, for example, NR-PSS and NR-SSS. The system information may be transmitted, for example, on NR-PBCH, and may be also referred to as "broadcast information". The synchronization signals and system information may be referred to as "SS/PBCH block" (SSB). Referring to FIG. 1, the base station 10 may transmit control signals or data to the terminal 20 via downlink (DL), and receive control signals or data from the terminal 20 via uplink (UL). Both the base station 10 and the terminal 20 can transmit and receive signals by using beamforming. Also, both the base station 10 and the terminal 20 can apply multiple-input multiple-output (MIMO) communication to DL or UL. Also, the base station 10 and the terminal 20 may both communicate via a secondary cell (SCell) and a primary cell (PCell) in carrier aggregation (CA). Furthermore, in the event dual connectivity (DC) is deployed, the terminal 20 may communicate via a primary cell of the base station 10 and a primary secondary cell group cell (PSCell: Primary SCG Cell) of another base station 10.

The terminal 20 may be a communication device with a wireless communication function, such as a smartphone, a mobile phone, a tablet, a wearable terminal, or a machine-to-machine (M2M) communication module. As shown in FIG. 1, the terminal 20 may receive control signals or data from the base station 10 via DL, and transmit control signals or data to the base station 10 via UL, thereby using various communication services provided by the wireless communication system. Also, the terminal 20 may receive various reference signals transmitted from the base station 10 and measure the quality of propagation paths based on the result of receiving these reference signals.

The terminal 20 may communicate with the base station 10 in carrier aggregation, in which multiple cells (multiple component carriers (CCs)) are bundled. In carrier aggregation, one primary cell (PCell) and one or more secondary cells (SCells) may be used. PUCCH-SCell with PUCCH may also be used.

When a transmission is carried out using a higher frequency and a wider bandwidth than in the past, an RF oscillator may produce an increased amount of phase noise (PN) at higher carrier frequencies. Also, although a high power amplifier (HPA) may be used to gain a higher signal to noise ratio (SNR), non-linear distortion may be produced. Below, potential problems with existing modulation methods will be described.

Spiral constellations may be robust to phase noise. However, the performance of spiral constellations may depend on how well the variable parameter "$f_s$", which is rooted in an analytical formula for use under circumstances where the SNR and the variance of PN (hereinafter "PN variance") are fixed, is optimized.

Amplitude phase shift keying (APSK) constellations may have low peak-to-average power ratio (PAPR) characteristics, and their robustness to non-linear PA distortion may be limited. Nevertheless, to address various PA non-linearities in sub-THz systems, the parameters of APSK may have to be optimized further.

Adaptive modulation and coding (AMC) using Quadrature amplitude modulation (QAM) or phase shift keying (PSK) may take into account the signal-to-interference-and-noise ratio (SINR) as the most important factor when making choices among modulation and coding schemes (MCSs) of different modulation orders. However, QAM and PSK may offer only limited choices of constellations, which makes it difficult to enable enduring optimization in the face of poor channel conditions and/or impairments.

Therefore, APSK-based new constellation designs that may be robust to phase noise, as well as AMC that takes PN variance into account, may be introduced. Also, APSK-based new constellation designs that are robust to PA non-linearities, as well as AMC that takes PA saturation power into account, may be introduced.

In addition, to realize finer AMC, new constellations may be generated automatically by neural networks (NNs) that are trained using varying levels or values of PN variance and/or PA saturation power as inputs.

For example, one such new constellation may achieve an SNR gain of 2 dB and a throughput gain of 10% to 20% over an existing spiral constellation. Furthermore, another such new constellation may achieve an SNR gain of 2 dB to 3 dB and a throughput gain of 10% to 20% over an existing digital video broadcasting (DVB)-standard APSK constellation. This will be described later in greater detail.

Existing modulation methods such as QAM may provide constellations in which the minimum Euclidean distance is large. However, due to the impact of PN and PA non-linearities (see non-patent literature 2), the minimum Euclidean distance may no longer be the most important factor.

For example, assuming a spiral constellation (see non-patent literature 3), the spiral's parameter $f_s$ may be optimized for one level or value of PN variance. If the environment is one in which PN variance is likely to occur at multiple levels, the constellation's robustness may decrease.

For example, APSK (see non-patent literature 4) may provide a small number of amplitudes to keep the PAPR low. APSK's robustness to PA non-linearities with acceptable performance loss may be limited. However, existing APSK parameters, such as the number of rings, the number of points on each ring, the initial phase of each ring, and so forth, do not take PA non-linearities and PN into account.

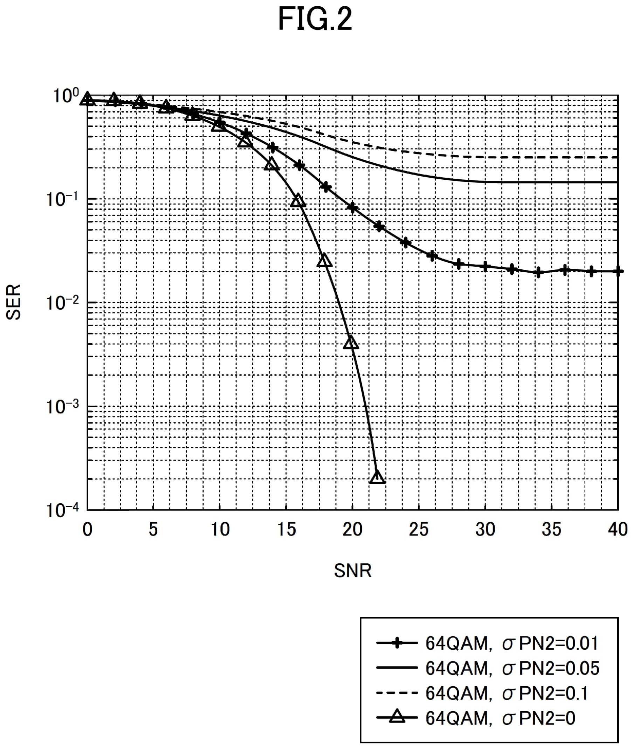

FIG. 2 is a diagram showing how performance may vary depending on the variance of phase noise. FIG. 2 shows the symbol error rate (SER) performance of 64QAM as a function of PN variance. As shown in FIG. 2, 64QAM's SER may increase as the level or value of PN variance increases. When the PN variance shows the value 0.01, the SER may nearly hit the error floor.

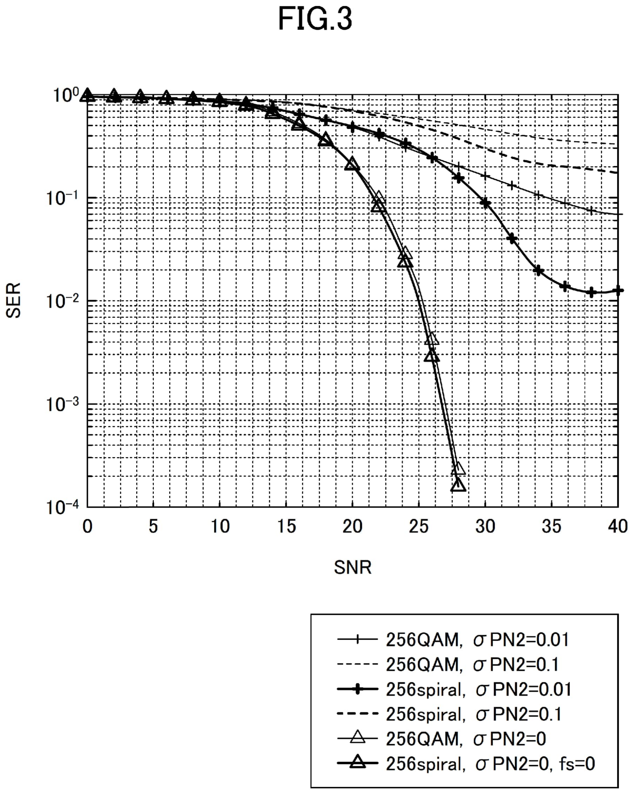

FIG. 3 is a diagram showing how performance may vary depending on the variance of phase noise and the modulation method. FIG. 3 shows the SER performance of 256QAM and 256-point spiral constellations ($f_s$ = 0.00413) as a function of PN variance. Referring to FIG. 3, insofar as the PN variance shows the same level or value, the spiral constellations may have higher SER performance than the QAM constellations. Meanwhile, for example, if a spiral constellation is designed for a PN variance level or value of 0.015, the constellation's SER performance may decrease at different PN variance levels or values.

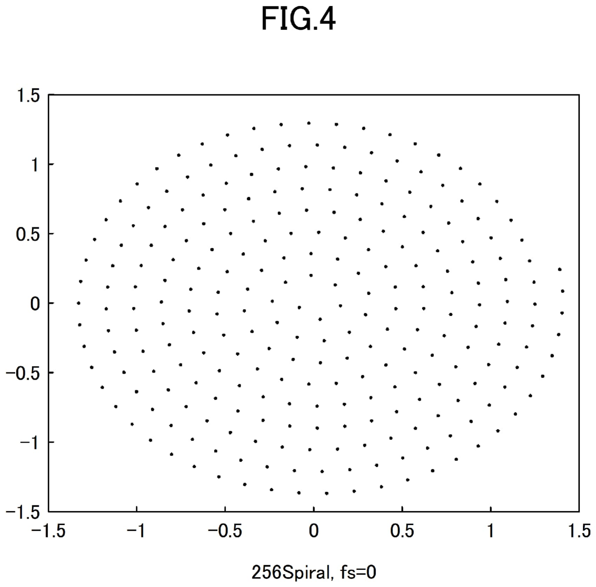

FIG. 4 is a diagram showing a first example of a spiral constellation. FIG. 4 shows a 256-point spiral constellation, where $f_s$ is 0. Hereinafter, whenever a constellation is shown in graph format, the horizontal axis is the in-phase component, and the vertical axis is the quadrature-phase component.

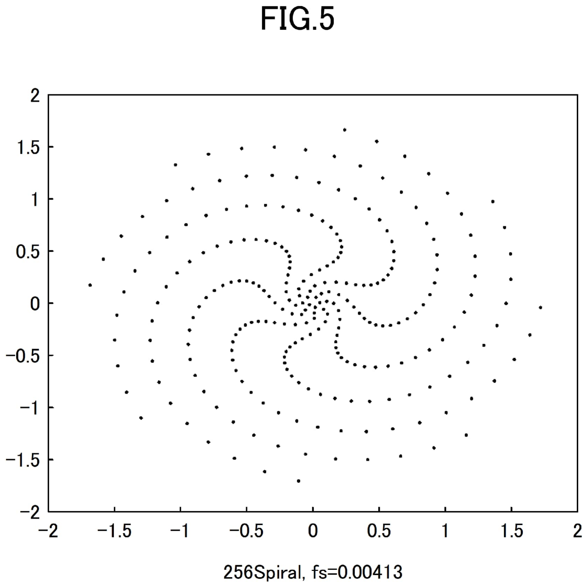

FIG. 5 is a diagram showing a second example of a spiral constellation. FIG. 5 shows a 256-point spiral constellation, where $f_s$ is 0.00413.

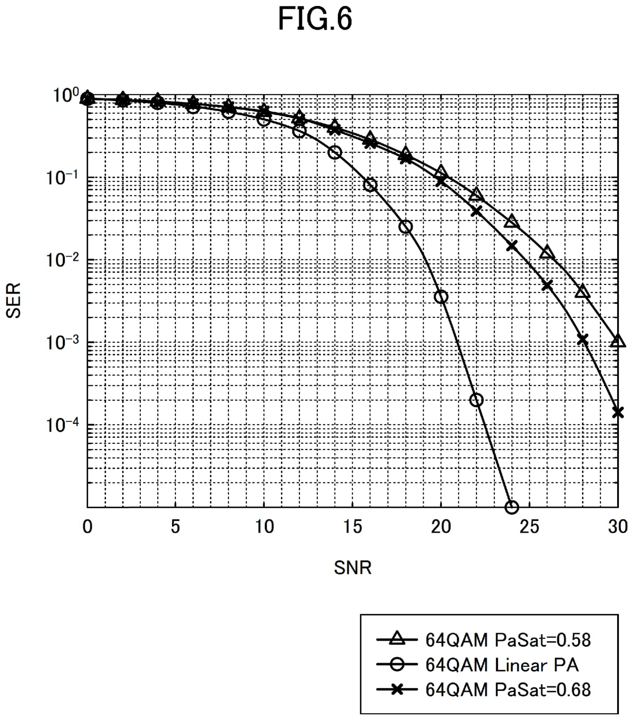

FIG. 6 is a diagram showing how 64QAM's performance may vary depending on PA characteristics. In FIG. 6, PAs including non-linear PAs with different saturation point values (hereinafter also referred to as "PaSat") are used in 64QAM, and their respective SER performance curves are shown. As shown in FIG. 6, the distortion of QAM after going through the non-linear PA may make the SER higher.

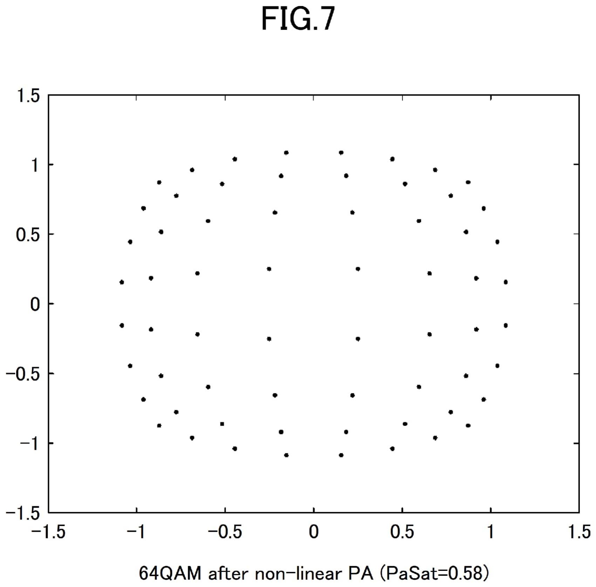

FIG. 7 is a diagram showing how a 64QAM constellation may change depending on PA characteristics. As shown in FIG. 7, a 64QAM constellation may be distorted after going through a non-linear PA with a PaSat of 0.58, which is a factor to improve the SER.

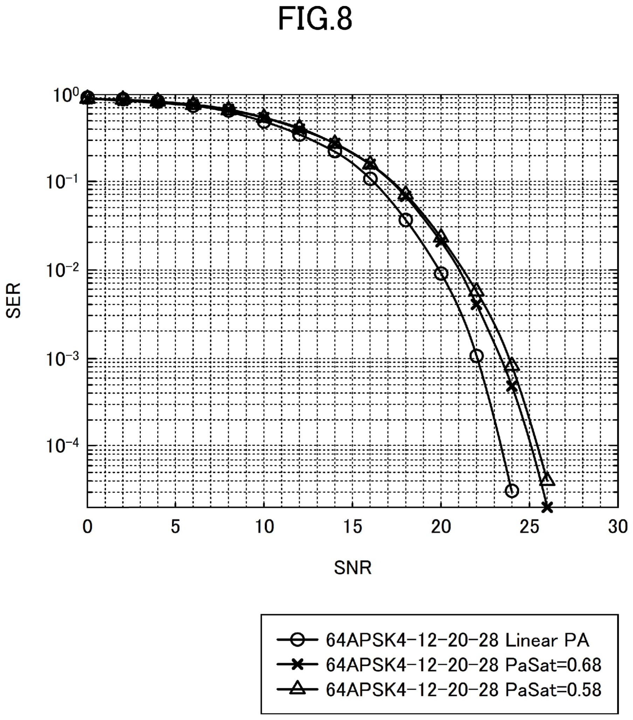

FIG. 8 is a diagram showing how 64APSK's performance may vary depending on PA characteristics. In FIG. 8, PAs including non-linear PAs with different values of PaSat are used in 64APSK, and their respective SER performance curves are shown. As shown in FIG. 8, the distortion of APSK after going through the non-linear PA may make the SER higher.

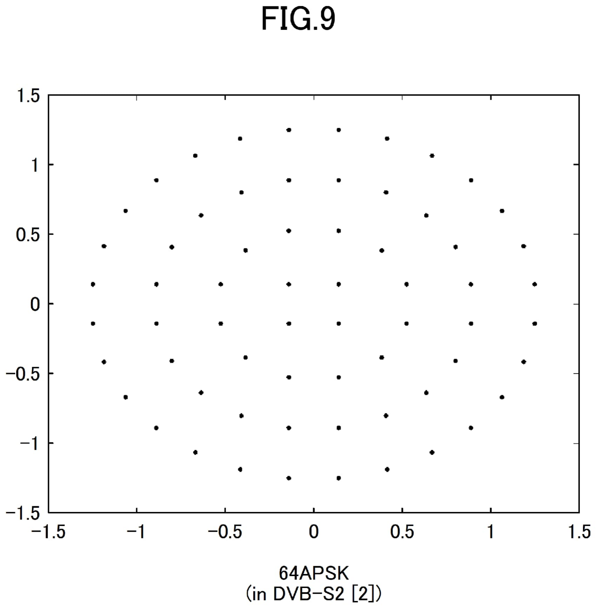

FIG. 9 is a diagram showing a 64APSK constellation. FIG. 9 is a diagram showing a 64APSK constellation according to DVB-S2 (see non-patent literature 4).

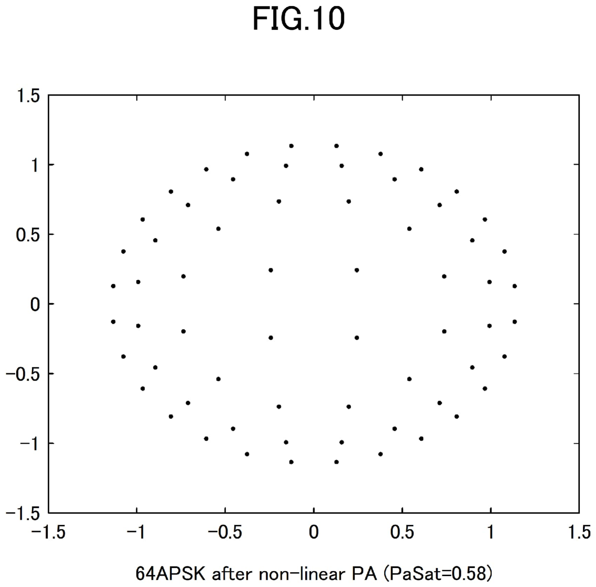

FIG. 10 is a diagram showing how a 64APSK constellation may change depending on PA characteristics. Compared to FIG. 9, in FIG. 10, a 64APSK constellation may be distorted after going through a non-linear PA with a PaSat of 0.58, which is a factor to improve the SER.

Existing AMC may adjust the MCS based on SNR and channel quality information (CQI), and use binary phase shift keying (BPSK), quadrature phase shift keying (QPSK), 16QAM, 64QAM, etc. Table 1 is an example of an existing AMC table (see non-patent literature 12).

[Table 1]

| MCS Index $I_{MCS}$ | Modulation Order $Q_m$ | Target code Rate R x [1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

As shown in Table 1, every MCS index may be associated with a specific modulation order, target code rate, and spectral efficiency (SE).

In artificial intelligence (AI)-based AMC (see non-patent literatures 5 to 11), the SNR, SINR, and CSI can be estimated more accurately using AI technologies, so that every MCS may be adjusted based on these estimates, and a determination may be made as to as to which one of PSK, QAM, etc. is used. Table 2 shows an example of existing AI-based AMC design.

[Table 2]

| AI methods | | Feedback information | Constellations |
|---|---|---|---|
| Supervised learning | CNN | Estimated channel and noise | BPSK, QPSK, 16QAM, 640AM |
| | Artificial neural network(ANN) | Estimated SINR | QAM |
| | | Channel state information (CSI) | BPSK, 40AM, 8QAM, 16QAM |
| Reinforcement learning | Epsilon-greedy algorithm | $E_b/N_0$ (dB) | QPSK, 8PSK, 16QAM |
| | Q-learning algorithm | Channel impulse response (CIR) and SNR | BPSK, QPSK, 8PSK, 16QAM |
| | | Mean SNR over all subcarriers in an OFDM symbol | QPSK, 160AM. 64QAM |
| | Deep Q network (DQN) | SNR and SINR | Gray-coded QPSK, 8PSK, 16PSK, 32PSK |
| | | | BPSK, QPSK, 160AM, 640AM |

As shown in Table 2, supervised learning using a convolutional neural network (CNN) (see non-patent literature 5) may use estimated channels and noise as feedback information, and use, for example, BPSK, QPSK, 16QAM, and 64QAM constellations.

Furthermore, according to Table 2, supervised learning using an artificial neural network (ANN) (see non-patent literatures 6 and 7) may use QAM constellations when the SINR is estimated and used as feedback information, and use BPSK, 4QAM, 8QAM, and 16QAM constellations when CSI is used as feedback information.

Referring still to Table 2, reinforcement learning using an Epsilon-greedy algorithm (see non-patent literature 8) may use QPSK, 8PSK, and 16QAM constellations when $E_b/N_0$ [dB] is used as feedback information.

Furthermore, according to Table 2, reinforcement learning using a Q-learning algorithm (see non-patent literatures 9 and 10) may use BPSK, QPSK, 8PSK, and 16QAM constellations when channel impulse response (CIR) is used as feedback information, and use QPSK, 16QAM, and 64QAM constellations when the mean SNR over all subcarriers of an OFDM symbol is used as feedback information.

In addition, according to Table 2, reinforcement learning using a deep Q network may use the SNR and SINR as feedback information, and use Gray-coded QPSK, 8PSK, 16PSK, and 32PSK constellations, or use BPSK, QPSK, 16QAM, and 64QAM constellations.

Existing AI-based AMC methods such as the ones described above do not take into account the impact that non-ideal factors such as phase noise and power amplifier (PA) saturation points and PA non-linearities have on transmission performance. Also, existing AMC methods take phase noise into account only when low-order PSK modulation and low spectral efficiency apply.

As described above, in constellations used in existing modulation methods such as QAM, APSK, etc., RF oscillator-induced phase noise and PA non-linearities may have a significant impact on the transmission system. Existing constellation designs may be subject to limitations such as complexity of design. Furthermore, existing constellation designs cannot adapt to channel feedback information that keeps changing constantly.

In addition, existing AI-based AMC does not take into account non-linear factors that have a large impact on transmission performance such as phase noise. Also, existing AMC may be directed to reducing the impact of phase noise and applicable only to low-order PSK with low spectral efficiency.

In view of the foregoing, new modulation methods and new AMC methods may be designed, as will be described below. For example, new constellations that take non-linear factors into account may be designed. A continuous set of adaptive modulation methods may be designed based on parameters related to PN and/or PA non-linearities. Furthermore, modulation with high spectral efficiency may be used.

Method 1:

A modulation method that takes PN into account may be used. APSK-based constellations may be designed to reduce the impact of phase noise, and a continuous set of constellations for adaptive modulation may be generated by NNs to reduce the impact of phase noise.

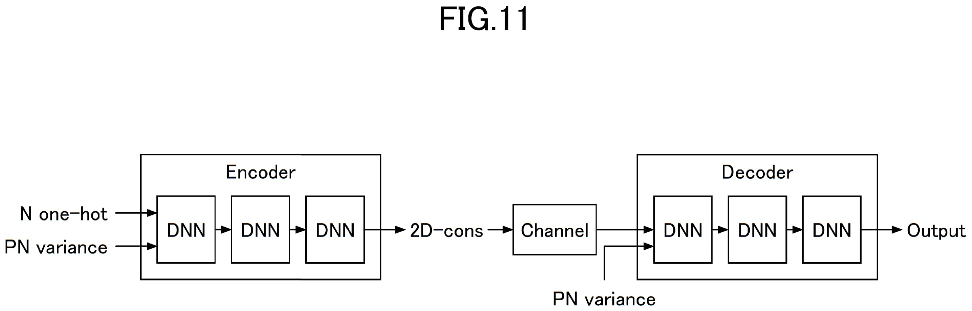

FIG. 11 is a diagram for explaining a first example of a system according to an embodiment of the present invention. FIG. 11 shows an example of an end-to-end (hereinafter also referred to as "E2E") AI method for optimization. As shown in FIG. 11, three deep neural network layers (shown as three boxes labeled "DNN" in the figure) for non-linear mapping may be provided at the transmitting end, and three DNN layers for de-mapping may be provided at the receiving end. In FIG. 11, for example, PN variance and N one-hot vectors may be input to an encoder, and a 2D constellation may be generated and input to a decoder with PN variance, via a channel, thereupon obtaining an output.

To realize finer AMC in the system of FIG. 11, the NNs may automatically generate constellations envisaging varying levels or values of PN variance.

In offline training, the levels or values of PN variance are input and learned. The NNs may be trained on several limited levels or values of PN variance. The NNs may be regularized using many PN variance levels or values as inputs, so that a continuous set of constellations that can reduce the impact of phase noise can be generated.

In online deployment, an AI network may be deployed both at the transmitter and at the receiver. When a given modulation order and a given level or value of PN variance are input, a constellation that withstands that level or value of PN variance may be generated automatically.

A set of trained NNs can generate constellations corresponding to a specific modulation order to reduce the impact of constantly-changing PN variance.

For example, when a constellation is generated by trained AI, the constellation points may be regularized to provide a 64APSK constellation that is more robust to PN. By thus obtaining an APSK constellation that can reduce the impact of PN variance and generating a constellation that is regularized more, the number of rings, the number of points on each ring, the radius or relative radius of each ring, the initial phase of each ring, etc. can be determined based on optimized results generated by trained AI.

How a continuous set of constellations and adaptive modulation may be designed to reduce the impact of phase noise will be described.

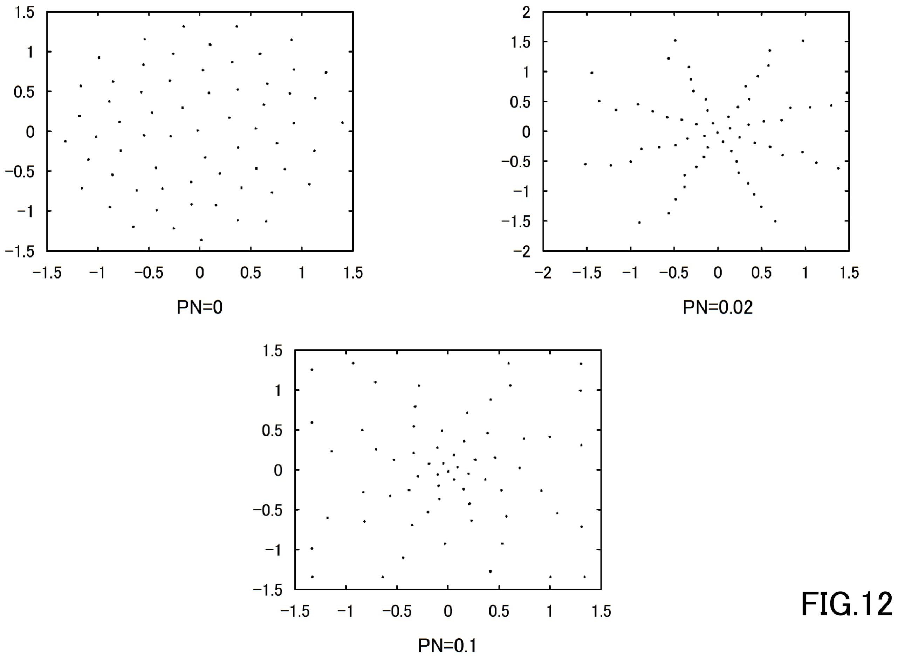

FIG. 12 shows examples of constellations generated by a system according to an embodiment of the present invention. In these example constellations, the PN variance shows the values 0, 0.02, and 0.1.

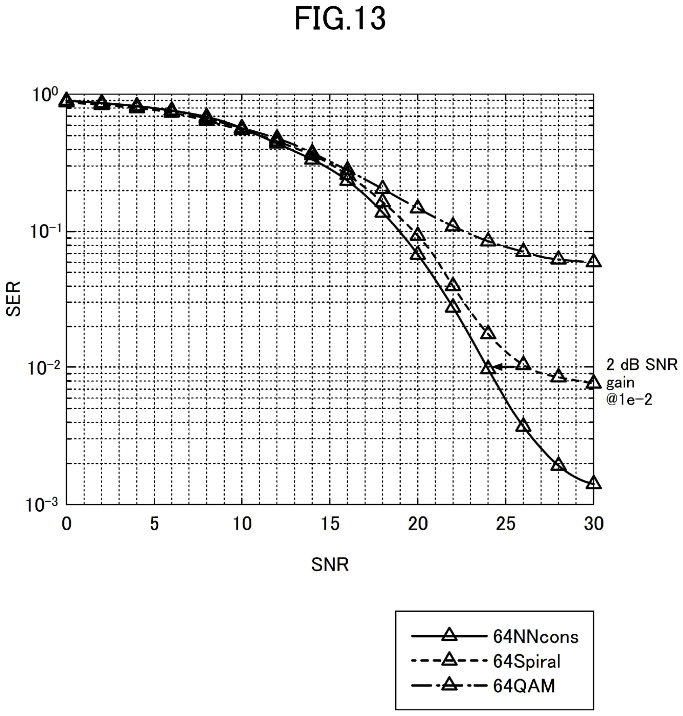

FIG. 13 is a first example diagram showing performance curves associated with respective constellations generated by a system according to an embodiment of the present invention. The constellation generated by the NNs trained on PN variance may be more robust to phase noise than QAM is. For example, referring to FIG. 13, when the PN variance shows the value 0.02, compared to the spiral constellation, the constellation generated by the trained NNs has an SNR gain of approximately 2 dB when the SER is $10^{-2}$.

Note that, in FIG. 13, QAM may have lower performance than the spiral constellation. The spiral constellation's parameter $f_s$ is 0.00588.

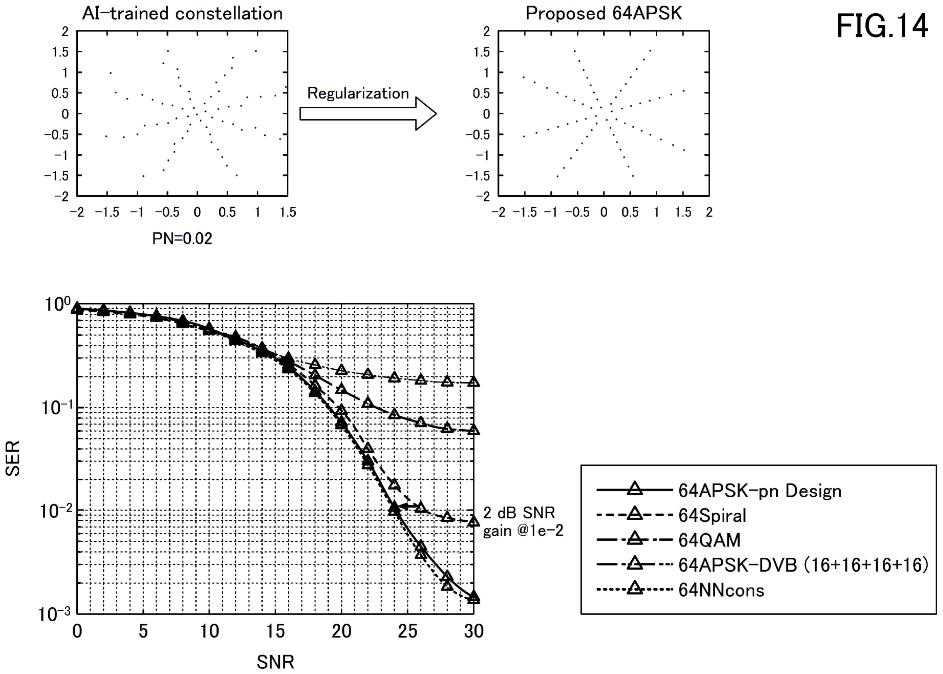

FIG. 14 is a second example showing performance curves associated with respective constellations generated by a system according to an embodiment of the present invention. FIG. 14 shows an example constellation that is designed based on 64APSK and regularized to reduce the impact of PN.

The principle of regularization may be as follows. The number of rings, the number of points on each ring, the radius or relative radius of each ring, the initial phase of each ring, etc. may be determined with reference to AI-generated optimization results, to provide an APSK constellation that is robust to PN, and generate a constellation that is more regularized. In the proposed 64APSK, the number of rings may be 16, for example, and each ring may comprise 4 equally spaced points. Each ring's radius and initial phase may be determined by the constellation generated by trained AI.

In FIG. 14, the regularized constellation is more robust to phase noise than QAM is. Referring to FIG. 14, when the PN variance shows the value 0.02, compared to the spiral constellation, the regularized constellation has an SNR gain of approximately 2 dB when the SER is $10^{-2}$.

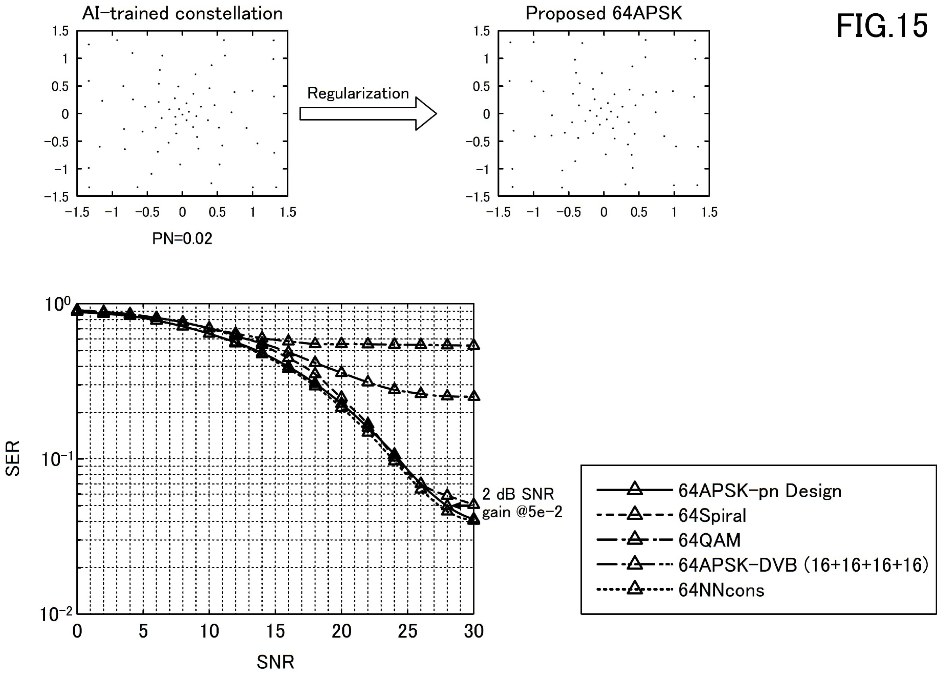

FIG. 15 is a third example showing performance curves associated with respective constellations generated by a system according to an embodiment of the present invention. FIG. 15 shows an example constellation that is designed based on 64APSK and regularized to reduce the impact of PN.

In FIG. 15, the regularized constellation is more robust to phase noise than QAM is. Referring to FIG. 15, when the PN variance shows the value 0.1, compared to the spiral constellation, the regularized constellation has an SNR gain of approximately 2 dB when the SER is $5\times10^{-2}$.

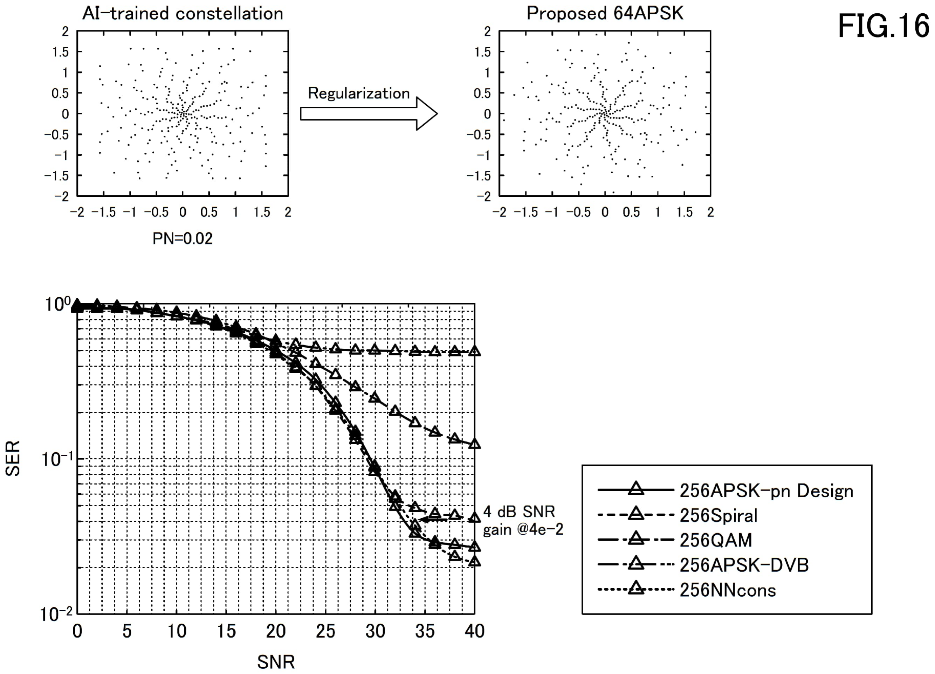

FIG. 16 is a fourth example showing performance curves associated with respective constellations generated by a system according to an embodiment of the present invention. FIG. 16 shows an example constellation that is designed based on 256APSK and regularized to reduce the impact of PN. In the proposed 256APSK, the number of rings may be 32, for example, and each ring may comprise 8 equally spaced points. Each ring's radius and initial phase may be determined by the constellation generated by trained AI.

In FIG. 16, the regularized constellation is more robust to phase noise than QAM is. Referring to FIG. 16, when the PN variance shows the value 0.1, compared to the spiral constellation, the regularized constellation has an SNR gain of approximately 4 dB when the SER is $4\times10^{-2}$.

Method 2:

A modulation method that takes PA non-linearities into account may be used. For example, an APSK-based constellation may be designed to reduce the impact of PA non-linearities, and a continuous set of constellations for adaptive modulation may be generated by NNs to reduce the impact of PA non-linearities.

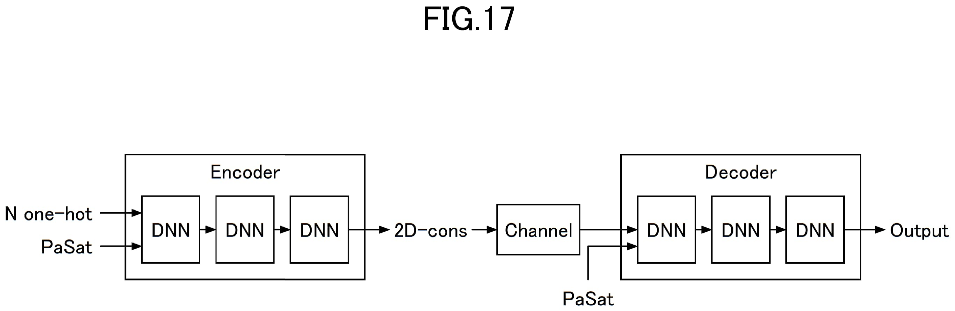

FIG. 17 is a diagram for explaining a second example of a system according to an embodiment of the present invention. FIG. 17 shows an example of an E2E AI method for optimization. As shown in FIG. 17, three DNN layers for non-linear mapping may be provided at the transmitting end, and three DNN layers for de-mapping may be provided at the receiving end. In FIG. 17, for example, PaSat and N one-hot vectors may be input to an encoder, and a 2D constellation may be generated and input to a decoder with PaSat, via a channel, thereupon obtaining an output.

"PaSat" used herein is a parameter that indicates the PA's saturation point, as well as the saturated output voltage in the PA Rapp model (see non-patent literature 15). PaSat may be defined as the position where the slope of the PA's input/output characteristic curve drops to 0. When the amplitude of a signal input to the PA is greater than a threshold PaSat, the output signal may be produced with non-linear distortion.

Distortion that is produced when the PA operates in non-linear power regions may be taken into account. To realize finer AMC in the system of FIG. 17, the NNs may automatically generate constellations envisaging varying values of the PA saturation point parameter PaSat.

In offline training, the NNs may be trained by using the values of PaSat as inputs. The NNs may be trained on several limited values of PaSat. The NNs may be regularized using many PaSat values as inputs, so that a continuous set of constellations that can reduce the impact of PA non-linearities can be generated.

In online deployment, an AI network may be deployed both at the transmitter and at the receiver. When a given modulation order and a given PaSat value are input, a constellation that withstands the PA's non-linearities may be generated automatically.

A set of trained NNs can generate constellations corresponding to a specific modulation order to reduce the impact of constantly-changing PA non-linearities.

For example, when a constellation is generated by trained AI, the constellation points may be regularized to provide a 64APSK constellation that is more robust to PA non-linearities. By thus obtaining an APSK constellation that can reduce the impact of PA non-linearities and generating a constellation that is regularized more, the number of rings, the number of points on each ring, the radius or relative radius of each ring, the initial phase of each ring, etc. can be determined based on optimized results generated by trained AI. Each ring's radius may be adjusted so as to provide APSK constellations that are applicable to different PA saturation points.

How a continuous set of constellations and adaptive modulation may be designed to reduce the impact of PA non-linearities will be described.

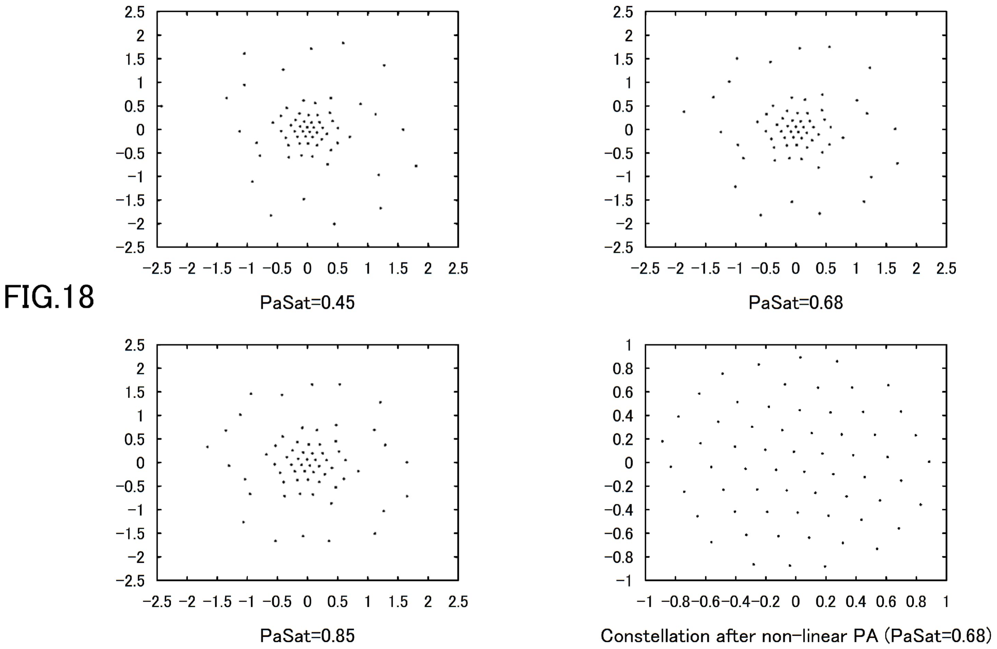

FIG. 18 shows a fifth example showing performance curves associated with respective constellations generated by a system according to an embodiment of the present invention. In these example constellations, PaSat has the values 0.45, 0.68, and 0.85. In addition, an example is shown that shows what the constellation for the PaSat value 0.68 looks like after going through the non-linear PA.

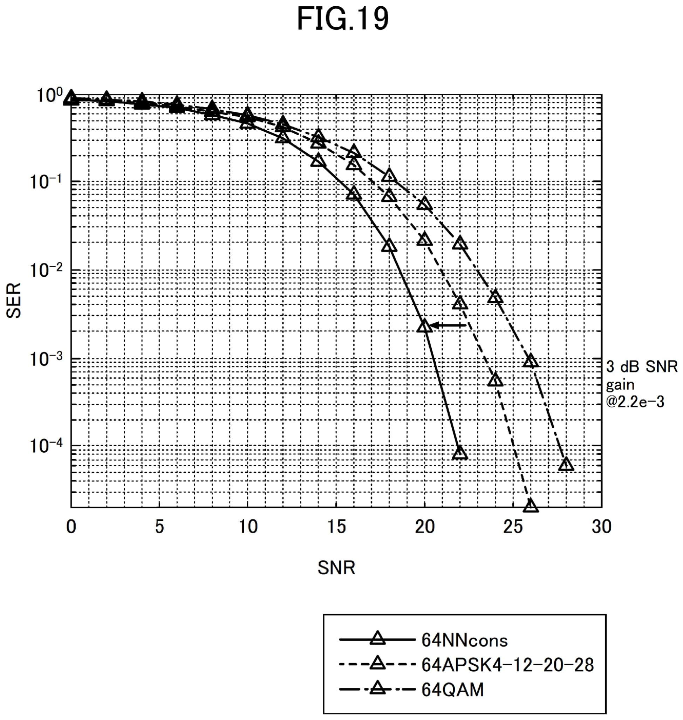

FIG. 19 shows a sixth example showing performance curves associated with respective constellations generated by a system according to an embodiment of the present invention. The constellation generated by the NNs trained on PaSat are more robust to PA non-linearities than QAM or APSK is. For example, referring to FIG. 19, when PaSat shows the value 0.68, compared to the 64APSK constellation, the constellation generated by the trained NNs has an SNR gain of approximately 3 dB when the SER is $2.2 \times 10^{-3}$. Note that, as shown in FIG. 19, QAM may have lower performance than the 64APSK constellation.

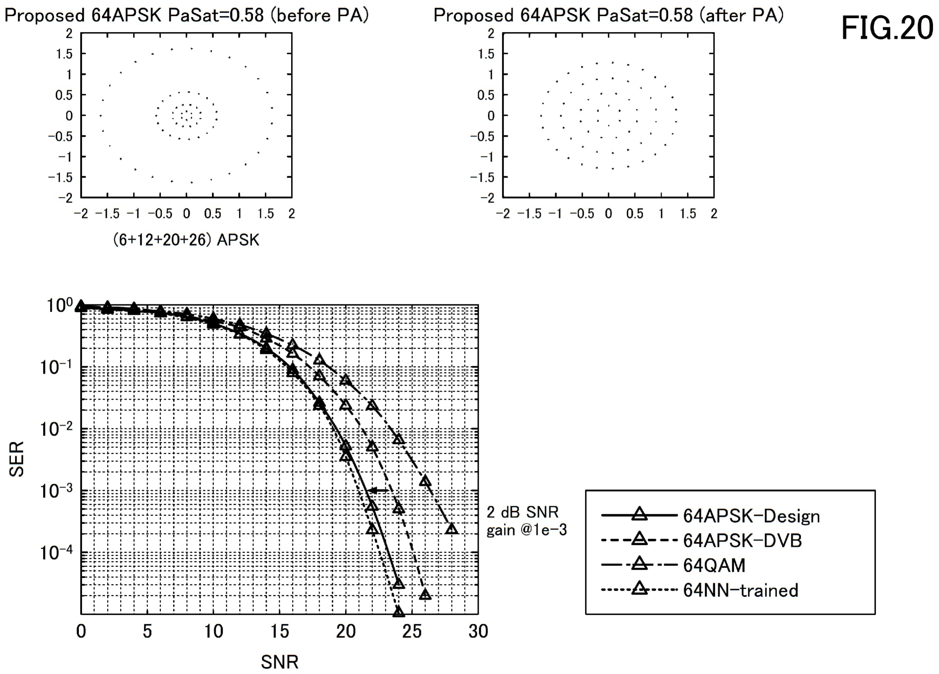

FIG. 20 is a seventh example showing performance curves associated with respective constellations generated by a system according to an embodiment of the present invention. FIG. 20 shows a constellation designed based on the proposed 64APSK, in which PaSat is 0.58 before going through the PA, and shows the same constellation that is transformed after going through the PA. Note that the 64-point APSK constellation may comprise 6, 12, 20, and 26 constellation points.

The proposed APSK constellation is more robust to PA non-linearities than QAM or DVB-standard APSK is. For example, referring to FIG. 20, when PaSat has the value 0.58, compared to the DVB-standard 64APSK constellation, the proposed 64APSK constellation has an SNR gain of approximately 2 dB when the SER is $10^{-3}$. Note that, as shown in FIG. 20, QAM may have lower performance than the DVB-standard 64APSK constellation.

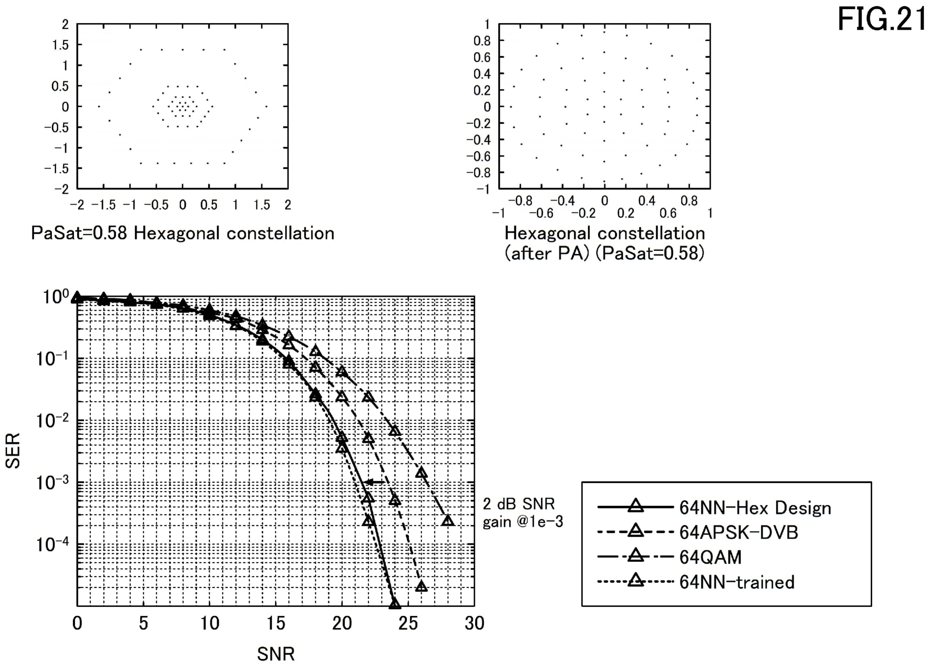

FIG. 21 is an eighth example showing performance curves associated with respective constellations generated by a system according to an embodiment of the present invention. FIG. 20 shows a proposed hexagonal constellation, where PaSat shows the value 0.58 before going through the PA, and shows the same hexagonal constellation transformed after going through the PA.

The proposed hexagonal constellation is more robust to PA non-linearities than QAM or DVB-standard APSK is. For example, referring to FIG. 21, when PaSat has the value 0.58, compared to the DVB-standard 64APSK constellation, the proposed hexagonal constellation has an SNR gain of approximately 2 dB when the SER is $10^{-3}$. Note that, as shown in FIG. 21, QAM may have lower performance than the DVB-standard 64APSK constellation.

A hexagonal constellation may comprise multiple concentric hexagonal rings, including one outermost ring and multiple more compact inner rings. This constellation may be robust to PA non-linearities and exhibit good performance. The radius or relative radius of each ring may be adjusted so as to provide constellations that are applicable to different PA saturation points.

Constellations and adaptive modulation due to the impact of non-ideal factors may be designed as follows.

Operation 1: Design constellations and adaptive modulation to reduce the impact of PN.
Operation 1-1: Design irregular constellations to reduce the impact of PN.
Operation 1-1-1: Define NN parameters.
Operation 1-1-2: Design bit-to-symbol (hereinafter also referred to as "B2S") mapping tables for irregular constellations.
Operation 1-2: Design regularized APSK constellations to reduce the impact of PN.
Operation 1-2-1: Define APSK parameters.
Operation 1-2-2: Design B2S mapping tables for APSK.
Operation 1-3: Design MCS tables and related signaling for adaptive modulation to reduce the impact of PN.
Operation 1-3-1: Design MCS tables including PN-robust constellations.
Operation 1-3-2: Provide related signaling that may be suitable for use with multiple MCS tables including PN-robust constellations.
Operation 2: Design constellations and adaptive modulation to reduce the impact of PA non-linearities.
Operation 2-1: Design irregular constellations to reduce the impact of PA non-linearities.
Operation 2-1-1: Define NN parameters.
Operation 2-1-2: Design B2S mapping tables for irregular constellations.
Operation 2-2: Design regularized constellations to reduce the impact of PA non-linearities.
Operation 2-2-1: Design hexagonal constellations.
Operation 2-2-2: Design APSK constellations.
Operation 2-3: Design MCS tables and related signaling for adaptive modulation to reduce the impact of PA non-linearities.
Operation 3: Design constellations and adaptive modulation to reduce the impact of PN and PA non-linearities.
Operation 3-1: Design irregular constellations to reduce the impact of PN and PA non-linearities.
Operation 3-1-1: Design NN parameters.
Operation 3-1-2: Design B2S mapping tables for irregular constellations.
Operation 3-2: Design regularized constellations to reduce the impact of PN and PA non-linearities.
Operation 3-2-1: Define APSK parameters.
Operation 3-2-2: Design B2S mapping tables for APSK.
Operation 3-3: Design MCS tables and related signaling for adaptive modulation to reduce the impact of PN and PA non-linearities.
Operation 4: Define UE capabilities.

"Operation 1: Design constellations and adaptive modulation to reduce the impact of PN" will be explained below.

"Operation 1-1: Design irregular constellations to reduce the impact of PN" will be described first.

For example, an irregular constellation may be generated by an E2E-trained NN and used in a system for reducing the impact of PN, as in the system of FIG. 11, where adaptive modulation is carried out using PN variance as an input. The PN variance may be defined as one input parameter for the NN.

The basic principle may be as follows. The NN may be trained offline under limited channel conditions. These channel conditions may include, for example, a certain SNR range, several levels or values of PN variance, etc. Furthermore, the NN may be regularized based on additional channel conditions (such as continuous or finer levels or values of PN variance) to provide a continuous set of modulation constellations that can reduce the impact of PN.

For example, the offline training may be carried out as follows. A modulation order, $\log_2 N$, may be set, and an NN architecture may be built. Under the circumstances in which there are L levels or values of PN variance, namely $\{\sigma^2_{PN,1}, \sigma^2_{PN,2}, \ldots$, and $\sigma^2_{PN,L}\}$, the NN may be trained to learn constellations.

E2E learning may be carried out using PN variance of $\sigma^2_{PN,l}$ and N one-hot encoder vectors as inputs. $e_j$ is a j-th one-hot encoder vector, where j = 1, ... , and N, which has a length of N, and in which a j-th value is 1 and the rest of the values are 0. For example, $e_j$ may be associated with a j-th constellation point.

The L levels or values of PN variance may be used in training so that the NN can have a generalization ability to provide different constellations depending on PN. Note that PN may be taken into account both at the transmitter and at the receiver.

The above operation can lead to improvement in performance in an environment in which PN occurs at multiple levels or values.

For example, under circumstances in which PN variance has the values 0, 0.02, 0.06, and 0.1, the system may allow the NN to learn a constellation, generalize the constellation, and provide constellations that withstand the PN variance of 0, 0.01, and 0.1. Note that, when the magnitude of PN variance increases, inner constellation points may be plotted more densely, and outer constellation points may be plotted more sparsely. In the constellation diagram, a circle may change to several branches, which then gradually change to several wings.

"Operation 1-1-1: Define NN parameters" will be explained below.

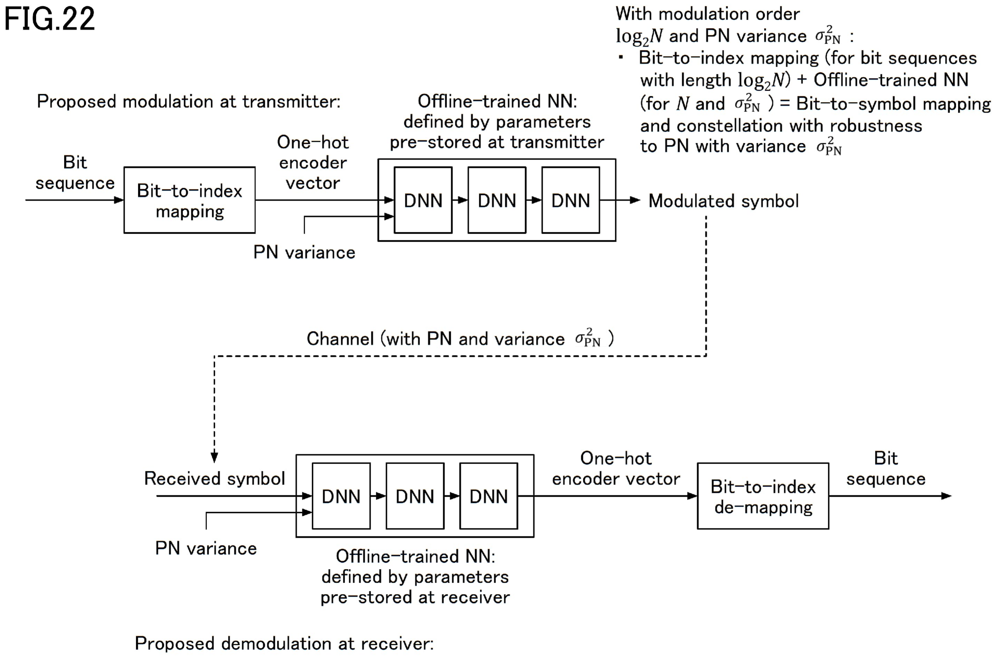

FIG. 22 is a diagram for explaining an example of a system for reducing the impact of phase noise according to an embodiment of the present invention. The parameters of offline-trained NNs may include weight, bias, and activation function. These parameters may be defined and used at the transmitter and at the receiver. The NNs may be stored in advance, and constellation points may be generated according to the modulation order and PN variance. In the example of FIG. 22, bit-to-index mapping may be performed before the NN module where bit sequences (to be modulated) are transformed into the NN's one-hot encoder vectors.

This NN module may be trained offline, and referred to as "module 1". The module 1 may generate constellation points that are suitable for a given modulation order and a given level or value of PN variance.

A module 2 may be where the bit-to-index mapping module takes place. The module 2 may have a function to map bits to symbols for online deployment. The input parameters during the offline training phase may include N one-hot encoder vectors and the channels' PN variance. In an online deployment phase of the communication system, bit sequences may be mapped to corresponding constellation points that were missed in the offline training phase. Then, to generate a corresponding one-hot encoder vector (to be input to the NN), bit-to-index mapping may be performed before the pre-trained NN.

By thus combining bit-to-index mapping and an NN together, bit sequences may be modulated into constellation points that are robust to PN.

By virtue of offline training using coarse PN variance levels or values and the generalizable design of the NN, constellations that are robust to PN variance can be generated on a dynamic basis, based on varying PN variance in actual systems.

The system of FIG. 22, supporting the modulation order $\log_2 N$ and PN variance $\sigma^2_{PN}$, may enable bit-to-index mapping and generate constellations that are robust to PN variance of $\sigma^2_{PN}$ by using a bit-to-symbol mapping module that supports a length of $\log_2 N$ and by using an offline-trained NN (trained for N and $\sigma^2_{PN}$).

As shown in FIG. 22, at the transmitting end, bit sequences may be input to the bit-to-index mapping module, which then may output one-hot encoder vectors. The one-hot encoder vectors may be input to the offline-trained NN, which then may output modulated symbols. The modulated symbols may be transmitted on a channel from the transmitting end, received at the receiving end, and input to the offline-trained NN provided at the receiving end, and one-hot encoder vectors may be output. The one-hot encoder vectors may be input to a bit-to-index de-mapping module, which then may output bit sequences.

The parameters for the offline-trained NNs may include at least: the number of layers in the NNs; each layer's weight; each layer's bias; and each layer's activation function.

Table 3 is an example table of offline-trained NN parameters for all levels or values of PN variance.

[Table 3]

| Modulation order | Weight of each layer | | | Bias of each layer | | | Activation function of each layer | | |
|---|---|---|---|---|---|---|---|---|---|
| | 1st layer | 2nd layer | ... | 1st layer | 2nd layer | ... | 1st layer | 2nd layer | ... |
| $N_1$ | | | | | | | | | |
| $N_2$ | | | | | | | | | |
| $N_3$ | | | | | | | | | |
| ... | | | | | | | | | |

Each NN may mainly have three basic components, namely, weight, bias, and activation function. "Weight" may refer to the intensity of connection between neurons, expressed by weight. When weight is expressed using numerical values, it may indicate the likelihood or proportion of each input element. "Bias" may refer to the setting for grouping samples into correct classes. Bias may be an important parameter in a model and equivalent to adding a constant. "Activation function" may act out non-linear mapping, so that the values output from the neurons may be generally limited to a certain range, such as -1 to 1, 0 to 1, etc.

The values of weights and biases may be results obtained from the trained networks and may be saved, for example, in text file format.

Common examples of the activation functions may include, for example, the sigmoid function, the hyperbolic tangent (tanh) function, the rectified linear unit (ReLU) function, etc.

A normalization layer may be mandatory in the encoder in order to normalize the power of constellations generated by the system.

Assuming a given modulation order, the NN input parameters may include at least one of (1) and (2) below.

(1) One-hot encoder vector ej, where j = 1, ... , and N, which is a vector having a length of N, and in which the j-th value is 1 and the rest of the values are 0.

(2) PN variance.

Table 4 shows examples of NN parameters for PN-robust 16-point and 64-point constellations.

[Table 4]

| **Modulation order** | **Weight of each layer** | | | **Bias of each layer** | | | **Activation function of each layer** | | |
|---|---|---|---|---|---|---|---|---|---|
| | **1st layer** | **2nd layer** | **3rd layer** | **1st layer** | **2nd layer** | **3rd layer** | **1st layer** | **2nd layer** | **3rd layer** |
| **4** | **(16+1) × 8 matrix** | **8×8 matrix** | **8×2 matrix** | **[8] 1D array** | **[8] 1D array** | **[2] 1D array** | **sigmoid** | **sigmoid** | **tanh** |
| **6** | **(64+1) × 64 matrix** | **64×32 matrix** | **32×2 matrix** | **[64] 1D array** | **[32] 1D array** | **[2] 1D array** | **sigmoid** | **sigmoid** | **tanh** |

In the example shown in Table 4, the weight, the bias, and the activation function may all have three layers. To be more specific, according to Table 4, the parameters may be provided such that each layer has weights that can be expressed in matrix form, biases that can be expressed as a 1D array, and an activation function that can be either the sigmoid or tanh function.

Bit-to-index mapping will be explained below. A bit sequence having a length of $\log_2 N$, when input to the NN, may be transformed into a one-hot encoder vector having a length of N. In doing so, following option 1 to option 4 may be available.

Option 1:

A binary bit sequence may be transformed into a constellation point's decimal index in the NN. This option may be suitable for constellations generated online, for any PN variance. For example, there may be no need to take into account the PN variance during offline training. Table 5 is an example of a 16-point constellation designed according to option 1.

[Table 5]

| Bits | Index (Binary to decimal) | Bits | Index |
|---|---|---|---|
| 0000 | 0 | 1000 | 8 |
| 0001 | 1 | 1001 | 9 |
| 0010 | 2 | 1010 | 10 |
| 0011 | 3 | 1011 | 11 |
| 0100 | 4 | 1100 | 12 |
| 0101 | 5 | 1101 | 13 |
| 0110 | 6 | 1110 | 14 |
| 0111 | 7 | 1111 | 15 |

Option 2:

Bit-to-index mapping to provide constellation points for the NN may be carried out in a way that satisfies Gray mapping rules. Gray mapping may be expected to improve performance. Table 6 shows an example of a 64-point constellation designed according to option 2.

[Table 6]

| Bits | Index (For gray mapping) | Bits | Index | Bits | Index | Bits | Index |
|---|---|---|---|---|---|---|---|
| 000000 | 43 | 011000 | 3 | 110000 | 7 | 101000 | 22 |
| 000001 | 8 | 011001 | 6 | 110001 | 52 | 101001 | 31 |
| 000011 | 12 | 011011 | 54 | 110011 | 33 | 101011 | 15 |
| 000010 | 42 | 011010 | 57 | 110010 | 25 | 101010 | 24 |
| 000110 | 38 | 011110 | 46 | 110110 | 56 | 101110 | 4 |
| 000111 | 10 | 011111 | 29 | 110111 | 35 | 101111 | 26 |
| 000101 | 39 | 011101 | 47 | 110101 | 62 | 101101 | 14 |
| 000100 | 23 | 011100 | 60 | 110100 | 11 | 101100 | 45 |
| 001100 | 0 | 010100 | 1 | 111100 | 48 | 100100 | 19 |
| 001101 | 17 | 010101 | 41 | 111101 | 32 | 100101 | 50 |
| 001111 | 53 | 010111 | 59 | 111111 | 34 | 100111 | 2 |
| 001110 | 28 | 010110 | 37 | 111110 | 18 | 100110 | 44 |
| 001010 | 58 | 010010 | 55 | 111010 | 36 | 100010 | 30 |
| 001011 | 16 | 010011 | 27 | 111011 | 21 | 100011 | 40 |
| 001001 | 49 | 010001 | 13 | 111001 | 61 | 100001 | 51 |
| 001000 | 63 | 010000 | 5 | 111000 | 9 | 100000 | 20 |

Option 3:

Optimal mapping may be carried out such that the error rate is minimized or the throughput/SE is maximized. This can lead to improved decoding performance.

Option 4:

The bit-to-index mapping module may be trained, using constellation points, separately or jointly by the NN or another AI network.

Based on an index j transformed and generated thus, a one-hot encoder vector $e_j$ may be generated and input to the NN.

"Operation 1-1-2: Design bit-to-symbol mapping tables for irregular constellations" will be explained below.

A bit-to-symbol mapping table may be designed to define a PN-robust irregular constellation. As done heretofore, the bit-to-symbol mapping table may be defined such that bit sequences are modulated into constellation points. By this means, constellation points and bit-to-symbol mapping can be jointly defined in one table. Following option 1 or option 2 may be available.

Option 1:

A bit-to-symbol mapping table may be generated based on Gray mapping branches. Only one bit may be different between the respective bits of the constellation points of any two neighboring branches.

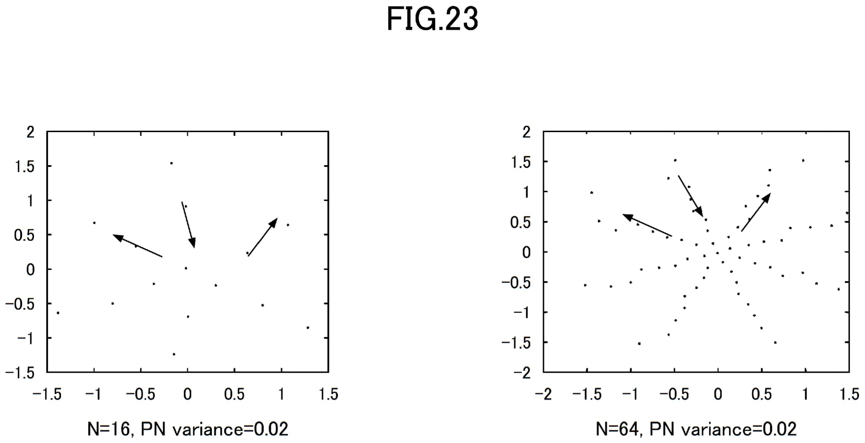

FIG. 23 shows a first example of a set of constellations generated by the system for reducing the impact of phase noise according to an embodiment of the present invention. FIG. 23 shows examples constellations designed according to option 1, including an example of a 16-point constellation trained for PN variance of 0.02 and an example of a 64-point constellation trained for PN variance of 0.02. In FIG. 23, bit-to-symbol mapping is carried out in the order shown with the arrows. Table 7 shows an example of a bit-to-symbol mapping table for the 16-point constellation trained for PN variance of 0.02. Note that, in the symbols in the table, the real part is the in-phase component and the imaginary part is the quadrature component, and the same rule applies throughout this specification.

[Table 7]

| Index | Bits(*) | Symbol | Index | Bits* | Symbol |
|---|---|---|---|---|---|
| 1 | 0000 | -0.0169+0.0162i | 9 | 1100 | 1.0637+0.6425i |
| 2 | 0001 | -0.5523+0.3316i | 10 | 1101 | 1.27626-0.8455i |
| 3 | 0011 | -0.9935+0.6728i | 11 | 1111 | 0.79483-0.51774i |
| 4 | 0010 | -0.1719+1.5368i | 12 | 1110 | 0.0037-0.6859i |
| 5 | 0110 | -0.0193+0.9103i | 13 | 1010 | -0.1452-1.2292i |
| 6 | 0111 | 0.04513+0.1091i | 14 | 1011 | -1.3792-0.6296i |
| 7 | 0101 | 0.2969-0.2329i | 15 | 1001 | -0.7992-0.4972i |
| 8 | 0100 | 0.6368+0.2367i | 16 | 1000 | -0.3608-0.2111i |

Option 2:

The bit-to-symbol mapping table may be generated based on Gray mapping, outward from the center, clockwise or counterclockwise. Only one bit may be different between the respective bits of any two neighboring constellation points having the same amplitude or substantially the same amplitude on one ring.

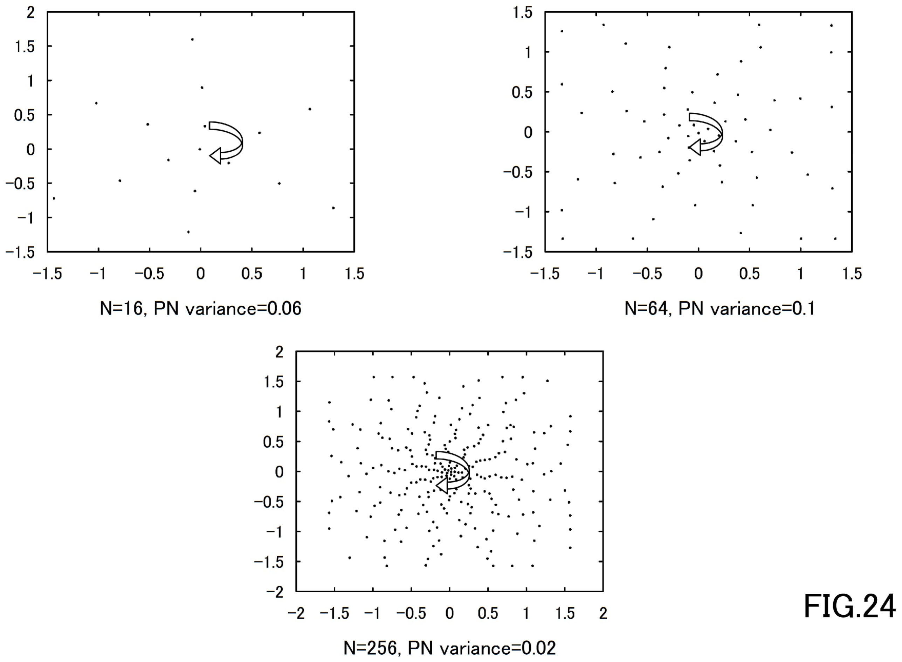

FIG. 24 shows a second example of a set of constellations generated by the system for reducing the impact of phase noise according to an embodiment of the present invention. FIG. 24 shows examples of constellations designed according to option 2, including a 16-point constellation trained for PN variance of 0.06, a 64-point constellation trained for PN variance of 0.1, and a 256-point constellation trained for PN variance of 0.02. In FIG. 24, bit-to-symbol mapping is carried out clockwise, as shown with the arrows. Table 8 shows an example of a bit-to-symbol mapping table for the 16-point constellation trained for PN variance of 0.06.

[Table 8]

| Index | Bits(*) | Symbol | Index | Bits* | Symbol |
|---|---|---|---|---|---|
| 1 | 0000 | -0.0087-0.0017i | 9 | 1100 | -0.0552-0.6129i |
| 2 | 0001 | 0.0389+0.3345i | 10 | 1101 | -0.7916-0.4623i |
| 3 | 0011 | 0.2732-0.2062i | 11 | 1111 | -1.4361-0.7195i |
| 4 | 0010 | -0.3151-0.1619i | 12 | 1110 | -1.0221+0.6694i |
| 5 | 0110 | -0.5194+0.3623i | 13 | 1010 | -0.0798+1.5988i |
| 6 | 0111 | 0.0119+0.8948i | 14 | 1011 | 1.0651+0.58315i |
| 7 | 0101 | 0.5752+0.2383i | 15 | 1001 | 1.2946i-0.8587i |
| 8 | 0100 | 0.7645-0.5023i | 16 | 1000 | -0.1189-1.2081i |

"Operation 1-2: Design regularized APSK constellations to reduce the impact of PN" will be explained below.

APSK-based regularized constellations may be designed based on PN variance. For improved robustness, APSK parameters may be adjusted according to PN variance.

An APSK constellation may comprise multiple concentric rings, as represented by the following mathematical expression 1.

[Mathematical Expression 1]

$$S_{\mathrm{APSK}} = R_k \exp\left(j\left(\frac{2\pi}{n_k} i_k + \varphi_k\right)\right), k = 1,2 \ldots, L$$

where:

$L$ is the number of rings;
$R_k$, $n_k$, and $\varphi_k$ are the radius of a $k$-th circle, the number of points in the $k$-th circle, and the initial phase of the $k$-th circle, respectively; and
$i_k$ is an $i$-th point of the $k$-th circle, including $i_k$ = 0, 1, 2, ... , and $n_k$-1.

An APSK constellation may be chosen based on the parameters L, $R_k$, $n_k$, and $\varphi_k$, and optimized based on the requirements and scenario.

"Operation 1-2-1: Define APSK parameters" will be explained below.

Regularized APSK constellations may be designed based on parameters L, $R_k$, $n_k$, and $\varphi_k$, where k = 1, ... , and L, for varying levels or values of PN variance. For example, based on a constellation generated by trained AI as a result of operation 1-1 described above, the constellation points may be regularized and designed into 64APSK constellations that are robust to PN. In doing so, AI-generated optimization results may be used to determine PN-robust APSK parameters, including: the number of rings, L; the number of points on each ring, $n_k$, where k is 1, ... , and L; the radius or relative radius of each ring, $R_k$, where k is 1, ... , and L; and the initial phase of each ring, $\varphi_k$, where k is 1, ... , and L. By regularizing an irregular constellation generated as a result of operation 1-1 and transforming it into an APSK constellation, performance and complexity can be optimized. By performing the above operation, the regularized constellation points may ease the complexity of demodulation.

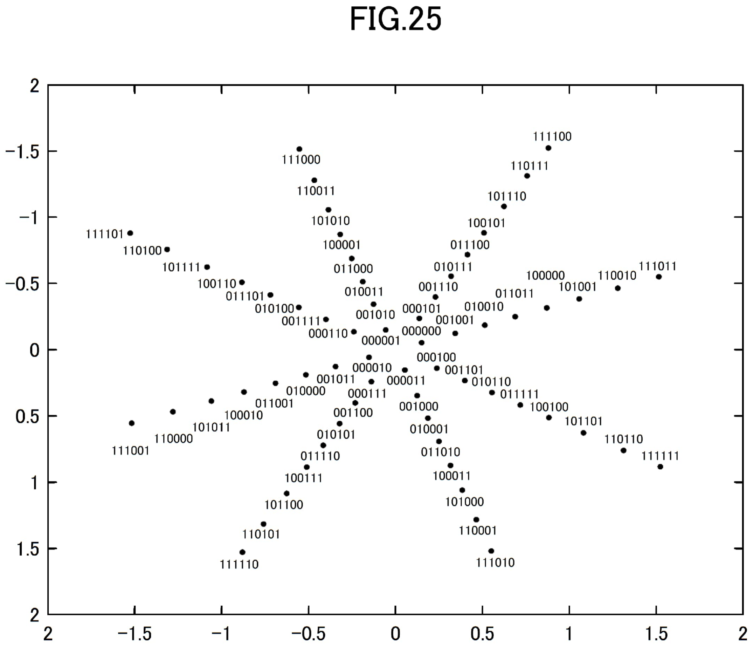

FIG. 25 shows a third example of a constellation generated by the system for reducing the impact of phase noise according to an embodiment of the present invention. FIG. 25 shows an example 64APSK constellation for use when the PN variance is 0.02, obtained by regularizing the trained constellation generated as a result of operation 1-2-1. Table 9 shows the radius of each ring, as well as the phase and bit labeling of each constellation point on each ring, in the 64APSK constellation of FIG. 25.

[Table 9]

| Bit | Radius | $\varphi$ (° ) $p = q = 0$ | $\varphi$ (° ) $p = 0, q = 1$ | $\varphi$ (° ) $p = 1, q = 0$ | $\varphi$ (° ) $p = q = 1$ |
|---|---|---|---|---|---|
| 0000pq | $R_1$=0.16086 | 20 | 110 | 200 | 290 |
| 0001pq | $R_2$=0.27530 | 330 | 60 | 150 | 240 |
| 0010pq | $R_3$=0.36599 | 290 | 20 | 110 | 200 |
| 0011pq | $R_4$=0.46063 | 240 | 330 | 60 | 150 |
| 0100pq | $R_5$=0.54699 | 200 | 290 | 20 | 110 |
| 0101pq | $R_6$=0.64072 | 150 | 240 | 330 | 60 |
| 0110pq | $R_7$=0.73289 | 110 | 200 | 290 | 20 |
| 0111pq | $R_8$=0.82902 | 60 | 150 | 240 | 330 |
| 1000pq | $R_9$=0.92598 | 20 | 110 | 200 | 290 |
| 1001pq | $R_{10}$=1.01865 | 330 | 60 | 150 | 240 |
| 1010pq | $R_{11}$=1.12413 | 290 | 20 | 110 | 200 |
| 1011pq | $R_{12}$=1.24818 | 240 | 330 | 60 | 150 |
| 1100pq | $R_{13}$=1.36034 | 200 | 290 | 20 | 110 |
| 1101pq | $R_{14}$=1.51427 | 150 | 240 | 330 | 60 |
| 1110pq | $R_{15}$=1.61186 | 110 | 200 | 290 | 20 |
| 1111pq | $R_{16}$=1.75891 | 60 | 150 | 240 | 330 |

As shown in FIG. 25 and Table 9, the number of rings may be 16, the number of points on each ring may be 4, and the difference in phase between any two neighboring constellation points on each ring may be 90 degrees.

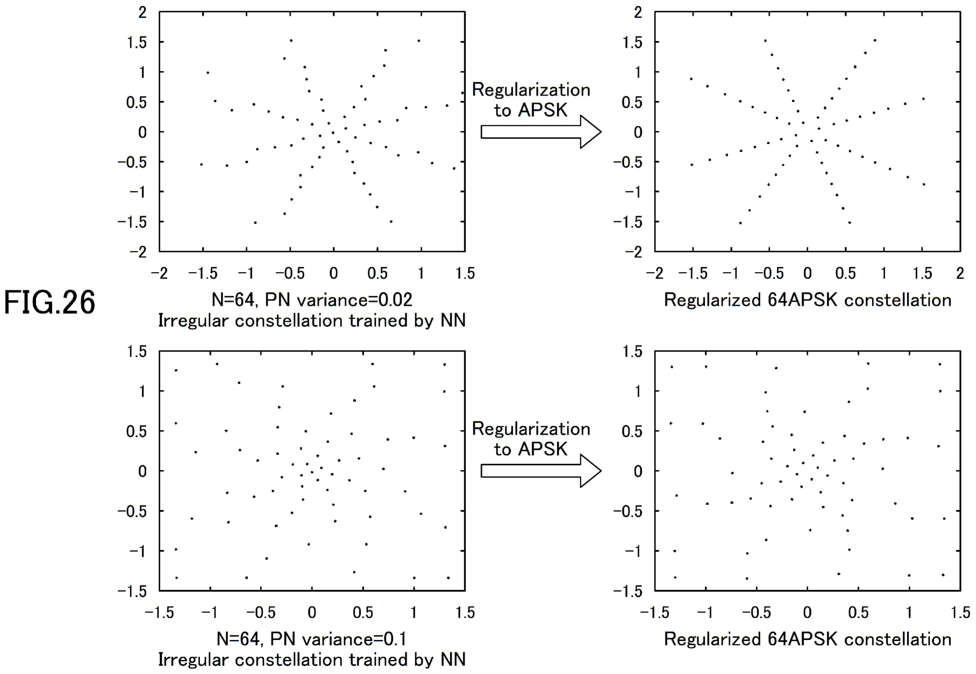

FIG. 26 shows a fourth example of a set of constellations generated by the system for reducing the impact of phase noise according to an embodiment of the present invention. FIG. 26 shows examples of 64APSK constellations generated as a result of operation 1-2-1, including an example 64APSK constellation for use when the PN variance is 0.02, obtained by regularizing a trained constellation and an example 64APSK constellation for use when the PN variance is 0.1, obtained by regularizing a trained constellation. Table 10 shows the radius and initial phase of each ring in the regularized 64APSK constellation for use when the PN variance is 0.02 of FIG. 26. Table 11 shows the radius and initial phase of each ring in the regularized 64APSK constellation for use when the PN variance is 0.02, shown in FIG. 26.

[Table 10]

| **Index of rings** | **1** | **2** | **3** | **4** | **5** | **6** | **7** | **8** |
|---|---|---|---|---|---|---|---|---|
| Radius of each ring | 0.16086 | 0.27530 | 0.36599 | 0.46063 | 0.54699 | 0.64072 | 0.73289 | 0.82902 |
| Initial phase of each ring | 20° | 60° | 20° | 60° | 20° | 60° | 20° | 60° |
| **Index of rings** | **9** | **10** | **11** | **12** | **13** | **14** | **15** | **16** |
| Radius of each ring | 0.92598 | 1.01865 | 1.12413 | 1.24818 | 1.36034 | 1.51427 | 1.61186 | 1.75891 |
| Initial phase of each ring | 20° | 60° | 20° | 60° | 20° | 60° | 20° | 60° |

[Table 11]

| **Index of ring** | **1** | **2** | **3** | **4** | **5** | **6** | **7** | **8** |
|---|---|---|---|---|---|---|---|---|
| Radius of each ring | 0.11008 | 0.20507 | 0.29554 | 0.38633 | 0.47740 | 0.57136 | 0.65495 | 0.74052 |
| Initial phase of each ring | 22.160° | 73.622° | 26.341° | 66.793° | 18.818° | 50.248° | 121.679° | 2.126° |
| **Index of ring** | **9** | **10** | **11** | **12** | **13** | **14** | **15** | **16** |
| Radius of each ring | 0.84472 | 0.95419 | 1.06748 | 1.18875 | 1.32466 | 1.47133 | 1.64510 | 1.86474 |
| Initial phase of each ring | 27.955° | 64.731° | 22.669° | 60.102° | 13.462° | 66.087° | 37.466° | 45.700° |

In the example regularized 64APSK constellation for use when the PN variance is 0.02 in FIG. 26, the number of rings may be 16, the number of points on each ring may be 4, and the points constituting each ring may be plotted at equal intervals. The initial phase of any two neighboring rings may be 20 degrees or 60 degrees, as shown in Table 10.

In the example regularized 64APSK constellation for use when the PN variance is 0.1 in FIG. 26, the number of rings may be 16, the number of points on each ring may be 4, and the points constituting each ring may be plotted at equal intervals. The minimum phase from the original four points may be the initial phase of each ring.

"Operation 1-2-2: Design B2S mapping tables for APSK" will be explained below.

A bit-to-symbol mapping table may be designed to define regularized constellations that are robust to PN. Following option 1 or option 2 may be available.

Option 1:

A bit-to-symbol mapping table may be generated using Gray mapping branches. Only one bit may be different between any two neighboring branches, that is, between any two neighboring constellation points' respective bits.

Option 2:

The bit-to-symbol mapping table may be generated based on Gray mapping, outward from the center, clockwise or counterclockwise. Only one bit may be different between the respective bits of any two neighboring constellation points having the same amplitude or substantially the same amplitude on one ring.

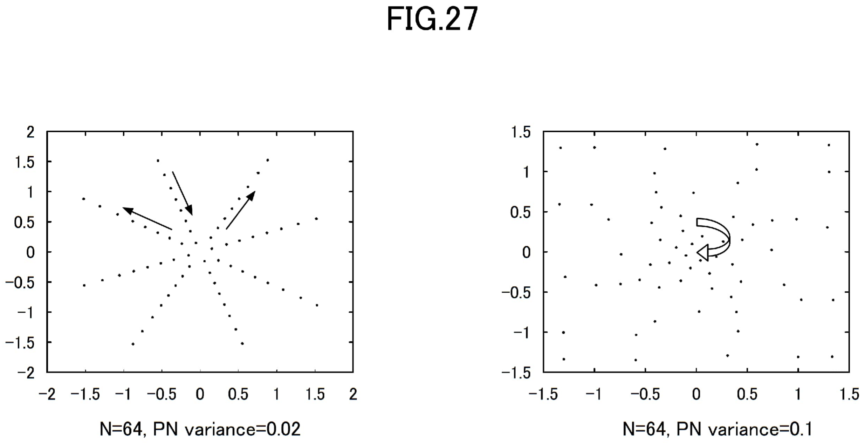

FIG. 27 shows a fifth example of a set of constellations generated by the system for reducing the impact of phase noise according to an embodiment of the present invention. FIG. 27 shows an example regularized 64-point constellation for PN variance of 0.02 according to option 1, and an example regularized 64-point constellation for PN variance of 0.1 according to option 2. In FIG. 27, bit-to-symbol mapping may be carried out in the order shown with the arrows. Table 12 shows an example bit-to-symbol mapping table for the regularized 64-point constellation for PN variance of 0.02.

[Table 12]

| Index | Bits(*) | Symbol | Index | Bits* | Symbol |
|---|---|---|---|---|---|
| 1 | 000000 | -0.2384+0.1377i | 33 | 110000 | 0.2384-0.1377i |
| 2 | 000001 | -0.3989+0.2303i | 34 | 110001 | 0.3989-0.2303i |

(continued)

| Index | Bits(*) | Symbol | Index | Bits* | Symbol |
|---|---|---|---|---|---|
| 3 | 000011 | -0.5549+0.3204i | 35 | 110011 | 0.5549-0.3204i |
| 4 | 000010 | -0.718+0.4145i | 36 | 110010 | 0.718-0.4145i |
| 5 | 000110 | -0.8822+0.5093i | 37 | 110110 | 0.8822-0.5093i |
| 6 | 000111 | -1.081+0.6241i | 38 | 110111 | 1.081-0.6241i |
| 7 | 000101 | -1.311+0.7571i | 39 | 110101 | 1.311-0.7571i |
| 8 | 000100 | -1.523+0.8795i | 40 | 110100 | 1.523-0.8795i |
| 9 | 001100 | -0.5513+1.515i | 41 | 111100 | 0.5513-1.515i |
| 10 | 001101 | -0.4653+1.278i | 42 | 111101 | 0.4653-1.278i |
| 11 | 001111 | -0.3845+1.056i | 43 | 111111 | 0.3845-1.056i |
| 12 | 001110 | -0.3167+0.8701i | 44 | 111110 | 0.3167-08701i |
| 13 | 001010 | -0.2507+0.6887i | 45 | 111010 | 0.2507-0.6897i |
| 14 | 001011 | -0.1871+0.514i | 46 | 111011 | 0.1871-0.514i |
| 15 | 001001 | -0.1252+0.3439i | 47 | 111001 | 0.1252-0.3439i |
| 16 | 001000 | -0.05502+0.1512i | 48 | 111000 | 0.05502-0.1512i |
| 17 | 011000 | 0.1377+0.2384i | 49 | 101000 | -0.1377-0.2384i |
| 18 | 011001 | 0.2303+0.3989i | 50 | 101001 | -0.2303-0.3989i |
| 19 | 011011 | 0.3204+0.5549i | 51 | 101011 | -0.3204-0.5549i |
| 20 | 011010 | 0.4145+0.718i | 52 | 101010 | -0.4145-0.718i |
| 21 | 011110 | 0.5093+0.8822i | 53 | 101110 | -0.5093-0.8822i |
| 22 | 011111 | 0.6241+1.081i | 54 | 101111 | -0.6241-1.081i |
| 23 | 011101 | 0.7571+1.311i | 55 | 101101 | -0.7571-1.311i |
| 24 | 011100 | 0.8795+1.523i | 56 | 101100 | -0.8795-1.523i |
| 25 | 010100 | 1.515+0.5513i | 57 | 100100 | -1.515-0.5513i |
| 26 | 010101 | 1.278+0.4653i | 58 | 100101 | -1.278-0.4653i |
| 27 | 010111 | 1.056+0.3845i | 59 | 100111 | -1.056-0.3845i |
| 28 | 010110 | 0.8701+0.3167i | 60 | 100110 | -0.8701-0.3167i |
| 29 | 010010 | 0.6887+0.2507i | 61 | 100010 | -0.6887-0.2507i |
| 30 | 010011 | 0.514+0.1871i | 62 | 100011 | -0.514-0.1871i |
| 31 | 010001 | 0.3439+0.1252i | 63 | 100001 | -0.3439-0.1252i |
| 32 | 010000 | 0.1512+0.05502i | 64 | 100000 | -0.1512-0.05502i |

Table 13 shows an example bit-to-symbol mapping table for the regularized 64-point constellation for PN variance of 0.1.

[Table 13]

| Index | Bits(*) | Symbol | Index | Bits* | Symbol |
|---|---|---|---|---|---|
| 1 | 000000 | -0.04152-0.102i | 33 | 110000 | -0.3959+0.7462i |
| 2 | 000001 | 0.102+0.04152i | 34 | 110001 | 0.7462+0.3959i |
| 3 | 000011 | 0.04152-0.102i | 35 | 110011 | 0.3959-0.7462i |
| 4 | 000010 | -0.102-0.04152i | 36 | 110010 | -0.7462-0.3959i |

(continued)

| Index | Bits(*) | Symbol | Index | Bits* | Symbol |
|---|---|---|---|---|---|
| 5 | 000110 | -0.1968+0.05783i | 37 | 110110 | -0.8629+0.4073i |
| 6 | 000111 | 0.05783+0.1968i | 38 | 110111 | 0.4073+0.8629i |
| 7 | 000101 | 0.1968-0.05783i | 39 | 110101 | 0.8629-0.4073i |
| 8 | 000100 | -0.05783-0.1968i | 40 | 110100 | -0.4073-0.8629i |
| 9 | 001100 | -0.1311+0.2649i | 41 | 111100 | -0.4113+0.9851i |
| 10 | 001101 | 0.2649+0.1311i | 42 | 111101 | 0.9851+0.4113i |
| 11 | 001111 | 0.1311-0.2649i | 43 | 111111 | 0.4113-0.9851i |
| 12 | 001110 | -0.2649-0.1311i | 44 | 111110 | -0.9851-0.4113i |
| 13 | 001010 | -0.3551+0.1523i | 45 | 111010 | -1.031+0.5926i |
| 14 | 001011 | 0.1523+0.3551i | 46 | 111011 | 0.5926+1.031i |
| 15 | 001001 | 0.3551-0.1523i | 47 | 111001 | 1.031-0.5926i |
| 16 | 001000 | -0.1523-0.3551i | 48 | 111000 | -0.5926-1.031i |
| 17 | 011000 | -0.154+0.4519i | 49 | 101000 | -1.345+0.5966i |
| 18 | 011001 | 0.4519+0.154i | 50 | 101001 | 0.5966+1.345i |
| 19 | 011011 | 0.154-0.4519i | 51 | 101011 | 1.345-0.5966i |
| 20 | 011010 | -0.4519-0.154i | 52 | 101010 | -0.5966-1.345i |
| 21 | 011110 | -0.4393+0.3653i | 53 | 101110 | -0.3083+1.288i |
| 22 | 011111 | 0.3653+0.4393i | 54 | 101111 | 1.288+0.3083i |
| 23 | 011101 | 0.4393-0.3653i | 55 | 101101 | 0.3083-1.288i |
| 24 | 011100 | -0.3653-0.4393i | 56 | 101100 | -1.288-0.3083i |
| 25 | 010100 | -0.344+0.5574i | 57 | 100100 | -1.001+1.306i |
| 26 | 010101 | 0.5574+0.344i | 58 | 100101 | 1.306+1.001i |
| 27 | 010111 | 0.344-0.5574i | 59 | 100111 | 1.001-1.306i |
| 28 | 010110 | -0.5574-0.344i | 60 | 100110 | -1.306-1.001i |
| 29 | 010010 | -0.02752+0.74i | 61 | 100010 | -1.335+1.302i |
| 30 | 010011 | 0.74+0.02752i | 62 | 100011 | 1.302+1.335i |
| 31 | 010001 | 0.02752-0.74i | 63 | 100001 | 1.335-1.302i |
| 32 | 010000 | -0.74-0.02752i | 64 | 100000 | -1.302-1.335i |

"Operation 1-3: Design MCS tables and related signaling for adaptive modulation to reduce the impact of PN" will be explained below.

To design MCS tables that better fit the application scenarios and requirements, it is possible to design MCS tables that include constellations that allow high PN robustness and high SE.

"Operation 1-3-1: Design MCS tables including PN-robust constellations" will be explained below.

The constellations generated by the trained NN as a result of operation 1-1 or the regularized APSK constellations generated as a result of operation 1-2 may be included in a PN-robust MCS table. Note that, hereinafter, constellations generated by the trained NN as a result of operation 1-1 or regularized APSK constellations generated as a result of operation 1-2 will be referred to as "newPN", without loss of generality.

To overcome the signaling overhead, constellations designed for several levels or values of PN variance may be included in an MCS table. For example, an MCS table may be designed according to following option 1 to option 3.

For example, constellations designed for PN variance of 0.02 may be defined in an MCS table, according to following option 1. Also, constellations designed for PN variance of 0.02 and 0.06 may be defined in an MCS table, according to following option 2. Furthermore, constellations designed for PN variance of 0.02, 0.04, and 0.08 may be defined in an MCS table according to following option 3.

Option 1:

Some of the MCSs associated with QAM in a five-bit NR MCS table may be replaced with PN-robust constellations. Some of the MCSs associated with QAM in the NR MCS table may be replaced with MCSs that support the constellations generated as a result of operation 1-1 or the regularized APSK constellations generated as a result of operation 1-2. The replacing may be done according to following examples 1 to 3.

Example 1:

In order to make the number of MCSs in the MCS table to be replaced with new constellations small, constellations designed for one PN variance (that is, one level or value of PN variance) may be added to the MCS table. In doing so, for example, 16-point constellations that support MCSs with the modulation order 4, that are used when the PN variance is 0.06, and that are referred to as "16newPN" may replace the MCS indices associated with 16QAM in the MCS table. 64-point constellations that support MCSs with the modulation order 6, that are used when the PN variance is 0.04, and that are referred to as "64newPN" may replace the MCS indices associated with 64QAM in the MCS table. 256-point constellations that support MCSs with the modulation order 8, that are used when the PN variance is 0.02, and that are referred to as "256newPN" may replace the MCS indices associated with 256QAM in the MCS table. Table 14 is an example MCS table designed according to example 1.

[Table 14]

| MCS Index $I_{MCS}$ | Modulation Order $Q_m$ | Target code Rate R x [1024] | Spectral efficiency | MCS Index $I_{MCS}$ | Modulation Order $Q_m$ | Target code Rate R x [1024] | Spectral efficiency |
|---|---|---|---|---|---|---|---|
| 0 | 2 | 120 | 0.2344 | 16 | 4 (16newPN) | 658 | 2.5703 |
| 1 | 2 | 157 | 0.3066 | 17 | 6 | 438 | 2.5664 |
| 2 | 2 | 193 | 0.3770 | 18 | 6 | 466 | 2.7305 |
| 3 | 2 | 251 | 0.4902 | 19 | 6 | 517 | 3.0293 |
| 4 | 2 | 308 | 0.6016 | 20 | 6 | 567 | 3.3223 |
| 5 | 2 | 379 | 0.7402 | 21 | 6 | 616 | 3.6094 |
| 6 | 2 | 449 | 0.8770 | 22 | 6 | 666 | 3.9023 |
| 7 | 2 | 526 | 1.0273 | 23 | 6 (64newPN) | 719 | 4.2129 |
| 8 | 2 | 602 | 1.1758 | 24 | 6 (64newPN) | 772 | 4.5234 |
| 9 | 2 | 679 | 1.3262 | 25 | 6 (64newPN) | 822 | 4.8164 |
| 10 | 4 | 340 | 1.3281 | 26 | 6 (64newPN) | 873 | 5.1152 |
| 11 | 4 | 378 | 1.4766 | 27 | 6 (64newPN) | 910 | 5.3320 |
| 12 | 4 | 434 | 1.6953 | 28 | 6 (64newPN) | 948 | 5.5547 |
| 13 | 4 | 490 | 1.9141 | 29 | 2 | reserved | |
| 14 | 4 (16newPN) | 553 | 2.1602 | 30 | 4 | reserved | |
| 15 | 4 (16newPN) | 616 | 2.4063 | 31 | 6 | reserved | |

Example 2:

Considering that different modulation orders may be applied to different levels or values of PN, the number of constellations to be designed for a given level or value of PN variance may vary depending on the modulation order. For example, for 64-point constellations that support the modulation order 6, constellations that are used when the PN variance is 0.04 and referred to as "64newPN-mid", and constellations that are used when the PN variance is 0.08 and referred to as "64newPN-high" may replace some of the MCS indices associated with 64QAM in the MCS table. Furthermore, among 256-point constellations that support the modulation order 8, constellations that are used when the PN variance is 0.02 and referred to as "256newPN-low" may replace some of the MCS indices associated with 256QAM in the MCS table.

Example 3:

Some of the indices associated with BPSK, QPSK, or QAM in a conventional MCS table may be replaced with "newPN" constellations without explicitly defined PN variance. That is, the PN variance may be obtained in explicit UE feedback instead of in an MCS indication. The "newPN" constellations may be chosen based on the combination of MCS indication and PN variance feedback. For example, if an MCS associated with a "16newPN" constellation is indicated and the PN variance value 0.02 is indicated in feedback, a "16newPN" constellation for PN variance of 0.02 may be used for transmission.
Option 1 above provides an MCS table that includes PN-robust MCSs. The total number of MCSs and the overhead of MCS indication do not change.

Option 2:

New MCSs that are associated with the PN-robust constellations generated as a result of operation 1-1 or new MCSs that are associated with regularized APSK constellations generated as a result of operation 1-2 may be added to a five-bit NR MCS table so that an MCS table of more than five bits may be created. That is, MCSs that are associated with constellations generated as a result of operation 1-1 or the regularized APSK constellations generated as a result of operation 1-2 may be added to the NR MCS table. They may be added according to following examples 1 to 3.

Example 1:

In order to increase the number of MCSs to be replaced with new constellations, constellations for two or three levels or values of PN variance may be added to the MCS table. For example, 16-point constellations that support MCSs with the modulation order 4, that are used when the PN variance is 0.02, and that are referred to as "16newPN-low", and constellations that are used when the PN variance is 0.08 and referred to as "16newPN-high" may be added.
Alternatively, 16-point constellations that support MCSs with the modulation order 4, that are used when the PN variance is 0.04, and that are referred to as "16newPN-mid", and constellations that are used when the PN variance is 0.08 and referred to as "16newPN-high" may be added. Alternatively, 16-point constellations that support MCSs with the modulation order 4, that are used when the PN variance is 0.02, and that are referred to as "16newPN-low", constellations that are used when the PN variance is 0.04 and referred to as "16newPN-mid", and constellations that are used when the PN variance is 0.08 and referred to as "16newPN-high" may be added.
Furthermore, 64-point constellations that support MCSs with the modulation order 6, that are used when the PN variance is 0.02, and that are referred to as "64newPN-low", and constellations that are used when the PN variance is 0.08 and referred to as "64newPN-high" may be added. Alternatively, 64-point constellations that support MCSs with the modulation order 6, that are used when the PN variance is 0.04, and that are referred to as "64newPN-mid", and constellations that are used when the PN variance is 0.08 and referred to as "64newPN-high" may be added. Alternatively, 64-point constellations that support MCSs with the modulation order 6, that are used when the PN variance is 0.02, and that are referred to as "64newPN-low", constellations that are used when the PN variance is 0.04 and referred to as "64newPN-mid", and constellations that are used when the PN variance is 0.08 and referred to as "64newPN-high" may be added.
In addition, 256-point constellations that support MCSs with the modulation order 8, that are used when the PN variance is 0.02, and that are referred to as "256newPN-low", and constellations that are used when the PN variance is 0.08 and referred to as "256newPN-high" may be added. Alternatively, 256-point constellations that support MCSs with the modulation order 8, that are used when the PN variance is 0.04, and that are referred to as "256newPN-mid", and constellations that are used when the PN variance is 0.08 and referred to as "256newPN-high" may be added. Alternatively, 256-point constellations that support MCSs with the modulation order 8, that are used when the PN variance is 0.02, and that are referred to as "256newPN-low", constellations that are used when the PN variance is 0.04 and referred to as "256newPN-mid", and constellations that are used when the PN variance is 0.08 and referred to as "256newPN-high" may be added.
Tables 15 and 16 are examples of MCS tables designed according to example 1.

[Table 15]

| MCS Index $I_{MCS}$ | Modulation Order $Q_m$ | Target code Rate R x [1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |

(continued)

| MCS Index $I_{MCS}$ | Modulation Order $Q_m$ | Target code Rate R x [1024] | Spectral efficiency |
|---|---|---|---|
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 32 | 4 (16newPN-mid) | 340 | 1.3281 |
| 11 | 4 | 378 | 1.4766 |
| 33 | 4 (16newPN-high) | 378 | 1.4766 |
| 12 | 4 | 434 | 1.6953 |
| 34 | 4 (16newPN-mid) | 434 | 1.6953 |
| 35 | 4 (16newPN-high) | 434 | 1.6953 |
| 13 | 4 | 490 | 1.9141 |
| 36 | 4 (16newPN-mid) | 490 | 1.9141 |
| 37 | 4 (16newPN-high) | 490 | 1.9141 |
| 14 | 4 | 553 | 2.1602 |
| 38 | 4 (16newPN-mid) | 553 | 2.1602 |
| 39 | 4 (16newPN-high) | 553 | 2.1602 |
| 15 | 4 | 616 | 2.4063 |
| 40 | 4 (16newPN-mid) | 616 | 2.4063 |
| 41 | 4 (16newPN-high) | 616 | 2.4063 |
| 16 | 4 | 658 | 2.5703 |
| 42 | 4 (16newPN-high) | 658 | 2.5703 |
| 17 | 6 | 438 | 2.5664 |
| 43 | 6 (64newPN-high) | 438 | 2.5664 |
| 18 | 6 | 466 | 2.7305 |
| 44 | 6 (64newPN-low) | 466 | 2.7305 |

[Table 16]

| MCS Index $I_{MCS}$ | Modulation Order $Q_m$ | Target code Rate R x [1024] | Spectral efficiency |
|---|---|---|---|
| 19 | 6 | 517 | 3.0293 |
| 45 | 6 (64newPN-high) | 517 | 3.0293 |
| 20 | 6 | 567 | 3.3223 |
| 46 | 6 (64newPN-low) | 567 | 3.3223 |
| 47 | 6 (64newPN-high) | 567 | 3.3223 |
| 21 | 6 | 616 | 3.6094 |
| 48 | 6 (64newPN-low) | 616 | 3.6094 |
| 49 | 6 (64newPN-high) | 616 | 3.6094 |

(continued)

| MCS Index $I_{MCS}$ | Modulation Order $Q_m$ | Target code Rate R x [1024] | Spectral efficiency |
|---|---|---|---|
| 22 | 6 | 666 | 3.9023 |
| 50 | 6 (64newPN-low) | 666 | 3.9023 |
| 23 | 6 | 719 | 4.2129 |
| 51 | 6 (64newPN-high) | 719 | 4.2129 |
| 24 | 6 | 772 | 4.5234 |
| 52 | 6 (64newPN-low) | 772 | 4.5234 |
| 53 | 6 (64newPN-high) | 772 | 4.5234 |
| 25 | 6 | 822 | 4.8164 |
| 54 | 6 (64newPN-low) | 822 | 4.8164 |
| 55 | 6 (64newPN-high) | 822 | 4.8164 |
| 26 | 6 | 873 | 5.1152 |
| 56 | 6 (64newPN-low) | 873 | 5.1152 |
| 57 | 6 (64newPN-high) | 873 | 5.1152 |
| 27 | 6 | 910 | 5.3320 |
| 58 | 6 (64newPN-low) | 910 | 5.3320 |
| 28 | 6 | 948 | 5.5547 |
| 59 | 6 (64newPN-high) | 948 | 5.5547 |
| 29 | 2 | reserved | |
| 30 | 4 | reserved | |
| 60 | 4 (16newPN-low) | reserved | |
| 61 | 4 (16newPN-high) | reserved | |
| 31 | 6 | reserved | |
| 62 | 6 (64newPN-low) | reserved | |
| 63 | 6 (64newPN-high) | reserved | |

Example 2:

High modulation orders and/or high code rates may be susceptible to the impact of phase noise. Different levels or values of PN variance may be applied to different modulation orders and code rates. For example, 16-point constellations that are used when the PN variance is 0.08 and referred to as "16newPN-high" may be added. Likewise, 64-point constellations that are used when the PN variance is 0.02 and referred to as "64newPN-low", constellations that are used when the PN variance is 0.04 and referred to as "64newPN-mid", and constellations that are used when the PN variance is 0.08 and referred to as "64newPN-high" may be added. For example, 256-point constellations that are used when the PN variance is 0.02 and referred to as "256newPN-low" may be added as well.

Example 3:

Some of the indices associated with BPSK, QPSK, or QAM in a conventional MCS table may be replaced with "newPN" constellations without explicitly defined PN variance. That is, the PN variance may be obtained in explicit UE feedback instead of in an MCS indication. The "newPN" constellations may be chosen based on the combination of MCS indication and PN variance feedback. For example, if an MCS associated with a "16newPN" constellation is indicated and the PN variance indicated in feedback is 0.02, a "16newPN" constellation designed for the PN variance of 0.02 may be used for transmission.

Option 2 above allows PN-robust MCSs to be added, while maintaining existing MCSs.

Option 3:

A new MCS table that includes only PN-robust constellations may be designed. For example, an MCS table that includes existing PN-robust constellations such as BPSK, pi-2BPSK, pi-4BPSK, and pi-4QPSK constellations, as well as newly designed constellations, may be designed. This MCS table may include MCS indices associated with "16newPN", MCS indices associated with "64newPN", and MCS indices associated with "256newPN". Table 17 is an example MCS table designed according to option 3.

[Table 17]

| MCS Index $I_{MCS}$ | PN Variance | Modulation Order $Q_m$ | Target code Rate R x [1024] | Spectral efficiency |
|---|---|---|---|---|
| 0 | 0.02~0.05 | 4 (16newPN-mid) | 340 | 1.3281 |
| 1 | 0.05~0.1 | 4 (16newPN-high) | 340 | 1.3281 |
| 2 | 0.02~0.05 | 4 (16newPN-mid) | 434 | 1.6953 |
| 3 | 0.05~0.1 | 4 (16newPN-high) | 434 | 1.6953 |
| 4 | 0.02~0.05 | 4 (16newPN-mid) | 553 | 2.1602 |
| 5 | 0.05~0.1 | 4 (16newPN-high) | 553 | 2.1602 |
| 6 | 0~0.05 | 6 (64newPN-low) | 466 | 2.7305 |
| 7 | 0.05~0.1 | 6 (64newPN-high) | 466 | 2.7305 |
| 8 | 0~0.05 | 6 (64newPN-low) | 567 | 3.3223 |
| 9 | 0.05~0.1 | 6 (64newPN-high) | 567 | 3.3223 |
| 10 | 0~0.05 | 6 (64newPN-low) | 666 | 3.9023 |
| 11 | 0.05~0.1 | 6 (64newPN-high) | 666 | 3.9023 |
| 12 | 0~0.05 | 6 (64newPN-low) | 772 | 4.5234 |
| 13 | 0.05~0.1 | 6 (64newPN-high) | 772 | 4.5234 |
| 14 | 0~0.05 | 6 (64newPN-low) | 873 | 5.1152 |
| 15 | 0.05~0.1 | 6 (64newPN-high) | 873 | 5.1152 |

Above option 3 makes it possible to provide an MCS table that includes PN-robust MCSs. Multiple sets of MCS tables can be designed thus, so that it is possible to make flexible choices among different MCS tables and adjust the cost required for MCS indication.

"Operation 1-3-2: Provide related signaling that may be suitable for use with multiple MCS tables including PN robustness" will be explained below.

A signaling operation may be carried out according to following option 1 to option 3.

Option 1:

When an MCS table is entirely replaced with a newly designed MCS table (e.g., an MCS table designed according to option 1 or option 2 in operation 1-3-1), conventional MCS indication methods and fields (e.g., $I_{MCS}$ in NR), or signaling related to MCS indication in future systems, may be re-used.

Option 2:

When NN parameters are stored in the transmitter and the receiver in advance, constellations may be generated based on the combination of MCS and PN variance. PN variance may be indicated in feedback via CSI signaling or new signaling involving the physical layer or a higher layer (e.g. RRC, MAC-CE, UCI, etc.).

Option 3:

If a newly designed MCS table (e.g., an MCS table designed according to option 1, option 2, or option 3 in operation 1-3-1) is to be added to the specifications, the following methods of sending indications may be available.

Option 3-1:

New signaling, $I_{flag}$, may indicate whether or not to use an MCS table that includes "newPN" constellations. The signaling $I_{flag}$ may be sent via RRC, MAC-CE, UCI, or DCI signaling.

Alternative 1 (DL):

The UE may send the MCS index for DL transmission to the BS as feedback. The UE may send an indication of whether or not to use an MCS indication ($I_{flag}$) and an MCS index ($I_{MCS}$) that are robust to PN, to the BS, in additional feedback. $I_{flag}$ may be 1 if a PN-robust MCS indication is required; otherwise, $I_{flag}$ may be 0. $I_{flag}$ may be sent via RRC, MAC-CE, or UCI signaling. $I_{MCS}$ feedback may be sent via existing signaling.

The BS may choose the required MCS table and $I_{MCS}$ based on feedback from the UE. First, if $I_{flag}$ is 1, the BS may choose an MCS table including "newPN" constellations; otherwise, the BS may choose an existing MCS table. Then, the BS may determine the modulation order $Q_m$ and the target code rate R based on $I_{MCS}$ and the MCS table.

Alternative 2 (DL):

The BS may actively choose the MCS for DL transmission. New RRC, MAC-CE, DCI, or UCI signaling may be designed to send PN variance in feedback from the UE. When PN variance is indicated in feedback from the UE, the BS may choose, based on the feedback, whether or not to use a PN-robust MCS table. In the event the PN variance is nearly 0, the BS may use an existing MCS table and set $I_{flag}$ to 0. In the event the PN variance is in the range from 0.01 to 0.1, inclusive, the BS may choose an MCS table including "newPN" constellations, and set $I_{flag}$ to 1. The BS may send $I_{flag}$ and $I_{MCS}$ to the UE via RRC, MAC-CE, or DCI signaling.

Alternative 1 (UL):

The BS may indicate the MCS for UL transmission to the UE. The BS may send an indication of whether or not to use a PN-robust MCS indication ($I_{flag}$) and MCS index ($I_{MCS}$). $I_{flag}$ may be 1 if a PN-robust MCS indication is required; otherwise, $I_{flag}$ may be 0. $I_{flag}$ may be sent via RRC, MAC-CE, or UCI signaling. $I_{MCS}$ may be sent via existing signaling.

The UE may choose the required MCS table and $I_{MCS}$ based on a command from the BS. First, if $I_{flag}$ is 1, the UE may choose an MCS table including "newPN" constellations; otherwise, the UE may choose an existing MCS table. Then, the UE may determine the modulation order $Q_m$ and the target code rate R based on $I_{MCS}$ and the MCS table.

Alternative 2 (UL):

The UE may actively choose the MCS for UL transmission. The UE may choose whether or not to use a PN-robust MCS table, based on an estimate of PN variance. If the PN variance is nearly 0, the UE may use an existing MCS table and set $I_{flag}$ to 0. If the PN variance is in the range of 0.01 to 0.1, inclusive, the UE may choose an MCS table that includes "newPN" constellations, and set $I_{flag}$ to 1. The UE may send $I_{flag}$ and $I_{MCS}$ to the BS via RRC, MAC-CE, or UCI signaling.

Option 3-2:

Existing methods of choosing MCS, as well as the methods of providing signaling disclosed in non-patent literature 16 or designed for future systems, may be re-used. New signaling may be introduced to indicate whether or not to use an MCS table including PN-robust constellations. The signaling may be sent via higher or lower layer signaling, such as RRC, MAC-CE, UCI, or DCI signaling.

Alternative 1:

The signaling may be explicitly associated with PN. For example, in DL transmission, the process described in Section 5.1.3.1 of non-patent literature 16 may be re-used. That is, if "mcs-TableDCI-1-2" is set to "PhaseNoise" or "PN", an MCS table including N "newPN" constellations may be used. The UE may determine the modulation order $Q_m$ and the target code rate R based on $I_{MCS}$ and an MCS table including N "newPN" constellations.

For example, in the case of UL transmission, a higher layer parameter "ifPhaseNoise" or "ifPN" may be added. If "ifPhaseNoise" or "ifPN" is 1, an MCS table including N "newPN" constellations may be used for the PUSCH.

Alternative 2:

The signaling may be implicitly associated with PN. For example, in a system in which a sub-THz band is configured, a newly designed MCS table including PN-robust constellations may be used. In other systems, an MCS table independent of PN may be used.

Here, conventional reference signals and estimation methods may be considered for use to estimate the PN variance and/or CSI-related information (e.g., SNR, SINR, CQI, CSI, etc.). In addition, the PN variance and/or CSI-related information for choosing MCS may be estimated using AI.

"Operation 2: Design constellations and adaptive modulation to reduce the impact of PA non-linearities" will be explained below.

"Operation 2-1: Design irregular constellations to reduce the impact of PA non-linearities" will be explained below.

As in the system of FIG. 17 where adaptive modulation is carried out based on a PA saturation point PaSat as an input, irregular constellations generated by an E2E-trained NN may be used in a system with a non-linear PA that operates in non-linear power regions. The PA saturation point may be defined as one input parameter for the NN.

The basic principle may be as follows. The NN may be trained offline under limited channel conditions. These limited channel conditions may include, for example, a certain SNR range, several PA saturation points, etc. Furthermore, the NN may be regularized based on additional channel conditions (such as continuous or finer PA saturation points) to provide a continuous set of modulation constellations to reduce the impact of PA non-linearities.

For example, the offline training may be carried out as follows. A modulation order, $\log_2 N$, may be set, and an NN architecture may be built. Under the circumstances in which there are L PA saturation points, the NN may be trained to learn constellations.

E2E learning may be carried out using PA saturation points PaSat and N one-hot encoder vectors as inputs. $e_j$ is a j-th one-hot encoder vector, where j = 1, ... , and N, which has a length of N, and in which a j-th value is 1 and the rest of the values are 0. For example, $e_j$ may be associated with a j-th constellation point.

The L PA saturation points may be used in training so that the NN can have a generalization ability to provide different constellations for varying PA saturation points. Note that the PA saturation points may be taken into account both at the transmitter and at the receiver.

The above operation can lead to improvement in performance in an environment in which there are multiple PA saturation points.

Note that the PA model may be outlined as follows (see non-patent literature 15).

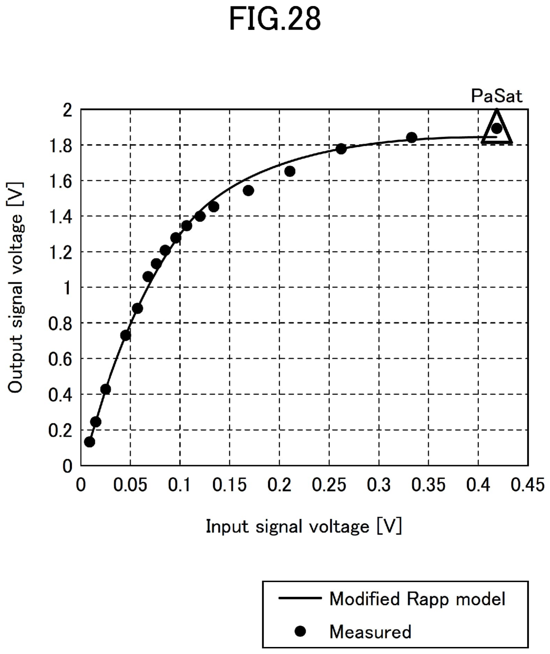

FIG. 28 shows examples of PA characteristics. The modeling of PA non-linearities considered here may be based on the Rapp model, which models amplitude distortion alone and which therefore may be suitable for solid state power amplifiers (SSPAs). PA-induced phase distortion may be significant, and so the phase may be directly distorted in advance and mapped back. The PA saturation point parameter PaSat may be the saturated output voltage of the PA Rapp model, and defined as the point where the slope of the input/output characteristic curve of the PA drops to zero. When the amplitude of an input signal to the PA is larger than a threshold PaSat, non-linear distortion may be produced. The amplitude distortion (AM-AM) in the Rapp model can be represented by the following mathematical expression 2.

[Mathematical Expression 2]

$$G(A) = g\frac{A}{\left(1+\left(\frac{gA}{A_{sat}}\right)^{2s}\right)^{\frac{1}{2s}}}$$

A is the amplitude of the input signal, g is a small gain signal, s is a smoothness factor, and $A_{sat}$ is the saturation level, that is, PaSat.

For example, constellations may be trained at PA saturation points 0.45, 0.58, 0.68, 0.85, etc. A smaller PA saturation point entails stronger non-linearities, making the density of constellation points higher near the center of the constellation and lower outward of the center.

"Operation 2-1-1: Define NN parameters" will be explained below.

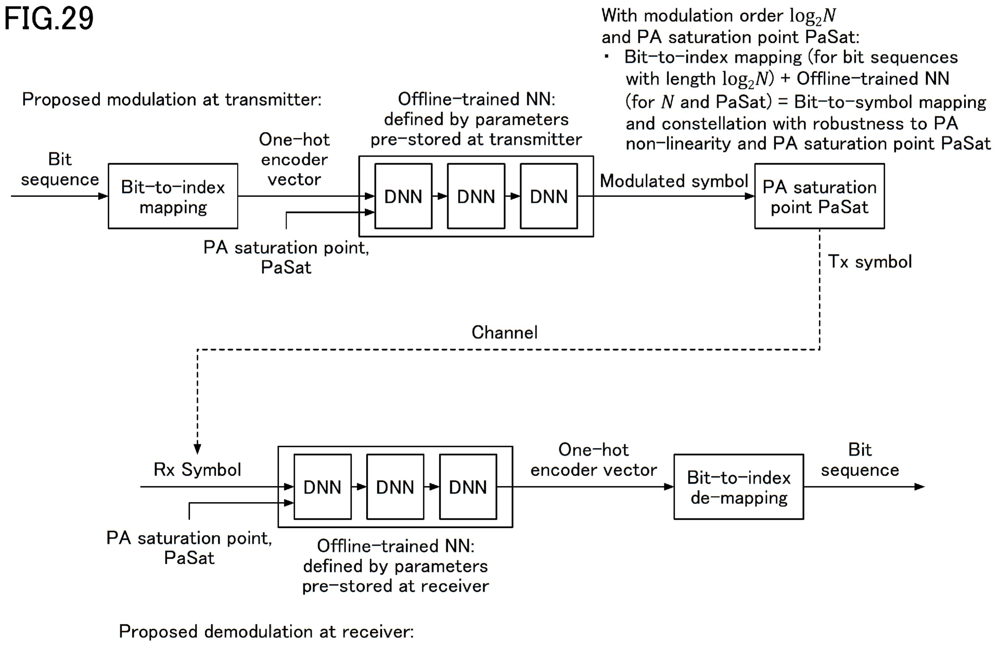

FIG. 29 is a diagram for explaining an example of a system for reducing the impact of PA non-linearities according to an embodiment of the present invention. The parameters of offline-trained NNs may include weight, bias, and activation function. These parameters may be defined and used at the transmitter and at the receiver. The NNs may be stored in advance, and constellation points may be generated according to the modulation order and PN variance. In FIG. 29, bit-to-index mapping may be performed before the NN module where bit sequences (to be modulated) are transformed into one-hot encoder vectors for the NN.

This NN module may be trained offline and referred to as "module 1". The module 1 may generate constellation points that are suitable for a given modulation order and a PA saturation point.

A module 2 may be where the bit-to-index mapping module takes place. The module 2 may have a function to map bits to symbols for online deployment. The input parameters during the offline training phase may include N one-hot encoder vectors and the channels' PN variance. In an online deployment phase of the communication system, bit sequences may be mapped to corresponding constellation points that were missed in the offline training phase. Then, to generate a corresponding one-hot encoder vector (to be input to the NN), bit-to-index mapping may be performed before the pre-trained NN.

By thus combining bit-to-index mapping and an NN together, bit sequences may be modulated into constellation points that are robust to PA non-linearities.

By virtue of offline training using coarse PA saturation points and the generalizable design of the NN, constellations that are robust to any PA saturation point can be generated on a dynamic basis, based on varying PA saturation points in actual systems.

As shown in FIG. 29, at the transmitting end, bit sequences may be input to the bit-to-index mapping module, which then may output one-hot encoder vectors. The one-hot encoder vectors may be input to the offline-trained NN, which then may output modulated symbols. The modulated symbols go through an PA with a saturation point PaSat and become transmission symbols. The modulated symbols may be transmitted on a channel from the transmitting end, received at the receiving end, and input to the offline-trained NN provided at the receiving end, and one-hot encoder vectors may be output. The one-hot encoder vectors may be input to a bit-to-index de-mapping module, which then may output bit sequences.

The parameters for the offline-trained NNs may include at least: the number of layers in the NNs; each layer's weight; each layer's bias; and each layer's activation function.

Table 3 is an example table of offline-trained NN parameters for all PA saturation points.

Each NN may mainly have three basic components, namely, weight, bias, and activation function. "Weight" may refer to the intensity of connection between neurons, expressed by weight. When weight is expressed using numerical values, it may indicate the likelihood or proportion of each input element. "Bias" may refer to the setting for grouping samples into correct classes. Bias may be an important parameter in a model and equivalent to adding a constant. "Activation function" may act out non-linear mapping, so that output values from the neurons may be generally limited to a certain range, such as -1 to 1, 0 to 1, etc.

The values of weights and biases may be results obtained from the trained networks and may be saved, for example, in text file format.

Common examples of the activation functions may include, for example, the sigmoid function, the tanh function, the ReLU function, etc.

A normalization layer may be mandatory in the encoder in order to normalize the power of constellations generated by the system.

Assuming a given modulation order, the NN input parameters may include at least one of (1) and (2) below.

(1) One-hot encoder vector ej, where j = 1, ... , and N, which is a vector having a length of N, and in which the j-th value is 1 and the rest of the values are 0.
(2) PA saturation point.

Table 4 shows examples of NN parameters for 16-point and 64-point constellations that are robust to PA non-linearities.

In the example shown in Table 4, the weight, the bias, and the activation function may all have three layers. To be more specific, according to Table 4, the parameters may be provided such that each layer has weights that can be expressed in matrix form, biases that can be expressed as a 1D array, and an activation function that can be either the sigmoid or tanh function.

Bit-to-index mapping will be explained below. A bit sequence having a length of $\log_2 N$, when input to the NN, may be transformed into a one-hot encoder vector having a length of N. In doing so, following option 1 to option 4 may be available.

Option 1:

A binary bit sequence may be transformed into a constellation point's decimal index in the NN. This option may be suitable for constellations generated online, for any PA saturation point. For example, there may be no need to take into account the PA saturation point during offline training. Table 5 is an example of a 16-point constellation designed according to option 1.

Option 2:

Bit-to-index mapping to provide constellation points for the NN may be carried out in a way that satisfies Gray mapping rules. Gray mapping may be expected to improve performance. Table 6 shows an example of a 64-point constellation designed according to option 2.

Option 3:

Optimal mapping may be carried out such that the error rate is minimized or the throughput/SE is maximized. This can lead to improved decoding performance.

Option 4:

The bit-to-index mapping module may be trained, using constellation points, separately or jointly by the NN or another AI network.

Based on an index j transformed and generated thus, a one-hot encoder vector $e_j$ may be generated and input to the NN.

"Operation 2-1-2: Design B2S mapping tables for irregular constellations" will be explained below.

A bit-to-symbol mapping table may be designed to define a PN-robust irregular constellation. As done heretofore, the bit-to-symbol mapping table may be defined such that bit sequences are modulated into constellation points. By this means, constellation points and bit-to-symbol mapping can be jointly defined in one table.

The bit-to-symbol mapping table may be generated based on Gray mapping, outward from the center, clockwise or counterclockwise. Only one bit may be different between the respective bits of any two neighboring constellation points having the same amplitude or substantially the same amplitude on one ring.

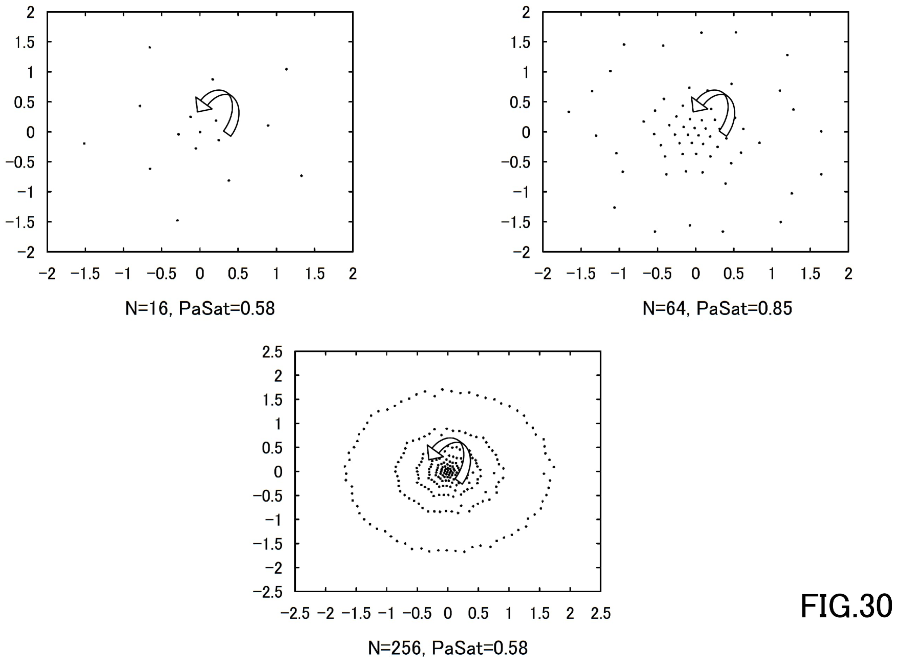

FIG. 30 shows a first example of a set of constellations generated by the system for reducing the impact of PA non-linearities according to an embodiment of the present invention. FIG. 30 shows an example of a 16-point constellation trained for a PaSat of 0.58, an example of a 64-point constellation trained for a PaSat of 0.85, and an example of a 256-point constellation trained for a PaSat of 0.58. In FIG. 30, bit-to-symbol mapping is carried out clockwise, in the order shown with the arrows. Table 18 shows an example of a bit-to-symbol mapping table for the 16-point constellation trained for the PaSat of 0.58.

[Table 18]

| Index | Bits(*) | Symbol | Index | Bits* | Symbol |
|---|---|---|---|---|---|
| 1 | 0000 | -0.00145+0.00173i | 9 | 1100 | 0.88767+0.10837i |
| 2 | 0001 | -0.05364-0.27177i | 10 | 1101 | 0.16456+0.87353i |
| 3 | 0011 | 0.24337-0.13428i | 11 | 1111 | -0.78661+0.43385i |
| 4 | 0010 | 0.20706+0.18991i | 12 | 1110 | -1.51115-0.18929i |
| 5 | 0110 | -0.12226+0.25243i | 13 | 1010 | -0.29523-1.47102i |
| 6 | 0111 | -0.28092-0.03663i | 14 | 1011 | 1.32252-0.73007i |
| 7 | 0101 | -0.65296-0.61223i | 15 | 1001 | 1.12531+1.043571 |
| 8 | 0100 | 0.374514-0.80827i | 16 | 1000 | -0.65884+1.40519i |

"Operation 2-2: Design regularized constellations to reduce the impact of PA non-linearities" will be explained below.

Regularized constellations may be designed based on PA saturation points and trained constellations generated as a result of operation 2-1.

"Operation 2-2-1: Design hexagonal constellations" will be explained below.

A constellation may be regularized based on a hexagonal constellation and designed according to the PA saturation point. The hexagonal constellation's parameters L and $R_k$ may be adjusted, according to the PA saturation point, to increase the robustness to PA non-linearities.

A hexagonal constellation may comprise L concentric hexagons. The method of generating a hexagonal constellation may include the following steps 1 to 4.

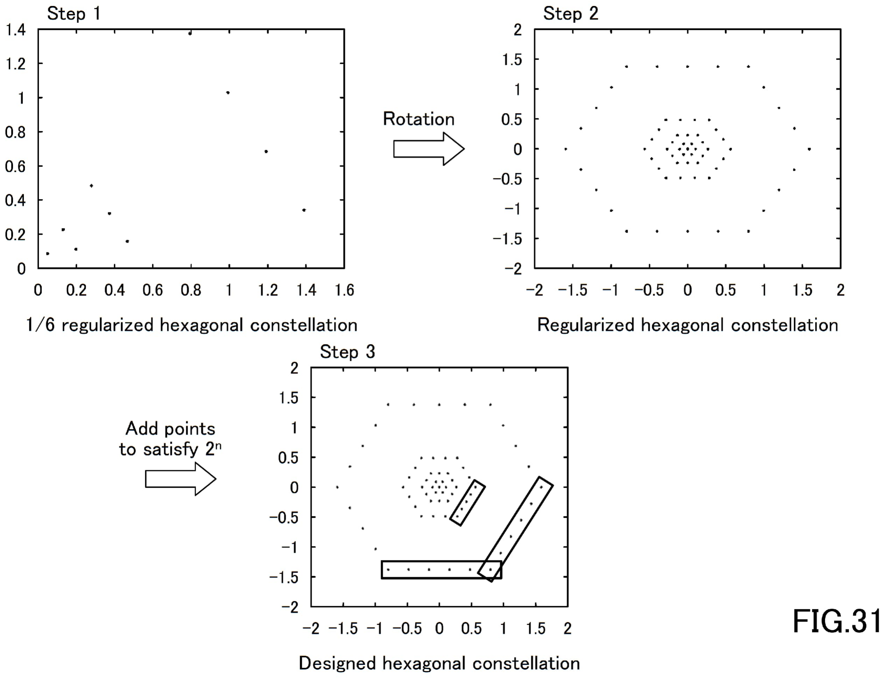

FIG. 31 is a diagram of a second example, showing a set of constellations generated by a system for reducing the impact of PA non-linearities according to an embodiment of the present invention.

In step 1, a 1/6 constellation may be generated as follows. An i-th constellation point, located at the edge of a k-th layer, can be expressed by the following mathematical expression 3.

[Mathematical Expression 3]

$$S_{Hexa} = \frac{2k-i}{2k} \times R_k + 1j * \frac{\sqrt{3}i}{2k} \times R_k$$

where:

$\frac{2k-i}{2k} \times R_k$ is the real part;

$\frac{\sqrt{3}i}{2k} \times R_k$ is the imaginary part;

$L$ is the number of hexagons;

$R_k$, $n_k$, and $\varphi_k$ are the radius of a $k$-th hexagon (or the distance from the center of the $k$-th hexagon to a vertex); and

$i_k$ is an $i$-th point of the $k$-th hexagon, including $i_k$ = 0, 1, 2, ... , and $k$-1.

For example, that fact that the absolute radius of an L-th hexagon is $\{R_1, R_2, \ldots, \text{and } R_L\}$ may be equivalent to the $r_1=R_{1+1}/R_1$ holding where the relative radius of an L-1-th hexagon is $\{r_1, r_2, \ldots, \text{and } r_{L-1}\}$.

As shown in FIG. 31, in step 2, the 1/6 constellation may be rotated to obtain the whole constellation. Generally, the number of constellation points is not $2^n$. For example, a five-layer 1/6 constellation may be rotated to provide a complete constellation comprised of concentric hexagons. However, the regularized hexagonal constellation obtained then only has 1+6+12+18+24=61 points.

In step 3, to complete a $\log_2$N-order hexagonal constellation that is robust to PA non-linearities, the missing constellation points may be added to an edge or edges of the hexagons as shown in FIG. 31. Either following option 1 or option 2 may be available.

Option 1:

In which edge(s) of the hexagons the missing constellation points are to be inserted may be determined with reference to an AI-optimized constellation. For example, assuming that three points have to be added to make the total number of constellation points $2^n$, one point may be inserted in an edge of the fourth layer (k=3), and two more points may be inserted in the edge of the fifth layer (k=4). In particular, for k=3 and 4, the mathematical expression 1 in step 1 may be adjusted and replaced with the following mathematical expression 4.

[Mathematical Expression 4]

$$S_{Hexa} = \frac{2(k+1)-i}{2(k+1)} \times R_k + 1j * \frac{\sqrt{3}i}{2(k+1)} \times R_k$$

$$i_k = 0,1,2, \ldots, k \text{ and } \mathrm{k} = 3,4.$$

Option 2:

In which edge(s) the missing constellation points are inserted may be determined considering the impact that the thus-inserted constellation points may have on the overall transmission power.

In step 4, the radius of each hexagon may be adjusted such that hexagonal constellations that are suitable for varying PA saturation points are obtained.

Operation 2-2-1-1:

The regularized hexagonal constellation may be designed based on the parameters L and $R_k$, where k is 1, ... , and L, for varying PA saturation points.

For example, an AI-trained constellation generated in operation 2-1 may be regularized to provide a 64-point hexagonal constellation that is robust to PA non-linearities. AI-generated optimization results may be used to determine the number of hexagons L and the radius or relative radius $R_k$, where k is 1, ... , and L. An irregular constellation generated as a result of operation 2-1 may be regularized and transformed into a hexagonal constellation, thereby optimizing its performance and complexity. Regularized constellation points obtained as a result of the above-described operation may ease the complexity of demodulation.

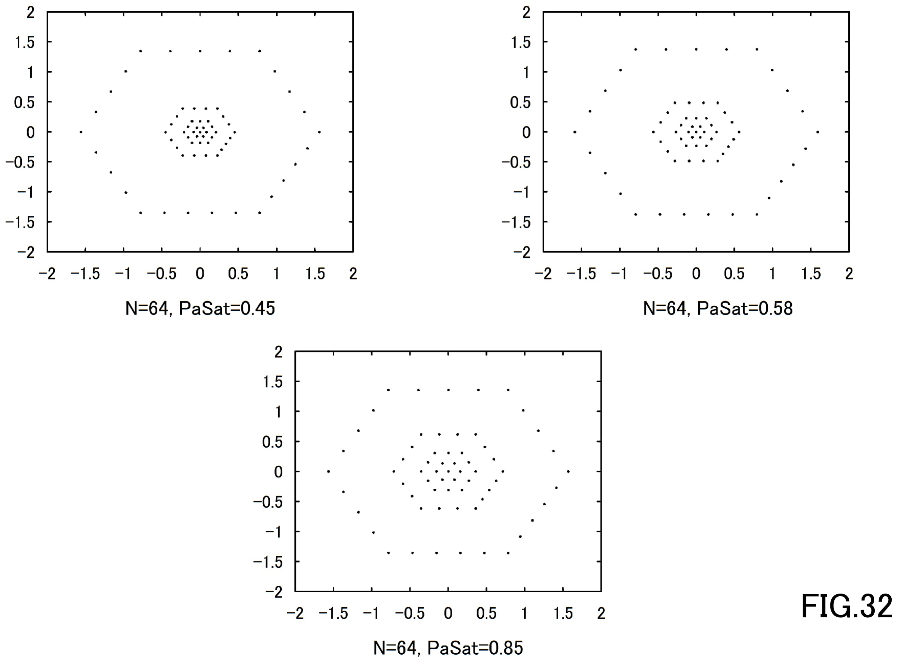

FIG. 32 shows a third example of a set of constellations generated by the system for reducing the impact of PA non-linearities according to an embodiment of the present invention. FIG. 32 shows examples of a hexagonal constellation with N=64 and PaSat=0.45, a hexagonal constellation with N=64 and PaSat=0.58, and a hexagonal constellation with N=64 and PaSat=0.85. Table 19 shows the radius of each hexagonal constellation.

[Table 19]

| References | r1 | r2 | r3 | r4 |
|---|---|---|---|---|
| PaSat=0.45 | 0.082693912 | 0.20632188 | 0.450369383 | 1.552505779 |
| PaSat=0.58 | 0.103286636 | 0.264715466 | 0.560240503 | 1.58596928 |
| PaSat=0.85 | 0.15554579 | 0.355293571 | 0.71072905 | 1.564071281 |

Note that the AM-AM parameters presume a CMOS PA (g = 4.65, s = 0.81, and PaSat = approximately 0.58). Furthermore, by adjusting the values of radius or relative radius, a constellation for GaAs may be obtained (g = 19, s = 0.81, and PaSat = approximately 1.4).

Operation 2-2-1-2:

A bit-to-symbol mapping table may be designed to define a hexagonal constellation that is robust to PA non-linearities.

The bit-to-symbol mapping table may be generated based on Gray mapping, outward from the center, clockwise or counterclockwise. Only one bit may be different between the respective bits of any two neighboring constellation points on a given hexagon.

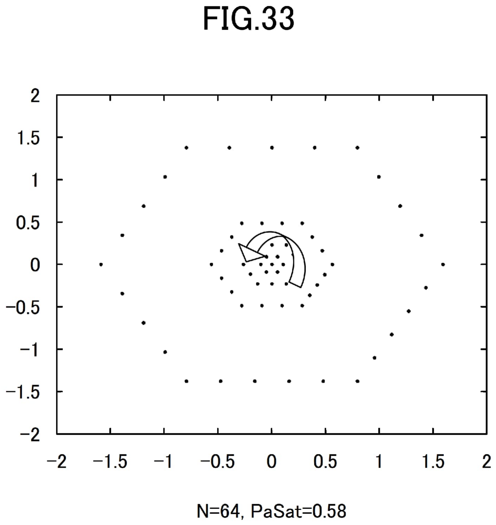

FIG. 33 is a diagram of a fourth example, showing a constellation generated by a system for reducing the impact of PA non-linearities according to an embodiment of the present invention. FIG. 33 shows an example in which the constellation trained for N=64 and PaSat=0.58 is regularized into a hexagonal constellation. As shown in FIG. 33, the bit-to-symbol mapping table may be generated counterclockwise. Table 20 shows an example of a bit-to-symbol mapping table for the regularized 64-point constellation for PaSat=0.58.

[Table 20]

| Index | Bits(*) | Symbol | Index | Bits* | Symbol |
|---|---|---|---|---|---|
| 1 | 000000 | 0.00+0.00i | 33 | 110000 | -0.09337+0.48518i |
| 2 | 000001 | 0.05164-0.08944i | 34 | 110001 | -0.28012+0.48518i |
| 3 | 000011 | 0.10328+0.0i | 35 | 110011 | -0.37349+0.32345i |
| 4 | 000010 | 0.05164+0.08944i | 36 | 110010 | -0.46686+0.16172i |
| 5 | 000110 | -0.05164+0.08944i | 37 | 110110 | -0.56024+0.0i |
| 6 | 000111 | -0.10328+0.0i | 38 | 110111 | -0.46686-0.16172i |
| 7 | 000101 | -0.05164-0.08944i | 39 | 110101 | -1.18948-068674i |
| 8 | 000100 | -0.13235-0.22925i | 40 | 110100 | -0.99123-1.03012i |
| 9 | 001100 | 0.0-0.22925i | 41 | 111100 | -0.79298-1.37349i |
| 10 | 001101 | 0.13235-0.22925i | 42 | 111101 | -0.47579-1.37349i |
| 11 | 001111 | 019853-0.11462i | 43 | 111111 | -0.15859-1.37349i |
| 12 | 001110 | 0.26471+0.0i | 44 | 111110 | 0.15859-1.37349i |
| 13 | 001010 | 0.19853+0.11462i | 45 | 111010 | 0.47579-1.37349i |
| 14 | 001011 | 0.13235+0.22925i | 46 | 111011 | 0.79298-1.37349i |
| 15 | 001001 | 0.0+0.22925i | 47 | 111001 | 0.95158-1.09879i |

(continued)

| Index | Bits(*) | Symbol | Index | Bits* | Symbol |
|---|---|---|---|---|---|
| 16 | 001000 | -0.13235+0.22925i | 48 | 111000 | 1.11018-0.824094 |
| 17 | 011000 | -0.19853+0.11462i | 49 | 101000 | 1.26878-0.54939i |
| 18 | 011001 | -0.26471+0.0i | 50 | 101001 | 1.42737-0.27469i |
| 19 | 011011 | -0.19853-0.11462i | 51 | 101011 | 1.58597+0.0i |
| 20 | 011010 | -0.37349-0.32345i | 52 | 101010 | 1.38772+0.34337i |
| 21 | 011110 | -0.28012-0.48518i | 53 | 101110 | 1.18948+0.68674i |
| 22 | 011111 | -0.09337-0.48518i | 54 | 101111 | 0.99123+1.03012i |
| 23 | 011101 | 0.09337-0.48518i | 55 | 101101 | 0.79298+1.37349i |
| 24 | 011100 | 0.28012-0.48518i | 56 | 101100 | 0.39649+1.37349i |
| 25 | 010100 | 0.35015-0.36388i | 57 | 100100 | 0.0+1.37349i |
| 26 | 010101 | 0.42018-0.24259i | 58 | 100101 | -0.39649+1.37349i |
| 27 | 010111 | 0.49021-0.12129i | 59 | 100111 | -0.79298+1.37349i |
| 28 | 010110 | 0.56024+0.0i | 60 | 100110 | -0.99123+1.03012i |
| 29 | 010010 | 0.46686+0.16172i | 61 | 100010 | -1.18948+0.68674i |
| 30 | 010011 | 0.37349+0.32345i | 62 | 100011 | -1.38772+0.34337i |
| 31 | 010001 | 0.28012+0.48518i | 63 | 100001 | -1.58597+0.0i |
| 32 | 010000 | 0.09337+0.48518i | 64 | 100000 | -1.38772-0.34337i |

"Operation 2-2-2: Design APSK constellations" will be explained below.

A regularized APSK-based constellation may be designed according to the PA saturation point. APSK parameters may be adjusted according to the PA saturation point for improved robustness.

Operation 2-2-2-1:

Regularized APSK constellations may be designed based on parameters L, $R_k$, nk, $\varphi_k$, where k = 1, ... , and L, for varying PA saturation points. Following option 1 or option 2 may be available.

Option 1:

For example, given a hexagonal constellation obtained as a result of operation 2-2-1 described above, the constellation points may be regularized based on the inscribed circle and/or the circumscribed circle of the hexagonal constellation to design an APSK constellation that is robust to PA non-linearities. Depending on whether the hexagon's inscribed circle is used or circumscribed circle is used, two different APSK constellations may be designed. For the original hexagonal constellation with L+1 rings, a point may be inserted at the center of another ring to design an APSK constellations with L rings.

Option 2:

For example, based on a constellation generated by trained AI as a result of operation 2-1 described above, the constellation points may be regularized and designed into 64APSK constellations that are robust to PA non-linearities. In doing so, AI-generated optimization results may be used to determine APSK parameters that are robust to PA non-linearities, including the number of rings, L, the number of points on each ring, $n_k$, where k is 1, ... , and L, the radius or relative radius, $R_k$, where k is 1, ... , and L, and the initial phase of each ring, $\varphi_k$, where k is 1, ... , and L. By regularizing an irregular constellation generated as a result of operation 1-1 and transforming it into an APSK constellation, performance and complexity can be optimized. By performing the above operation, the regularized constellation points may ease the complexity of demodulation.

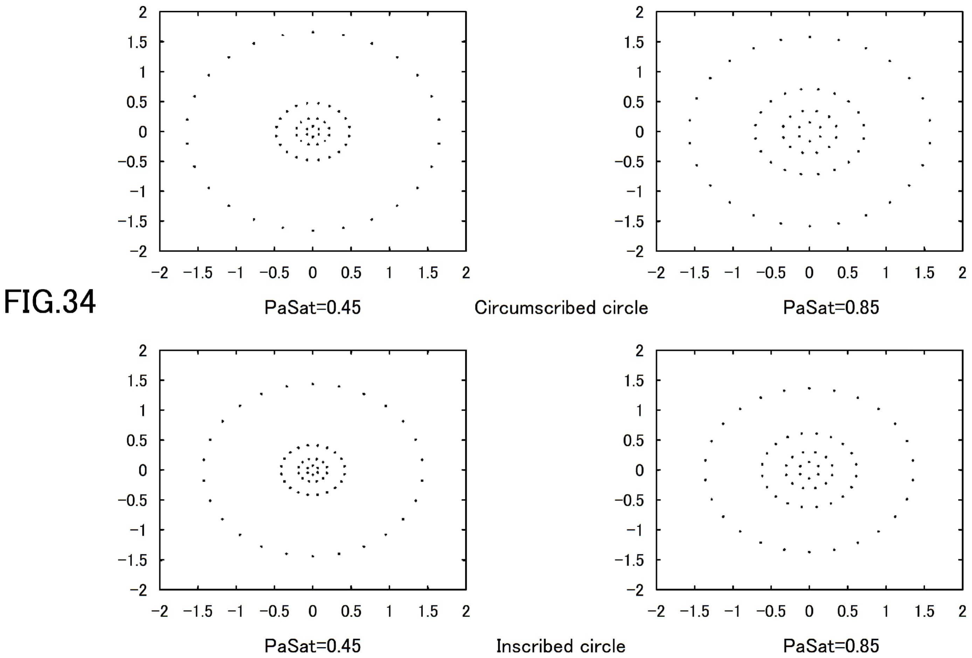

FIG. 34 shows a fifth example of a set of constellations generated by the system for reducing the impact of PA non-linearities according to an embodiment of the present invention. FIG. 34 shows examples of circumscribed circle-based APSK constellations for PaSat = 0.45 and PaSat = 0.85, and inscribed circle-based APSK constellations for PaSat = 0.45 and PaSat = 0.85. Table 21 shows the radius of each APSK constellation.

[Table 21]

| Reference | | r1 | r2 | r3 | r4 |
|---|---|---|---|---|---|
| Circumscribed circle | PaSat=0.45 | 0.087973 | 0.219493 | 0.479121 | 1.65162 |
| | PaSat=0.85 | 0.156522 | 0.357523 | 0.715189 | 1.57389 |
| Inscribed circle | PaSat=0.45 | 0.076187 | 0.190087 | 0.414931 | 1.43034 |
| | PaSat=0.85 | 0.135552 | 0.309624 | 0.619371 | 1.36302 |

Operation 2-2-2-2:

A bit-to-symbol mapping table may be designed to define an APSK constellation that is robust to PA non-linearities.

The bit-to-symbol mapping table may be generated based on Gray mapping, outward from the center, clockwise or counterclockwise. Only one bit may be different between the respective bits of any two neighboring constellation points on a given hexagon.

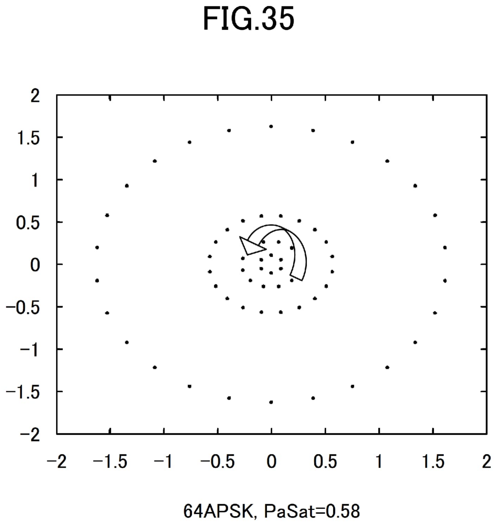

FIG. 35 is a diagram of a sixth example, showing a constellation generated by a system for reducing the impact of PA non-linearities according to an embodiment of the present invention. FIG. 35 shows an example of transforming the constellation trained for N=64 and PaSat=0.58 into a hexagonal constellation, and then regularizing it into an APSK constellation based on the circumscribed circle. As shown in FIG. 35, the bit-to-symbol mapping table may be generated counterclockwise. Table 22 shows an example of a bit-to-symbol mapping table for the regularized 64-point constellation for PaSat=0.58.

[Table 22]

| Index | Bits(*) | Symbol | Index | Bits* | Symbol |
|---|---|---|---|---|---|
| 1 | 000000 | 0.0-0.10583i | 33 | 110000 | 0.0898+0.56699i |
| 2 | 000001 | 0.09165-0.05291i | 34 | 110001 | -0.0898+0.56699i |
| 3 | 000011 | 0.09165+0.05291i | 35 | 110011 | -0.26062+0.51149i |
| 4 | 000010 | 0.0+0.10583i | 36 | 110010 | -0.40592+0.40592i |
| 5 | 000110 | -0.09165+0.05291i | 37 | 110110 | -0.51149+0.26062i |
| 6 | 000111 | -0.09165-0.05291i | 38 | 110111 | -0.56699+0.0898i |
| 7 | 000101 | -0.1918-0.1918i | 39 | 110101 | -1.61325+0.19588i |
| 8 | 000100 | -0.0702-0.262i | 40 | 110100 | -1.61326-0.19588i |
| 9 | 001100 | 0.0702-0.262i | 41 | 111100 | -1.51949-0.57626i |
| 10 | 001101 | 0.1918-0.1918i | 42 | 111101 | -133743-092316i |
| 11 | 001111 | 0.262-0.0702i | 43 | 111111 | -1.07764-1.2164i |
| 12 | 001110 | 0.262+0.0702i | 44 | 111110 | -075522-1.43895i |
| 13 | 001010 | 01918+01918i | 45 | 111010 | -0.38891-1.57788i |
| 14 | 001011 | 0.0702+0.262i | 46 | 111011 | 0.0-1.6251i |
| 15 | 001001 | -0.0702+0.262i | 47 | 111001 | 0.38891-1.57788i |
| 16 | 001000 | -0.1918+0.1918i | 48 | 111000 | 0.75522-1.43895i |
| 17 | 011000 | -0.262+0.0702i | 49 | 101000 | 1.07764-1.2164i |
| 18 | 011001 | -0.262-0.0702i | 50 | 101001 | 1.33743-0.92316i |
| 19 | 011011 | -0.56699-0.0898i | 51 | 101011 | 1.51949-0.57626i |
| 20 | 011010 | -0.51149-0.26062i | 52 | 101010 | 1.61325-0.19588i |

(continued)

| Index | Bits(*) | Symbol | Index | Bits* | Symbol |
|---|---|---|---|---|---|
| 21 | 011110 | -0.40592-0.40592i | 53 | 101110 | 1.61325+0.19588i |
| 22 | 011111 | -0.26062-0.51149i | 54 | 101111 | 1.51949+0.57626i |
| 23 | 011101 | -0.0898-0.56699i | 55 | 101101 | 1.33743+0.92316i |
| 24 | 011100 | 0.0898-0.56699i | 56 | 101100 | 1.07764+1.2164i |
| 25 | 010100 | 0.26062-0.51149i | 57 | 100100 | 0.75522+1.43895i |
| 26 | 010101 | 0.40592-0.40592i | 58 | 100101 | 0.388912+1.57788i |
| 27 | 010111 | 0.51149-0.26062i | 59 | 100111 | 0.0+1.6251i |
| 28 | 010110 | 0.56699-0.0898i | 60 | 100110 | -0.38891+1.57788i |
| 29 | 010010 | 0.56699+0.0898i | 61 | 100010 | -0.75522+1.43895 |
| 30 | 010011 | 0.51149+0.26062i | 62 | 100011 | -1.07764+1.2164i |
| 31 | 010001 | 0.40592+0.40592i | 63 | 100001 | -1.33743+0.92316i |
| 32 | 010000 | 0.26062+0.51149i | 64 | 100000 | -1.51949+0.57626i |

"Operation 2-3: Design MCS tables and related signaling for adaptive modulation to reduce the impact of PA non-linearities" will be explained below.

To design MCS tables that better fit the application scenarios and requirements, it is possible to design MCS tables that include constellations that allow high robustness to PA non-linearities and high SE in non-linear power regions in which the PA operates non-linearly.

"Operation 2-3-1: Design MCS tables including constellations having high robustness to PA non-linearities" will be described.

The constellations generated by the trained NN as a result of operation 2-1 and the regularized constellations generated as a result of operation 2-2 may be included in an MCS table having robustness to PA non-linearities. Note that, hereinafter, constellations generated by the trained NN as a result of operation 2-1 or regularized constellations generated as a result of operation 2-2 (hexagonal constellations and/or APSK constellations) will be referred to as "newPA", without loss of generality.

To overcome the signaling overhead, constellations designed for several PA saturation points may be included in an MCS table. For example, an MCS table may be designed as shown in following option 1 to option 3.

For example, constellations designed for a PA saturation point 0.58 may be defined in an MCS table, according to following option 1. Also, for example, constellations designed for PA saturation points 0.58 and 0.85 may be defined in an MCS table, according to following option 2. Furthermore, for example, constellations designed for PA saturation points 0.45, 0.58, and 0.85 may be defined in an MCS table, according to following option 3.

Option 1:

Some of the MCSs associated with QAM in a five-bit NR MCS table may be replaced with constellations that are robust to PA non-linearities. Some of the MCSs associated with QAM in the NR MCS table may be replaced with MCSs associated with the constellations generated in operation 2-1 or with the regularized constellations (hexagonal and/or APSK constellations) generated as a result of operation 2-2. The replacing may be done according to following examples 1 to 3.

Example 1:

In order to make the number of MCSs in the MCS table to be replaced with new constellations small, constellation for one PA saturation point may be added to the MCS table. For example, 16-point constellations that support MCSs with the modulation order 4, that are used when the PA saturation point is 0.45, and that are referred to as "16newPA" may replace the MCS indices associated with 16QAM in the MCS table. 64-point constellations that support MCSs with the modulation order 6, that are used when the PA saturation point is 0.58, and that are referred to as "64newPA" may replace the MCS indices associated with 64QAM in the MCS table. 256-point constellations that support MCSs with the modulation order 8, that are used when the PA saturation point is 0.85, and that are referred to as "256newPA" may replace the MCS indices associated with 256QAM in the MCS table. Table 23 is an example MCS table designed according to example 1.

[Table 23]

| MCS Index $I_{MCS}$ | Modulation Order $Q_m$ | Target code Rate R x [1024] | Spectral efficiency | MCS Index $I_{MCS}$ | Modulation Order $Q_m$ | Target code Rate R x [1024] | Spectral efficiency |
|---|---|---|---|---|---|---|---|
| 0 | 2 | 120 | 0.2344 | 16 | 4 (16newPA) | 658 | 2.5703 |
| 1 | 2 | 157 | 0.3066 | 17 | 6 | 438 | 2.5664 |
| 2 | 2 | 193 | 0.3770 | 18 | 6 | 466 | 2.7305 |
| 3 | 2 | 251 | 0.4902 | 19 | 6 | 517 | 3.0293 |
| 4 | 2 | 308 | 0.6016 | 20 | 6 | 567 | 3.3223 |
| 5 | 2 | 379 | 0.7402 | 21 | 6 | 616 | 3.6094 |
| 6 | 2 | 449 | 0.8770 | 22 | 6 | 666 | 3.9023 |
| 7 | 2 | 526 | 1.0273 | 23 | 6 (64newPA) | 719 | 4.2129 |
| 8 | 2 | 602 | 1.1758 | 24 | 6 (64newPA) | 772 | 4.5234 |
| 9 | 2 | 679 | 1.3262 | 25 | 6 (64newPA) | 822 | 4.8164 |
| 10 | 4 | 340 | 1.3281 | 26 | 6 (64newPA) | 873 | 5.1152 |
| 11 | 4 | 378 | 1.4766 | 27 | 6 (64newPA) | 910 | 5.3320 |
| 12 | 4 | 434 | 1.6953 | 28 | 6 (64newPA) | 948 | 5.5547 |
| 13 | 4 | 490 | 1.9141 | 29 | 2 | reserved | |
| 14 | 4 (16newPA) | 553 | 2.1602 | 30 | 4 | reserved | |
| 15 | 4 (16newPA) | 616 | 2.4063 | 31 | 6 | reserved | |

Example 2:

Considering that different modulation orders may be applied to different levels or values of PN, the number of constellations to be designed for a given PA saturation point may vary depending on the modulation order. For example, when there are 64-point constellations that support the modulation order 6, constellations that are used when the PA saturation point is 0.58 and referred to as "64newPA-mid", and constellations that are used when the PA saturation point is 0.45 and referred to as "64newPA-high" may replace some of the MCS indices associated with 64QAM in the MCS table. Furthermore, among 256-point constellations that support the modulation order 8, constellations that are used when the PA saturation point is 0.85 and referred to as "256newPA-low" may replace some of the MCS indices associated with 256QAM in the MCS table.

Note that the lower the PaSat value, the greater the impact of PA non-linearities. Accordingly, the PA saturation point 0.85 is "low", the PA saturation point 0.58 is "mid", and the PA saturation point 0.45 is "high".

Example 3:

Some of the indices associated with BPSK, QPSK, or QAM in a conventional MCS table may be replaced with "newPN" constellations without an explicitly PA saturation point. That is, a PA saturation point may be obtained in explicit UE feedback instead of in an MCS indication. The "newPA" constellations may be chosen based on the combination of MCS indication and feedback of a PA saturation point. For example, if an MCS associated with a "16newPA" constellation is indicated and the PA saturation point 0.58 is indicated in feedback, a "16newPA" constellation designed for the PA saturation point 0.58 may be used for transmission.

Option 1 above provides an MCS table that includes MCSs that are robust to PA non-linearities. The total number of MCSs and the overhead of MCS indication do not change.

Option 2:

New MCSs that are associated with constellations that are robust to PA non-linearities and that are generated as a result of operation 2-1 or new MCSs that are associated with regularized APSK constellations generated as a result of operation 2-2 may be added to a five-bit NR MCS table so that an MCS table of more than five bits may be created. That is, MCSs that are associated with constellations generated as a result of operation 1-1 or the regularized APSK constellations generated as a result of operation 1-2 may be added to the NR MCS table. They may be added according to following examples 1 to 3.

Example 1:

In order to increase the number of MCSs to be replaced with new constellations, constellations for two or three PA saturation points may be added to the MCS table. For example, 16-point constellations that support MCSs with the modulation order 4, that are used when the PA saturation point is 0.85, and that are referred to as "16newPA-low", and constellations that are used when the PA saturation point is 0.45 and referred to as "16newPA-high" may be added.

Alternatively, 16-point constellations that support MCSs with the modulation order 4, that are used when the PA saturation point is 0.58, and that are referred to as "16newPA-mid", and constellations that are used when the PA saturation point is 0.45 and referred to as "16newPA-high" may be added. Alternatively, 16-point constellations that support MCSs with the modulation order 4, that are used when the PA saturation point is 0.85, and that are referred to as "16newPA-low", constellations that are used when the PA saturation point is 0.58 and referred to as "16newPA-mid", and constellations that are used when the PA saturation point is 0.45 and referred to as "16newPA-high" may be added.

Furthermore, 64-point constellations that support MCSs with the modulation order 6, that are used when the PA saturation point is 0.85, and that are referred to as "64newPA-low", and constellations that are used when the PA saturation point is 0.45 and referred to as "64newPA-high" may be added. Alternatively, 64-point constellations that support MCSs with the modulation order 6, that are used when the PA saturation point is 0.58, and that are referred to as "64newPA-mid", and constellations that are used when the PA saturation point is 0.45 and referred to as "64newPA-high" may be added. Alternatively, 64-point constellations that support MCSs with the modulation order 6, that are used when the PA saturation point is 0.85, and that are referred to as "64newPA-low", constellations that are used when the PA saturation point is 0.58 and referred to as "64newPA-mid", and constellations that are used when the PA saturation point is 0.45 and referred to as "64newPA-high" may be added.

In addition, 256-point constellations that support MCSs with the modulation order 8, that are used when the PA saturation point is 0.85, and that are referred to as "256newPA-low", and constellations that are used when the PA saturation point is 0.45 and referred to as "256newPA-high" may be added. Alternatively, 256-point constellations that support MCSs with the modulation order 8, that are used when the PA saturation point is 0.58, and that are referred to as "256newPA-mid", and constellations that are used when the PA saturation point is 0.45 and referred to as "256newPA-high" may be added. Alternatively, 256-point constellations that support MCSs with the modulation order 8, that are used when the PA saturation point is 0.85, and that are referred to as "256newPA-low", constellations that are used when the PA saturation point is 0.58 and referred to as "256newPA-mid", and constellations that are used when the PA saturation point is 0.45 and referred to as "256newPA-high" may be added.

Tables 24 and 25 are examples of MCS tables designed according to example 1.

[Table 24]

| MCS Index $I_{MCS}$ | Modulation Order $Q_m$ | Target code Rate R x [1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 32 | 4 (16newPA-low) | 340 | 1.3281 |
| 11 | 4 | 378 | 1.4766 |
| 33 | 4 (16newPA-high) | 378 | 1.4766 |

(continued)

| MCS Index $I_{MCS}$ | Modulation Order $Q_m$ | Target code Rate R x [1024] | Spectral efficiency |
|---|---|---|---|
| 12 | 4 | 434 | 1.6953 |
| 34 | 4 (16newPA-low) | 434 | 1.6953 |
| 35 | 4 (16newPA-high) | 434 | 1.6953 |
| 13 | 4 | 490 | 1.9141 |
| 36 | 4 (16newPA-low) | 490 | 1.9141 |
| 37 | 4 (16newPA-high) | 490 | 1.9141 |
| 14 | 4 | 553 | 2.1602 |
| 38 | 4 (16newPA-low) | 553 | 2.1602 |
| 39 | 4 (16newPA-high) | 553 | 2.1602 |
| 15 | 4 | 616 | 2.4063 |
| 40 | 4 (16newPA-low) | 616 | 2.4063 |
| 41 | 4 (16newPA-high) | 616 | 2.4063 |
| 16 | 4 | 658 | 2.5703 |
| 42 | 4 (16newPA-high) | 658 | 2.5703 |
| 17 | 6 | 438 | 2.5664 |
| 43 | 6 (64newPA-high) | 438 | 2.5664 |
| 18 | 6 | 466 | 2.7305 |
| 44 | 6 (64newPA-low) | 466 | 2.7305 |

[Table 25]

| MCS Index $I_{MCS}$ | Modulation Order $Q_m$ | Target code Rate R x [1024] | Spectral efficiency |
|---|---|---|---|
| 19 | 6 | 517 | 3.0293 |
| 45 | 6 (64newPA-high) | 517 | 3.0293 |
| 20 | 6 | 567 | 3.3223 |
| 46 | 6 (64newPA-low) | 567 | 3.3223 |
| 47 | 6 (64newPA-high) | 567 | 3.3223 |
| 21 | 6 | 616 | 3.6094 |
| 48 | 6 (64newPA-low) | 616 | 3.6094 |
| 49 | 6 (64newPA-high) | 616 | 3.6094 |
| 22 | 6 | 666 | 3.9023 |
| 50 | 6 (64newPA-low) | 666 | 3.9023 |
| 23 | 6 | 719 | 4.2129 |
| 51 | 6 (64newPA-high) | 719 | 4.2129 |
| 24 | 6 | 772 | 4.5234 |
| 52 | 6 (64newPA-low) | 772 | 4.5234 |
| 53 | 6 (64newPA-high) | 772 | 4.5234 |
| 25 | 6 | 822 | 4.8164 |
| 54 | 6 (64newPA-low) | 822 | 4.8164 |
| 55 | 6 (64newPA-high) | 822 | 4.8164 |

(continued)

| MCS Index $I_{MCS}$ | Modulation Order $Q_m$ | Target code Rate R x [1024] | Spectral efficiency |
|---|---|---|---|
| 26 | 6 | 873 | 5.1152 |
| 56 | 6 (64newPA-low) | 873 | 5.1152 |
| 57 | 6 (64newPA-high) | 873 | 5.1152 |
| 27 | 6 | 910 | 5.3320 |
| 58 | 6 (64newPA-low) | 910 | 5.3320 |
| 28 | 6 | 948 | 5.5547 |
| 59 | 6 (64newPA-high) | 948 | 5.5547 |
| 29 | 2 | reserved | |
| 30 | 4 | reserved | |
| 60 | 4 (16newPA-low) | reserved | |
| 61 | 4 (16newPA-high) | reserved | |
| 31 | 6 | reserved | |
| 62 | 6 (64newPA-low) | reserved | |
| 63 | 6 (64newPA-high) | reserved | |

Example 2:

High modulation orders and/or high code rates may be susceptible to the impact of phase noise. Different PA saturation points may be applied to different modulation orders and code rates. For example, 16-point constellations that are used when the PA saturation point is 0.45 and referred to as "16newPA-high" may be added. Likewise, 64-point constellations that are used when the PA saturation point is 0.85 and referred to as "64newPA-low", constellations that are used when the PA saturation point is 0.58 and referred to as "64newPA-mid", and constellations that are used when the PA saturation point is 0.45 and referred to as "64newPA-high" may be added. For example, 256-point constellations that are used when the PA saturation point is 0.85 and referred to as "256newPA-low" may be added as well.

Example 3:

Some of the indices associated with BPSK, QPSK, or QAM in a conventional MCS table may be replaced with "newPN" constellations without explicitly defined PN variance. That is, the PN variance may be obtained in explicit UE feedback instead of in an MCS indication. The "newPN" constellations may be chosen based on the combination of MCS indication and PN variance feedback. For example, if an MCS associated with a "16newPN" constellation is indicated and the PN variance indicated in feedback is 0.02, a "16newPN" constellation for PN variance of 0.02 may be used for transmission.

Above option 2 allows PN-robust MCSs to be added while maintaining existing MCSs.

Option 3:

A new MCS table that includes only constellations that are robust to PA non-linearities may be designed. For example, an MCS table including existing constellations that are robust to PA non-linearities, such as BPSK, pi-2BPSK, pi-4BPSK, and pi-4QPSK constellations, as well as newly designed constellations, may be designed. The MCS table may include MCS indices associated with "16newPA", MCS indices associated with "64newPA", and MCS indices associated with "256newPA". Table 26 is an example MCS table designed according to option 3.

[Table 26]

| MCS Index $I_{MCS}$ | PaSat value | Modulation Order $Q_m$ | Target code Rate R x [1024] | Spectral efficiency |
|---|---|---|---|---|
| 0 | 0.45~0.63 | 4 (16newPA-low) | 340 | 1.3281 |
| 1 | 0.63~0.85 | 4 (16newPA-high) | 340 | 1.3281 |

(continued)

| MCS Index $I_{MCS}$ | PaSat value | Modulation Order $Q_m$ | Target code Rate R x [1024] | Spectral efficiency |
|---|---|---|---|---|
| 2 | 0.45~0.63 | 4 (16newPA-low) | 434 | 1.6953 |
| 3 | 0.63~0.85 | 4 (16newPA-high) | 434 | 1.6953 |
| 4 | 0.45~0.63 | 4 (16newPA-low) | 553 | 2.1602 |
| 5 | 0.63~0.85 | 4 (16newPA-high) | 553 | 2.1602 |
| 6 | 0.45~0.63 | 6 (64newPA-low) | 466 | 2.7305 |
| 7 | 0.63~0.85 | 6 (64newPA-high) | 466 | 2.7305 |
| 8 | 0.45~0.63 | 6 (64newPA-low) | 567 | 3.3223 |
| 9 | 0.63~0.85 | 6 (64newPA-high) | 567 | 3.3223 |
| 10 | 0.45~0.63 | 6 (64newPA-low) | 666 | 3.9023 |
| 11 | 0.63~0.85 | 6 (64newPA-high) | 666 | 3.9023 |
| 12 | 0.45~0.63 | 6 (64newPA-low) | 772 | 4.5234 |
| 13 | 0.63~0.85 | 6 (64newPA-high) | 772 | 4.5234 |
| 14 | 0.45~0.63 | 6 (64newPA-low) | 873 | 5.1152 |
| 15 | 0.63~0.85 | 6 (64newPA-high) | 873 | 5.1152 |

Above option 3 makes it possible to provide an MCS table that includes MCSs that are robust to PA non-linearities. Multiple sets of MCS tables can be designed thus, so that it is possible to make flexible choices among different MCS tables and adjust the cost required for MCS indication.

"Operation 2-3-2: Provide related signaling suitable for use with multiple MCS tables that are robust to PA non-linearities" will be explained below.

A signaling operation may be carried out according to following option 1 to option 3.

Option 1:

When an MCS table is entirely replaced with a newly designed MCS table (e.g., an MCS table designed according to option 1 or option 2 in operation 1-3-1), conventional MCS indication methods and fields (e.g., $I_{MCS}$ in NR), or signaling related to MCS indication in future systems, may be re-used.

Option 2:

When NN parameters are stored in the transmitter and the receiver in advance, constellations may be generated based on the combination of MCS and PA saturation point. The PA saturation point may be indicated in feedback via CSI signaling or new signaling involving the physical layer or a higher layer (e.g. RRC, MAC-CE, UCI, etc.).

Option 3:

If a newly designed MCS table (e.g., an MCS table designed according to option 1, option 2, or option 3 in operation 1-3-1) is to be added to the specifications, the following methods of sending indications may be available.

Option 3-1:

New signaling, $I_{flag_PA}$. may indicate whether or not to use an MCS table that includes "newPA" constellations. The signaling $I_{flag_PA}$ may be sent via RRC, MAC-CE, UCI, or DCI signaling.

Alternative 1 (DL):

The UE may send the MCS index for DL transmission to the BS as feedback. The UE may send an MCS indication of whether or not use an MCS indication ($I_{flag_PA}$) and an MCS index ($I_{MCS}$) that are robust to PA non-linearities, to the BS, in additional feedback. $I_{flag_PA}$ may be 1 if an MCS indication that is robust to PA non-linearities is required; otherwise, $I_{flag_PA}$

may be 0. $I_{flag_PA}$ may be sent via RRC, MAC-CE, or UCI signaling. $I_{MCS}$ feedback may be sent via existing signaling.

The BS may choose the required MCS table and an $I_{MCS}$ based on feedback from the UE. First, if $I_{flag_PA}$ is 1, the BS may choose an MCS table including "newPA" constellations; otherwise, the BS may choose an existing MCS table. Then, the BS may determine the modulation order $Q_m$ and the target code rate R based on $I_{MCS}$ and the MCS table.

Alternative 2 (DL):

The BS may actively choose the MCS for DL transmission. New RRC, MAC-CE, DCI or UCI signaling may be designed to send PA saturation points in feedback from the UE. When a PA saturation point is indicated in feedback from the UE, the BS may choose whether or not to use an MCS table that is robust to PA non-linearities based on the feedback. In the event the PA saturation point is nearly 1, the BS may use an existing MCS table and set $I_{flag_PA}$ to 0. In the event the PA saturation point is less than or equal to 0.85, the BS may choose an MCS table including "newPA" constellations, and set $I_{flag_PA}$ to 1. The BS may send $I_{flag_PA}$ and $I_{MCS}$ to the UE via RRC, MAC-CE, or DCI signaling.

Alternative 1 (UL):

The BS may indicate the MCS for UL transmission to the UE. The BS may send an indication of whether or not to use an MCS indication ($I_{flag_PA}$) and MCS index ($I_{MCS}$) that are robust to PA non-linearities. $I_{flag_PA}$ may be 1 if an MCS indication that is robust to PA non-linearities is required; otherwise, $I_{flag_PA}$ may be 0. $I_{flag_PA}$ may be sent via RRC, MAC-CE, or UCI signaling. $I_{MCS}$ may be transmitted via existing signaling.

The UE may choose the required MCS table and $I_{MCS}$ based on a command from the BS. First, if $I_{flag_PA}$ is 1, the UE may choose an MCS table including "newPA" constellations; otherwise, the UE may choose an existing MCS table. Then, the UE may determine the modulation order $Q_m$ and the target code rate R based on $I_{MCS}$ and the MCS table.

Alternative 2 (UL):

The UE may actively choose the MCS for UL transmission. The UE may choose whether or not to use an MCS table that is robust to PA non-linearities, based on an estimated PA saturation point. If the PA saturation point is nearly 1, the UE may use an existing MCS table and set $I_{flag_PA}$ to 0. If the PA saturation point is less than or equal to 0.85, the UE may choose an MCS table that includes "newPA" constellations, and set $I_{flag_PA}$ to 1. The UE may send $I_{flag_PA}$ and $I_{MCS}$ to the BS via RRC, MAC-CE, or UCI signaling.

Option 3-2:

Existing methods of choosing MCS, as well as the methods of providing signaling disclosed in non-patent literature 16 or designed for future systems, may be re-used. New signaling may be introduced to indicate whether or not to use an MCS table including constellations that are robust to PA non-linearities. The signaling may be sent via higher or lower layer signaling, such as RRC, MAC-CE, UCI, or DCI signaling.

Alternative 1:

The signaling may be explicitly associated with PA non-linearities. For example, in DL transmission, the process described in Section 5.1.3.1 of non-patent literature 16 may be re-used. That is, if "mcs-TableDCI-1-2" is set to "nonlinearPA" or "PA", an MCS table including N "newPA" constellations may be used. The UE may determine the modulation order $Q_m$ and the target code rate R based on $I_{MCS}$ and an MCS table including N "newPA" constellations.

For example, in the case of UL transmission, a higher layer parameter "ifnonlinearPA" or "ifPA" may be added. If "ifnonlinearPA" or "ifPA" is 1, an MCS table including N "newPA" constellations may be used for the PUSCH.

Alternative 2:

The signaling may be implicitly associated with PN. For example, in a system in which a sub-THz band is configured, a newly designed MCS table including constellations that are robust to PA non-linearities may be used. In other systems, an MCS table independent of PA non-linearities may be used.

Here, conventional reference signals and estimation methods may be considered for use to estimate the PA saturation point and/or CSI-related information (e.g., SNR, SINR, CQI, CSI, etc.). In addition, the PN variance and/or CSI-related information for choosing MCS may be estimated using AI.

"Operation 3: Design constellations and adaptive modulation to reduce the impact of PN and PA non-linearities" will be explained below.

"Operation 3-1: Design irregular constellations to reduce the impact of PN and PA non-linearities" will be explained below.

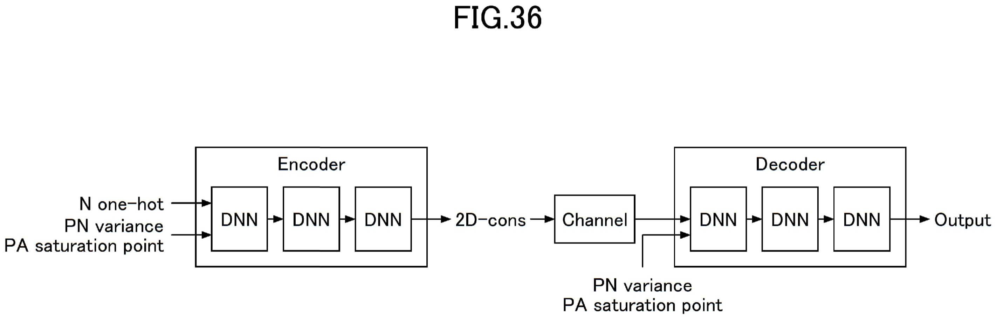

FIG. 36 is a diagram for explaining a third example of a system according to an embodiment of the present invention. As in the system of FIG. 36 where adaptive modulation is carried out based on PN variance and a PA saturation point as inputs, irregular constellations generated by an E2E-trained NN may be used in a system for reducing the impact of PN and a PA that operates in non-linear power regions. The PN variance and PA saturation points may be both defined as one input parameter for the NN.

The basic principle may be as follows. The NN may be trained offline under limited channel conditions. These limited channel conditions may include, for example, a certain SNR range, several levels or values of PN variance, several PA saturation points, etc. Furthermore, the NN may be regularized based on additional channel conditions (such as continuous or finer PN variance levels/values and PA saturation points) to provide a continuous set of modulation constellations to reduce the impact of PN.

For example, the offline training may be carried out as follows. A modulation order, $\log_2 N$, may be set, and an NN architecture may be built. Under the circumstances in which there are L levels/values of PN variance and L PA saturation points, the NN may be trained to learn constellations.

E2E learning may be carried out using the levels or values of PN variance $\sigma^2_{PN}$, PA saturation points PaSat, and N one-hot encoder vectors as inputs. $e_j$ is a j-th one-hot encoder vector, where j = 1, ... , and N, which has a length of N, and in which a j-th value is 1 and the rest of the values are 0. For example, $e_j$ may be associated with a j-th constellation point.

L sets of "PN variance and PA saturation point" may be used in training so as to allow the network to have a generalization ability to provide different constellations for varying levels or values of PN. Note that PN may be taken into account both at the transmitter and at the receiver. The PA saturation point may be taken into account at the transmitter.

The above operation can lead to improvement in performance in an environment in which there are multiple levels or values of PN variance and multiple PA saturation points.

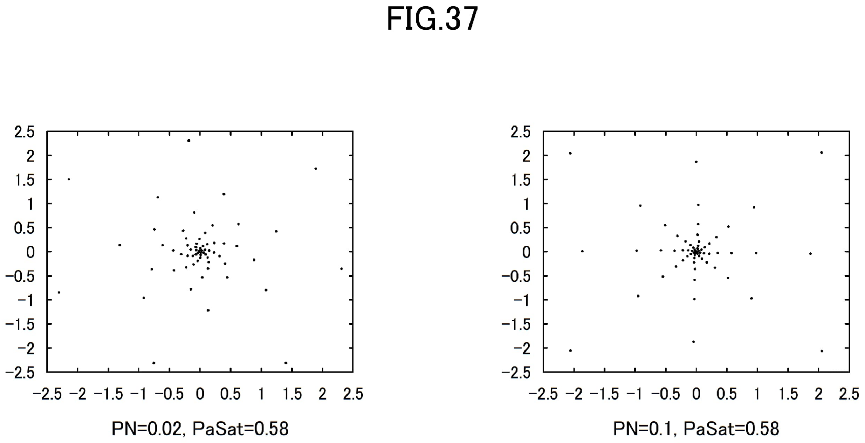

FIG. 37 shows a ninth example of a set of constellations generated by a system according to an embodiment of the present invention. FIG. 37 shows example constellations generated according to operation 3-1, including an example of a constellation trained for PN variance of 0.02 and a PaSat of 0.58 and an example of a constellation trained for PN variance of 0.1 and a PaSat of 0.58.

"Operation 3-1-1: Define NN parameters" will be explained below.

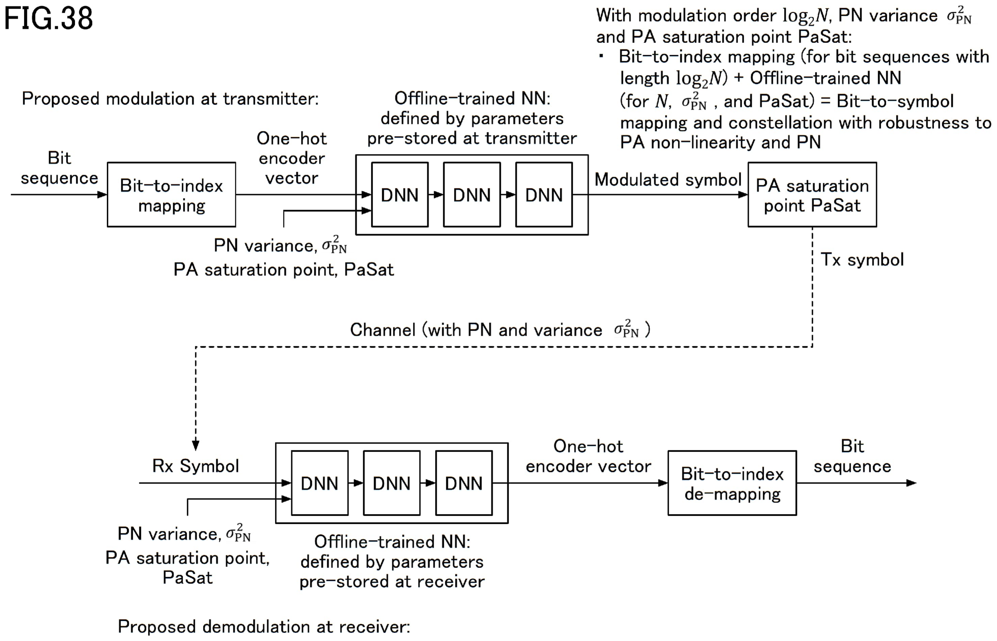

FIG. 38 is a diagram for explaining an example of a system for reducing the impact of phase noise and PA non-linearities according to an embodiment of the present invention. The parameters of offline-trained NNs may include weight, bias, and activation function. These parameters may be defined and used at the transmitter and at the receiver. The NNs may be stored in advance, and constellation points may be generated according to the modulation order and PN variance. In FIG. 22, bit-to-index mapping may be performed before the NN module where bit sequences (to be modulated) are transformed into one-hot encoder vectors for the NN.

This NN module may be trained offline and referred to as "module 1". The module 1 may generate constellation points that are suitable for a given modulation order, a given level or value of PN variance, and a given PA saturation point.

A module 2 may be where bit-to-index mapping takes place. The module 2 may have a function to map bits to symbols for online deployment. The input parameters during the offline training phase may include N one-hot encoder vectors, the channels' PN variance, and the PA saturation point. In an online deployment phase of the communication system, bit sequences may be mapped to corresponding constellation points that were missed in the offline training phase. Then, to generate a corresponding one-hot encoder vector (to be input to the NN), bit-to-index mapping may be performed before the pre-trained NN.

By thus combining bit-to-index mapping and an NN together, bit sequences may be modulated into constellation points that are robust to PN and PA non-linearities.

By virtue of offline training using coarse PN variance levels or values and PA saturation points and the generalizable design of the NN, constellations that are robust to any PN variance and PA saturation point can be generated on a dynamic basis, based on varying levels or values of PN variance and varying PA saturation points in actual systems.

The system of FIG. 38, supporting the modulation order $\log_2 N$, PN variance $\sigma^2_{PN}$, and PA saturation point PaSat, may enable bit-to-index mapping and generate constellations that are robust to PN variance of $\sigma^2_{PN}$ and PA non-linearities by using a bit-to-symbol mapping module that supports a length of $\log_2 N$ and by using offline-trained NNs (for N, $\sigma^2_{PN}$, and PaSat).

As shown in FIG. 38, at the transmitting end, bit sequences may be input to the bit-to-index mapping module, which then may output one-hot encoder vectors. The one-hot encoder vectors may be input to the offline-trained NN, which then may output modulated symbols. The modulated symbols go through a PA with a saturation point PaSat and become transmission symbols. The modulated symbols may be transmitted on a channel from the transmitting end, received at the receiving end, and input to the offline-trained NN provided at the receiving end, and one-hot encoder vectors may be output. The one-hot encoder vectors may be input to a bit-to-index de-mapping module, which then may output bit sequences.

The parameters for the offline-trained NNs may include at least: the number of layers in the NNs; each layer's weight; each layer's bias; and each layer's activation function.

Table 3 is an example table of offline-trained NN parameters for all levels or values of PN variance.

Each NN may mainly have three basic components, namely, weight, bias, and activation function. "Weight" may refer to the intensity of connection between neurons, expressed by weight. When weight is expressed using numerical values, it may indicate the likelihood or proportion of each input element. "Bias" may refer to the setting for grouping samples into correct classes. Bias may be an important parameter in a model and equivalent to adding a constant. "Activation function" may act out non-linear mapping, so that output values from the neurons may be generally limited to a certain range, such as -1 to 1, 0 to 1, etc.

The values of weights and biases may be results obtained from the trained networks and may be saved, for example, in text file format.

Common examples of the activation functions may include, for example, the sigmoid function, the tanh function, the ReLU function, etc.

A normalization layer may be mandatory in the encoder in order to normalize the power of constellations generated by the system.

Assuming a given modulation order, the NN input parameters may include at least one of (1) and (2) below.

(1) One-hot encoder vector ej, where j = 1, ... , and N, which is a vector having a length of N, and in which the j-th value is 1 and the rest of the values are 0.
(2) PN variance.
(3) PA saturation point.

Bit-to-index mapping will be explained below. A bit sequence having a length of $\log_2 N$, when input to the NN, may be transformed into a one-hot encoder vector having a length of N. In doing so, following option 1 to option 4 may be available.

Option 1:

A binary bit sequence may be transformed into a constellation point's decimal index in the NN. This option may be suitable for constellations generated online, for any PN variance and/or PA saturation point. For example, there may be no need to take into account the PN variance and/or PA saturation point during offline training.

Option 2:

Bit-to-index mapping to provide constellation points for the NN may be carried out in a way that satisfies Gray mapping rules. Gray mapping may be expected to improve performance.

Option 3:

Optimal mapping may be carried out such that the error rate is minimized or the throughput/SE is maximized. This can lead to improved decoding performance.

Option 4:

The bit-to-index mapping module may be trained, using constellation points, separately or jointly by the NN or another AI network.

Based on an index j transformed and generated thus, a one-hot encoder vector $e_j$ may be generated and input to the NN.

"Operation 3-1-2: Design B2S mapping tables for irregular constellations" will be explained below.

A bit-to-symbol mapping table may be designed to define an irregular constellation that is robust to PN and PA non-linearities. As done heretofore, the bit-to-symbol mapping table may be defined such that bit sequences are modulated into constellation points. By this means, constellation points and bit-to-symbol mapping can be jointly defined in one table.

The bit-to-symbol mapping table may be generated based on Gray mapping, outward from the center, clockwise or counterclockwise. Only one bit may be different between the respective bits of any two neighboring constellation points having the same amplitude or substantially the same amplitude on one ring.

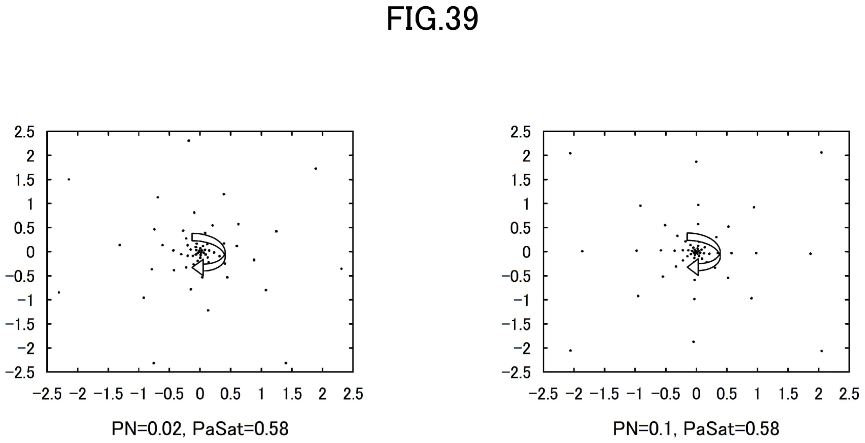

FIG. 39 shows a first example of a set of constellations generated by the system for reducing the impact of PA non-linearities according to an embodiment of the present invention. FIG. 39 shows an example of a 64-point constellation trained for PN variance of 0.02 and a PaSat of 0.58. In FIG. 39, bit-to-symbol mapping is carried out clockwise, in the order shown with the arrows. Table 27 shows an example of a bit-to-symbol mapping table for the 64-point constellation trained for the PN variance of 0.02 and the PaSat of 0.58.

[Table 27]

| Index | Bits (*) | Symbol | Index | Bits* | Symbol |
|---|---|---|---|---|---|
| 1 | 000000 | 0.01224-0.01749i | 33 | 110000 | -0.22395-0.32343i |
| 2 | 000001 | -0.01480+0.01902i | 34 | 110001 | 0.08277+0.38959i |
| 3 | 000011 | 0.02872+0.02592i | 35 | 110011 | 0.39282+0.17348i |
| 4 | 000010 | -0.03282-0.02350i | 36 | 110010 | -0.43424+0.02814i |
| 5 | 000110 | 0.05859-0.01703i | 37 | 110110 | 0.40964-0.24336i |
| 6 | 000111 | -0.05938+0.03472i | 38 | 110111 | -0.27336+0.43660i |
| 7 | 000101 | 0.01204-0.06921i | 39 | 110101 | 0.03675-0.52607i |
| 8 | 000100 | 0.00532+0.07422i | 40 | 110100 | -0.42277-0.38051i |
| 9 | 001100 | -0.06465-0.05851i | 41 | 111100 | 0.20464+0.54748i |
| 10 | 001101 | 0.08163+0.04059i | 42 | 111101 | 0.60152+0.11845i |
| 11 | 001111 | 0.09096-0.05845i | 43 | 111111 | -0.61009+0.13791i |
| 12 | 001110 | -0.06383+0.09855i | 44 | 111110 | 0.44711-0.52847i |
| 13 | 001010 | 0.00457-0.12359i | 45 | 111010 | -0.14727-0.77463i |
| 14 | 001011 | 0.04875+0.11899i | 46 | 111011 | -0.08911+0.81055i |
| 15 | 001001 | -0.11333-0.08449i | 47 | 111001 | 0.62729+0.57270i |
| 16 | 001000 | 0.14910+0.02658i | 48 | 111000 | -0.78794-0.36153i |
| 17 | 011000 | -0.14963+0.04696i | 49 | 101000 | -0.74348+0.46599i |
| 18 | 011001 | 0.12439-011946i | 50 | 101001 | 0.88357-0.16800i |
| 19 | 011011 | -0.05398+0.17057i | 51 | 101011 | 0.13060-1.21277i |
| 20 | 011010 | -0.03834-0.18669i | 52 | 101010 | 0.39161+1.19345i |
| 21 | 011110 | 0.11746+0.15749i | 53 | 101110 | 1.24352+0.42321i |
| 22 | 011111 | -0.19710-0.08206i | 54 | 101111 | -1.31082+0.13982i |
| 23 | 011101 | 0.22827-0.01345i | 55 | 101101 | -0.68796+1.12577i |
| 24 | 011100 | -0.19950+0.13659i | 56 | 101100 | -0.91783-0.95082i |
| 25 | 010100 | 0.13925-0.21203i | 57 | 100100 | 1.07461-0.79002i |
| 26 | 010101 | -0.00818+0.26444i | 58 | 100101 | -0.17939+2.30151i |
| 27 | 010111 | -0.10057-0.25976i | 59 | 100111 | 2.30539-0.34981i |
| 28 | 010110 | 0.23210+0.18244i | 60 | 100110 | -0.75320-2.30538i |
| 29 | 010010 | -0.30358-0.04929i | 61 | 100010 | -2.30333-0.83946i |
| 30 | 010011 | 0.31882-0.08850i | 62 | 100011 | 1.88659+1.72316i |
| 31 | 010001 | -0.22219+0.27495i | 63 | 100001 | -2.13934+1.50049i |
| 32 | 010000 | 0.1 2960-0.34337i | 64 | 100000 | 1.39864-2.30361i |

FIG. 39 shows an example of a 64-point constellation trained for PN variance of 0.1 and a PaSat of 0.58. In FIG. 39, bit-to-symbol mapping is carried out clockwise, in the order shown with the arrows. Table 28 is an example of a bit-to-symbol mapping table for the 64-point constellation trained for the PN variance of 0.1 and the PaSat of 0.58.

[Table 28]

| Index | Bits (*) | Symbol | Index | Bits* | Symbol |
|---|---|---|---|---|---|
| 1 | 000000 | -0.00207+0.00139i | 33 | 110000 | 0.35283-0.02430i |
| 2 | 000001 | 0.01916-000235i | 34 | 110001 | 0.02129+0.35337i |
| 3 | 000011 | -0.01391-0.01811i | 35 | 110011 | -0.35376+0.02183i |
| 4 | 000010 | -0.01235+0.02112i | 36 | 110010 | -0.02184-0.35427i |
| 5 | 000110 | 0.01783-0.03857i | 37 | 110110 | 0.33063+0.30463i |
| 6 | 000111 | 0.03585+0.02289i | 38 | 110111 | -0.33022-0.30563i |
| 7 | 000101 | -0.04256-0.01682i | 39 | 110101 | 0.30690-0.32969i |
| 8 | 000100 | -0.02351+0.04224i | 40 | 110100 | -0.30726+0.33255i |
| 9 | 001100 | 0.06328-0.02101i | 41 | 111100 | 0.03246+0.57550i |
| 10 | 001101 | -0.02202-0.06489i | 42 | 111101 | -0.57650+0.02930i |
| 11 | 001111 | 0.02069+0.06735i | 43 | 111111 | 0.57752-0.02645i |
| 12 | 001110 | -0.07013+0.01910i | 44 | 111110 | -0.02617-0.57979i |
| 13 | 001010 | 0.04628-0.08438i | 45 | 111010 | 0.52733+0.52365i |
| 14 | 001011 | 0.08514+0.04611i | 46 | 111011 | 0.52127-0.53531i |
| 15 | 001001 | -0.08693-0.04828i | 47 | 111001 | -0.54451-0.51244i |
| 16 | 001000 | -0.05025+0.08738i | 48 | 111000 | -0.50884+0.55410i |
| 17 | 011000 | 0.12519-0.03245i | 49 | 101000 | -0.97433+0.02430i |
| 18 | 011001 | -0.03026-0.12739i | 50 | 101001 | 0.03351+0.97754i |
| 19 | 011011 | 0.03111+0.12771i | 51 | 101011 | -0.03029-0.97766i |
| 20 | 011010 | -0.12970+0.03017i | 52 | 101010 | 0.98113-0.02586i |
| 21 | 011110 | 0.13968+0.09369i | 53 | 101110 | -0.94996-0.91437i |
| 22 | 011111 | 0.09309-0.14139i | 54 | 101111 | 0.94154+0.92413i |
| 23 | 011101 | -0.14238-0.09566i | 55 | 101101 | 0.90319-0.96219i |
| 24 | 011100 | -0.09474+0.14438i | 56 | 101100 | -0.91147+0.95819i |
| 25 | 010100 | 0.21426-0.03997i | 57 | 100100 | -1.86092+0.01242i |
| 26 | 010101 | 0.04297+0.21392i | 58 | 100101 | 1.86569-0.04056i |
| 27 | 010111 | -0.03550-0.21663i | 59 | 100111 | -0.04530-1.86621i |
| 28 | 010110 | -0.21797+0.03333i | 60 | 100110 | -0.00026+1.86797i |
| 29 | 010010 | 0.17244-0.21717i | 61 | 100010 | -2.05213-2.04611i |
| 30 | 010011 | 0.21774+0.17276i | 62 | 100011 | -2.05487+2.04396i |
| 31 | 010001 | -0.17494+0.21657i | 63 | 100001 | 2.04692-2.05659i |
| 32 | 010000 | -0.21769-0.17511i | 64 | 100000 | 2.04495+2.06008i |

"Operation 3-2: Design regularized constellations to reduce the impact of PN and PA non-linearities" will be explained below.

APSK-based regularized constellations may be designed based on PN variance and the PA saturation point. For improved robustness, APSK parameters may be adjusted according to PN variance and/or the PA saturation point.

"Operation 3-2-1: Define APSK parameters" will be explained below.

Regularized APSK constellations may be designed based on parameters L, $R_k$, $n_k$, and $\varphi_k$, where k = 1, ... , and L, for varying levels or values of PN variance and/or varying PA saturation points. For example, based on a constellation generated by trained AI as a result of operation 1-1 described above, the constellation points may be regularized and designed into 64APSK constellations that are robust to PN and PA non-linearities. In doing so, AI-generated optimization results may be used to determine APSK parameters that are robust to PN and PA non-linearities, including: the number of rings, L; the number of points on each ring, $n_k$, where k is 1, ... , and L; the radius or relative radius of each ring, $R_k$, where k is 1, ... , and L; and the initial phase of each ring, $\varphi_k$, where k is 1, ... , and L. By regularizing an irregular constellation generated as a result of operation 3-1 and transforming it into an APSK constellation, performance and complexity can be optimized. By performing the above operation, the regularized constellation points may ease the complexity of demodulation.

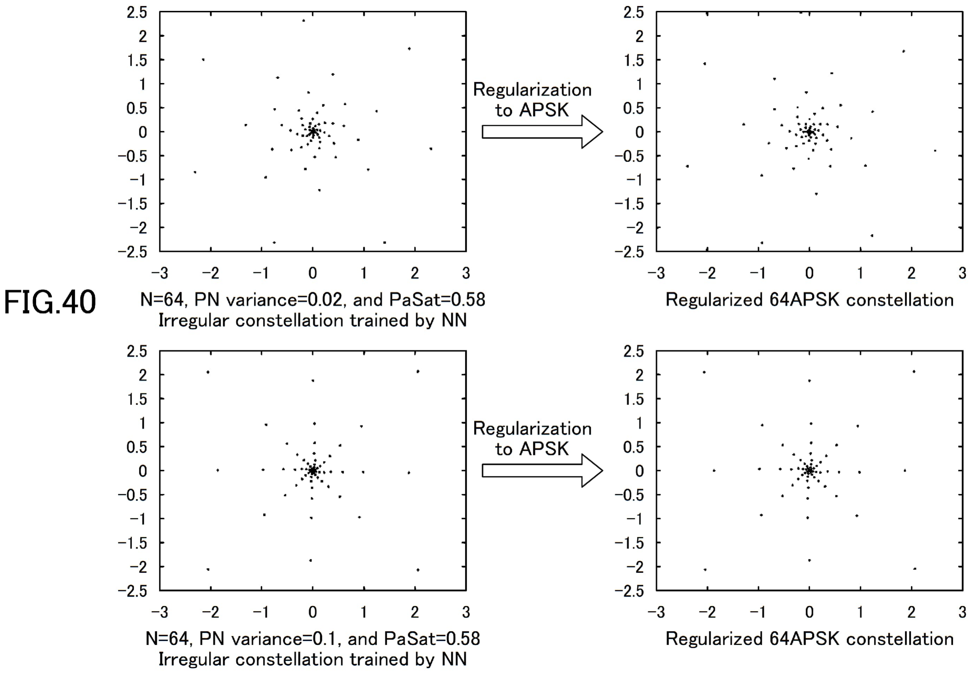

FIG. 40 shows a second example of a constellation generated by the system for reducing the impact of phase noise and PA non-linearities according to an embodiment of the present invention. FIG. 40 shows an example of a 64APSK constellation for PN variance of 0.02 and a PaSat of 0.58, obtained by regularizing a trained constellation generated as a result of operation 3-1. Table 29 shows the radius and initial phase of each ring in the 64APSK constellation for use when the PN variance is 0.02 and PaSat is 0.58, in FIG. 40.

[Table 29]

| **Index of rings** | **1** | **2** | **3** | **4** | **5** |
|---|---|---|---|---|---|
| Radius of each ring | 0.03112 | 0.06861 | 0.11393 | 0.18003 | 0.26714 |
| Initial phase of each ring | 42.066° | 85.9° | 26.439° | 10.108° | 38.169° |
| **Index of rings** | **6** | **7** | **8** | **9** | **10** |
| Radius of each ring | 0.38681 | 0.55868 | 0.82705 | 1.29747 | 2.48289 |
| Initial phase of each ring | 23.828° | 11.14° | 42.395° | 18.795° | 42.408° |

As shown in FIG. 40 and Table 29, the number of rings may be 10, the number of points on each ring may be 4, 4, 7, 7, 7, 7, 7, 7, 7, and 7, and the minimum phase from the original points may be the initial phase of each ring.

FIG. 40 shows an example 64APSK constellation for use when the PN variance is 0.1 and PaSat is 0.58, obtained by regularizing the trained constellation generated as a result of operation 3-1. Table 30 is a table showing the radius and initial phase of each ring in the 64APSK constellation for use when the PN variance is 0.1 and PaSat is 0.58, shown in FIG. 40.

[Table 30]

| **Index of ring** | **1** | **2** | **3** | **4** | **5** | **6** | **7** | **8** |
|---|---|---|---|---|---|---|---|---|
| Radius of each ring | 0.01728 | 004478 | 0.06958 | 0.09832 | 0.13122 | 0.17042 | 0.21904 | 0.27826 |
| Initial phase of each ring | 30.317° | 32.557° | 72.922° | 28.439° | 76.309° | 33.851° | 78.642° | 38.429° |
| **Index of ring** | **9** | **10** | **11** | **12** | **13** | **14** | **15** | **16** |
| Radius of each ring | 0.35426 | 0.45068 | 0.57804 | 0.74759 | 0.97809 | 1.31999 | 1.86546 | 2.90014 |
| Initial phase of each ring | 86.552° | 42.656° | 86.771° | 44.799° | 88.036° | 44.465° | 90.00° | 45.211° |

As shown in FIG. 40 and Table 30, the number of rings may be 16, the number of points on each ring may be 4, and the minimum phase from the original four points may be the initial phase of each ring.

"Operation 3-2-2: Design B2S mapping tables for APSK" will be explained below.

A bit-to-symbol mapping table may be designed to define regularized constellations that are robust to PN and PA non-linearities. Following option 1 or option 2 may be available.

Option 1:

A bit-to-symbol mapping table may be generated using Gray mapping branches. Only one bit may be different between any two neighboring branches, that is, between any two neighboring constellation points' respective bits.

Option 2:

The bit-to-symbol mapping table may be generated based on Gray mapping, outward from the center, clockwise or counterclockwise. Only one bit may be different between the respective bits of any two neighboring constellation points having the same amplitude or substantially the same amplitude on one ring.

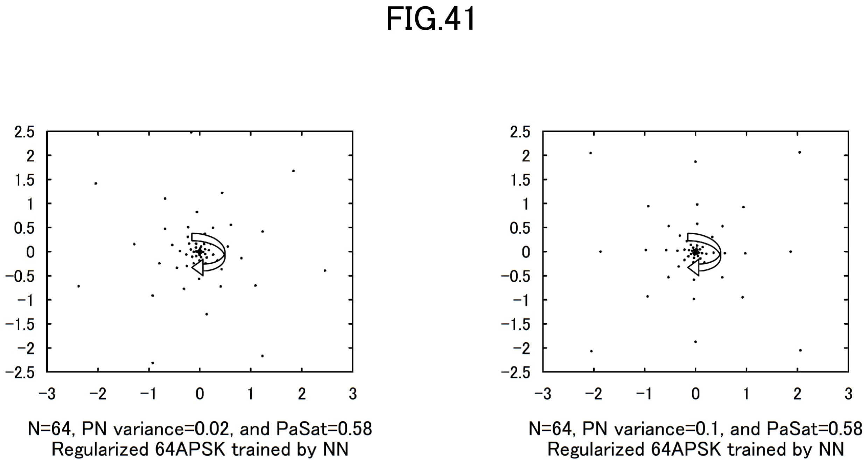

FIG. 41 shows a third example of a set of constellations generated by the system for reducing the impact of phase noise according to an embodiment of the present invention. FIG. 41 shows an example regularized 64-point constellation for PN variance of 0.02 and PaSat of 0.58 according to option 1, and an example regularized 64-point constellation for PN variance of 0.1 and PaSat of 0.58 according to option 2. In FIG. 41, bit-to-symbol mapping may be carried out in the order shown with the arrows. Table 31 shows an example bit-to-symbol mapping table for the regularized 64-point constellation for PN variance of 0.02 and PaSat of 0.58.

[Table 31]

| Index | Bits (*) | Symbol | Index | Bits* | Symbol |
|---|---|---|---|---|---|
| 1 | 000000 | 0.02085-0.02311i | 33 | 110000 | -0.38660+0.01273i |
| 2 | 000001 | -0.02311-0.02085i | 34 | 110001 | 0.07361-0.37974i |
| 3 | 000011 | -0.02085+0.02311i | 35 | 110011 | -0.25100-0.29432i |
| 4 | 000010 | 0.02311+0.02085i | 36 | 110010 | 0.35384+0.15627i |
| 5 | 000110 | 0.06844-0.00491i | 37 | 110110 | -0.22721+0.51039i |
| 6 | 000111 | -0.00491-0.06844i | 38 | 110111 | -0.01674-0.55843i |
| 7 | 000101 | -0.06844+0.00491i | 39 | 110101 | 0.25738+0.49586i |
| 8 | 000100 | 0.00491+0.06844i | 40 | 110100 | 0.54815+0.10794i |
| 9 | 001100 | 0.02675-0.11074i | 41 | 111100 | 0.42616-0.36126i |
| 10 | 001101 | -0.06990-0.08997i | 42 | 111101 | -0.54070+0.14058i |
| 11 | 001111 | -0.07216+0.08817i | 43 | 111111 | -0.44703-0.33509i |
| 12 | 001110 | -0.11392-0.00144i | 44 | 111110 | 0.40773-0.71956i |
| 13 | 001010 | 0.02395+0.11139i | 45 | 111010 | -0.79224-0.23739i |
| 14 | 001011 | 0.10201+0.05073i | 46 | 111011 | -0.05515+0.82521i |
| 15 | 001001 | 0.10326-0.04813i | 47 | 111001 | -0.67956+0.47139i |
| 16 | 001000 | 0.17723+0.03160i | 48 | 111000 | -0.30835-0.76741i |
| 17 | 011000 | -0.00863-017982i | 49 | 101000 | 0.81679-0.12986i |
| 18 | 011001 | -0.07024+0.16576i | 50 | 101001 | 0.61079+0.55763i |
| 19 | 011011 | -0.14597-010537i | 51 | 101011 | -0.68086+1.10447i |
| 20 | 011010 | 0.08580+0.15827i | 52 | 101010 | 0.13422-1.290511 |
| 21 | 011110 | -0.17339+0.04843i | 53 | 101110 | -0.92527-0.90956i |
| 22 | 011111 | 0.13521-0.11887i | 54 | 101111 | 0.43900+1.22095i |
| 23 | 011101 | 0.21002+0.16509i | 55 | 101101 | 1.22829+0.41802i |
| 24 | 011100 | -0.20768+0.16802i | 56 | 101100 | 1.09265-0.69968i |
| 25 | 010100 | -0.26085-0.05761i | 57 | 100100 | -1.28802+0.15631i |
| 26 | 010101 | 0.00188+0.26713i | 58 | 100101 | 1.83327+1.67448i |
| 27 | 010111 | 0.26002-0.06127i | 59 | 100111 | -2.04043+1.41470i |
| 28 | 010110 | 0.11421-0.24149i | 60 | 100110 | -2.37825-0.71322i |
| 29 | 010010 | -0.11760-0.23987i | 61 | 100010 | 1.22455-2.15991i |
| 30 | 010011 | -0.23109+0.31019i | 62 | 100011 | 2.45218-0.38929i |
| 31 | 010001 | 0.34279-0.17921i | 63 | 100001 | -0.16613+2.47733i |
| 32 | 010000 | 0.09844+0.37407i | 64 | 100000 | -0.92519-2.30408i |

Table 32 shows an example bit-to-symbol mapping table for the regularized 64-point constellation for PN variance of 0.1 and PaSat of 0.58.

[Table 32]

| Index | Bits (*) | Symbol | Index | Bits* | Symbol |
|---|---|---|---|---|---|
| 1 | 000000 | -0.00872+0.01491i | 33 | 110000 | 0.35362-0.02131i |
| 2 | 000001 | 001491+0.00872i | 34 | 110001 | -0.02131-0.35362i |
| 3 | 000011 | 0.00872-0.01491i | 35 | 110011 | -0.35362+0.02131i |
| 4 | 000010 | -0.01491-0.00872i | 36 | 110010 | 0.02131+0.35362i |
| 5 | 000110 | 0.02410-0.03774i | 37 | 110110 | 0.30538-0.33145i |
| 6 | 000111 | -0.03774-0.02410i | 38 | 110111 | -0.33145-0.30538i |
| 7 | 000101 | -0.02410+0.03774i | 39 | 110101 | -0.30538+0.33145i |
| 8 | 000100 | 0.03774+0.02410i | 40 | 110100 | 0.33145+0.30538i |
| 9 | 001100 | 0.06652-0.02044i | 41 | 111100 | 0.57712-0.03256i |
| 10 | 001101 | -0.06652+0.02044i | 42 | 111101 | -0.03256-0.57712i |
| 11 | 001111 | 0.02044+0.06652i | 43 | 111111 | -0.57712+0.03256i |
| 12 | 001110 | -0.02044-0.06652i | 44 | 111110 | 0.03256+0.57712i |
| 13 | 001010 | -0.08646-0.04682i | 45 | 111010 | -0.53048-0.52677i |
| 14 | 001011 | -0.04682+0.08646i | 46 | 111011 | -0.52677+0.53048i |
| 15 | 001001 | 0.08646+0.04682i | 47 | 111001 | 0.53048+0.52677i |
| 16 | 001000 | 0.04682-0.08646i | 48 | 111000 | 0.52677-0.53048i |
| 17 | 011000 | 0.12749-0.03106i | 49 | 101000 | 0.97751-0.03352i |
| 18 | 011001 | -0.03106-012749i | 50 | 101001 | -0.03352-0.97751i |
| 19 | 011011 | -0.12749+0.03106i | 51 | 101011 | -0.97751+0.03352i |
| 20 | 011010 | 0.03106+0.12749i | 52 | 101010 | 0.03352+0.97751i |
| 21 | 011110 | 0.09493-0.14153i | 53 | 101110 | -0.92461+0.94204i |
| 22 | 011111 | 0.14153+0.09493i | 54 | 101111 | 0.94204+0.92461i |
| 23 | 011101 | -0.14153-0.09493i | 55 | 101101 | 0.92461-0.94204i |
| 24 | 011100 | -0.09493+0.14153i | 56 | 101100 | -0.94204-0.92461i |
| 25 | 010100 | 0.21475-0.04314i | 57 | 100100 | 1.86546-0.00000i |
| 26 | 010101 | -0.04314-0.21475i | 58 | 100101 | -0.0-1.86546i |
| 27 | 010111 | -0.21475+0.04314i | 59 | 100111 | -1.86546+0.0i |
| 28 | 010110 | 0.04314+0.21475i | 60 | 100110 | 0.0+1.86546i |
| 29 | 010010 | 0.17295-0.21798i | 61 | 100010 | 2.05825-2.04314i |
| 30 | 010011 | -0.21798-0.17295i | 62 | 100011 | -2.04314-2.05825i |
| 31 | 010001 | -0.17295+0.21798i | 63 | 100001 | -2.05825+2.04314i |
| 32 | 010000 | 0.21798+0.17295i | 64 | 100000 | 2.04314+2.05825i |

"Operation 3-3: Design MCS tables and related signaling for adaptive modulation to reduce the impact of PN and PA non-linearities" will be explained below.

To design MCS tables that better fit the application scenarios and requirements, it is possible to design MCS tables that include constellations that allow high robustness to PN and PA non-linearities and high SE.

"Operation 3-3-1: Design MCS tables including constellations that are robust to PN and PA non-linearities" will be explained below.

The constellations generated by the trained NN as a result of operation 3-1 or the regularized APSK constellations generated as a result of operation 3-2 may be included in a PN-robust MCS table. Note that, hereinafter, the constellations generated by the trained NN as a result of operation 3-1 or the regularized APSK constellations generated as a result of operation 3-2 will be referred to as "newPNPA", without loss of generality.

To overcome the signaling overhead, constellations designed for several levels or values of PN variance and several PA saturation points may be included in an MCS table. For example, an MCS table may be designed according to following option 1 to option 3.

For example, constellations for use when the combination "PN variance and PA saturation point" is "0.04 and 0.58" may be defined in an MCS table, according to following option 1. Also, constellations for use when the combination "PN variance and PA saturation point" is "0.04 and 0.58" or "0.08 and 0.45" may be defined in an MCS table, according to following option 2. Furthermore, constellations for use when the combination "PN variance and PA saturation point" is "0.02 and 0.85", "0.04 and 0.58", or "0.08 and 0.45" may be defined in an MCS table according to following option 3.

Option 1:

Some of the MCSs associated with QAM in a five-bit NR MCS table may be replaced with constellations that are robust to PN and PA non-linearities. Some of the MCSs associated with QAM in the NR MCS table may be replaced with MCSs that support the constellations generated as a result of operation 1-1 or the regularized APSK constellations generated as a result of operation 1-2. The replacing may be done according to following examples 1 to 3.

Example 1:

In order to make the number of MCSs in the MCS table to be replaced with new constellations small, constellations designed for one PN variance (that is, one level or value of PN variance) may be added to the MCS table. In doing so, for example, 16-point constellations that support MCSs with the modulation order 4, that are used when the combination "PN variance and PA saturation point" is "0.08 and 0.45", and that are referred to as "16newPNPA" may replace the MCS indices associated with 16QAM in the MCS table. 64-point constellations that support MCSs with the modulation order 6, that are used when the combination "PN variance and PA saturation point" is "0.04 and 0.58", and that are referred to as "64newPNPA" may replace the MCS indices associated with 64QAM in the MCS table. 256-point constellations that support MCSs with the modulation order 8, that are used when the combination "PN variance and PA saturation point" is "0.02 and 0.85", and that are referred to as "256newPNPA" may replace the MCS indices associated with 256QAM in the MCS table. Table 33 is an example MCS table designed according to example 1.

[Table 33]

| MCS Index $I_{MCS}$ | Modulation Order $Q_m$ | Target code Rate R x [1024] | Spectral efficiency | MCS Index $I_{MCS}$ | Modulation Order $Q_m$ | Target code Rate R x [1024] | Spectral efficiency |
|---|---|---|---|---|---|---|---|
| 0 | 2 | 120 | 0.2344 | 16 | 6 (64newPNPA) | 719 | 4.2129 |
| 1 | 2 | 193 | 0.3770 | 17 | 6 (64newPNPA) | 772 | 4.5234 |
| 2 | 2 | 308 | 0.6016 | 18 | 6 (64newPNPA) | 822 | 4.8164 |
| 3 | 2 | 449 | 0.8770 | 19 | 6 (64newPNPA) | 873 | 5.1152 |
| 4 | 2 | 602 | 1.1758 | 20 | 8 | 682.5 | 5.3320 |
| 5 | 4 | 378 | 1.4766 | 21 | 8 | 711 | 5.5547 |
| 6 | 4 | 434 | 1.6953 | 22 | 8 | 754 | 5.8906 |
| 7 | 4 | 490 | 1.9141 | 23 | 8 (256newPNPA) | 797 | 6.2266 |
| 8 | 4 (16newPNPA) | 553 | 2.1602 | 24 | 8 (256newPNPA) | 841 | 6.5703 |
| 9 | 4 (16newPNPA) | 616 | 2.4063 | 25 | 8 (256newPNPA) | 885 | 6.9141 |
| 10 | 4 (16newPNPA) | 658 | 2.5703 | 26 | 8 (256newPNPA) | 916.5 | 7.1602 |
| 11 | 6 | 466 | 2.7305 | 27 | 8 (256newPNPA) | 948 | 7.4063 |
| 12 | 6 | 517 | 3.0293 | 28 | 2 | reserved | |
| 13 | 6 | 567 | 3.3223 | 29 | 4 | reserved | |
| 14 | 6 | 616 | 3.6094 | 30 | 6 | reserved | |
| 15 | 6 | 666 | 3.9023 | 31 | 8 | reserved | |

Example 2:

Considering that different modulation orders may be applied to different levels or values of PN and PA non-linearities, the number of constellations to be designed for a given level or value of PN variance and a given PA saturation point may vary depending on the modulation order. For example, for 64-point constellations that support the modulation order 6, constellations that are used when the combination "PN variance and PA saturation point" is "0.04 and 0.58" and referred to as "64newPNPA-mid", and constellations that are used when the combination "PN variance and PA saturation point" is "0.08 and 0.45" and referred to as "64newPNPA-high" may replace some of the MCS indices associated with 64QAM in the MCS table. On the other hand, where there are 256-point constellations that support the modulation order 8, constellations that are used when the combination "PN variance and PA saturation point" is "0.02 and 0.85" and referred to as "256newPNPA-low" may replace some of the MCS indices associated with 256QAM in the MCS table.

Example 3:

Some of the indices associated with BPSK, QPSK, or QAM in a conventional MCS table may be replaced with "newPNPA" constellations without explicitly defined PN variance or PA saturation point. That is, the PN variance and PA saturation point may be obtained in explicit UE feedback instead of in an MCS indication. The "newPNPA" constellations may be chosen based on the combination of: MCS indication; and feedback of PN variance and PA saturation point.

Option 1 above provides an MCS table that includes PN-robust MCSs. The total number of MCSs and the overhead of MCS indication do not change.

Option 2:

New MCSs that are associated with constellations generated as a result of operation 3-1 and that are robust to PN and PA non-linearities, or new MCSs that are associated with regularized APSK constellations generated as a result of operation 3-2 may be added to a five-bit NR MCS table so that an MCS table of more than five bits may be created. That is, MCSs that are associated with constellations generated as a result of operation 3-1 or the regularized APSK constellations generated as a result of operation 3-2 may be added to the NR MCS table. They may be added according to following examples 1 to 3.

Example 1:

In order to increase the number of MCSs to be replaced with new constellations, constellations for two or three levels or values of PN variance and PA saturation points may be added to the MCS table. 16-point constellations that support MCSs with the modulation order 4, that are used when the combination "PN variance and PA saturation point" is "0.02 and 0.85", and that are referred to as "16newPNPA-low", and constellations that are used when the combination "PN variance and PA saturation point" is "0.08 and 0.45" and referred to as "16newPNPA-high" may be added.

Alternatively, 16-point constellations that support MCSs with the modulation order 4, that are used when the combination "PN variance and PA saturation point" is "0.04 and 0.58" and referred to as "16newPNPA-mid", and constellations that are used when the combination "PN variance and PA saturation point" is "0.08 and 0.45" and referred to as "16newPNPA-high" may be added. Alternatively, 16-point constellations that support MCSs with the modulation order 4, that are used when the combination "PN variance and PA saturation point" is "0.02 and 0.85", and that are referred to as "16newPNPA-low", constellations that are used when the combination "PN variance and PA saturation point" is "0.04 and 0.58" and referred to as "16newPNPA-mid", and constellations that are used when the combination "PN variance and PA saturation point" is "0.08 and 0.45" and referred to as "16newPNPA-high" may be added.

64-point constellations that support MCSs with the modulation order 6, that are used when the combination "PN variance and PA saturation point" is "0.02 and 0.85", and that are referred to as "64newPNPA-low", and constellations that are used when the combination "PN variance and PA saturation point" is "0.08 and 0.45" and referred to as "64newPNPA-high" may be added. Alternatively, 64-point constellations that support MCSs with the modulation order 6, that are used when the combination "PN variance and PA saturation point" is "0.04 and 0.58", and that are referred to as "64newPNPA-mid", and constellations that are used when the combination "PN variance and PA saturation point" is "0.08 and 0.45" and referred to as "64newPNPA-high" may be added. Alternatively, 64-point constellations that support MCSs with the modulation order 6, that are used when the combination "PN variance and PA saturation point" is "0.02 and 0.85", and that are referred to as "64newPNPA-low", constellations that are used when the combination "PN variance and PA saturation point" is "0.04 and 0.58" and referred to as "64newPNPA-mid", and constellations that are used when the combination "PN variance and PA saturation point" is "0.08 and 0.45" and referred to as "64newPNPA-high" may be added.

Alternatively, 256-point constellations that support MCSs with the modulation order 8, that are used when the combination "PN variance and PA saturation point" is "0.02 and 0.85", and that are referred to as "256newPNPA-low", and constellations that are used when the combination "PN variance and PA saturation point" is "0.08 and 0.45" and referred to as "256newPNPA-high" may be added. Alternatively, 256-point constellations that support MCSs with the modulation order 8, that are used when the combination "PN variance and PA saturation point" is "0.04 and 0.58", and that are referred to as "256newPNPA-mid", and constellations that are used when the combination "PN variance and PA saturation point" is "0.08 and 0.45" and referred to as "256newPNPA-high" may be added. Alternatively, 256-point constellations that support MCSs with the modulation order 8, that are used when the combination "PN variance and PA saturation point" is "0.02 and 0.85", and that are referred to as "256newPNPA-low", constellations that are used when the combination "PN variance and PA saturation point" is "0.04 and 0.58" and referred to as "256newPNPA-mid", and constellations that are used when the combination "PN variance and PA saturation point" is "0.08 and 0.45" and referred to as "256newPNPA-high" may be added.

Table 34 and Table 35 are examples of MCS tables designed according to example 1.

[Table 34]

| MCS Index $I_{Mcs}$ | Modulation Order $Q_m$ | Target code Rate R x [1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 32 | 4 (16newPNPA-low) | 378 | 1.4766 |
| 6 | 4 | 434 | 1.6953 |
| 33 | 4 (16newPNPA-high) | 434 | 1.6953 |
| 7 | 4 | 490 | 1.9141 |
| 34 | 4 (16newPNPA-low) | 490 | 1.9141 |
| 8 | 4 | 553 | 2.1602 |
| 35 | 4 (16newPNPA-high) | 553 | 2.1602 |
| 9 | 4 | 616 | 2.4063 |
| 36 | 4 (16newPNPA-low) | 616 | 2.4063 |
| 10 | 4 | 658 | 2.5703 |
| 37 | 4 (16newPNPA-high) | 658 | 2.5703 |
| 11 | 6 | 466 | 2.7305 |
| 38 | 6 (64newPNPA-low) | 466 | 2.7305 |
| 39 | 6 (64newPNPA-high) | 466 | 2.7305 |
| 12 | 6 | 517 | 3.0293 |
| 40 | 6 (64newPNPA-low) | 517 | 3.0293 |
| 13 | 6 | 567 | 3.3223 |
| 41 | 6 (64newPNPA-high) | 567 | 3.3223 |
| 14 | 6 | 616 | 3.6094 |
| 42 | 6 (64newPNPA-low) | 616 | 3.6094 |
| 15 | 6 | 666 | 3.9023 |
| 43 | 6 (64newPNPA-high) | 666 | 3.9023 |
| 16 | 6 | 719 | 4.2129 |
| 44 | 6 (64newPNPA-low) | 719 | 4.2129 |
| 17 | 6 | 772 | 4.5234 |

(continued)

| MCS Index $I_{Mcs}$ | Modulation Order $Q_m$ | Target code Rate R x [1024] | Spectral efficiency |
|---|---|---|---|
| 45 | 6 (64newPNPA-high) | 772 | 4.5234 |

[Table 35]

| MCS Index $I_{Mcs}$ | Modulation Order $Q_m$ | Target code Rate R x [1024] | Spectral efficiency |
|---|---|---|---|
| 18 | 6 | 822 | 4.8164 |
| 46 | 6 (64newPNPA-low) | 822 | 4.8164 |
| 19 | 6 | 873 | 5.1152 |
| 47 | 6 (64newPNPA-high) | 873 | 5.1152 |
| 20 | 8 | 682.5 | 5.3320 |
| 48 | 8 (256newPNPA-low) | 682.5 | 5.3320 |
| 49 | 8 (256newPNPA-high) | 682.5 | 5.3320 |
| 21 | 8 | 711 | 5.5547 |
| 50 | 8 (256newPNPA-low) | 711 | 5.5547 |
| 22 | 8 | 754 | 5.8906 |
| 51 | 8 (256newPNPA-high) | 754 | 5.8906 |
| 23 | 8 | 797 | 6.2266 |
| 52 | 8 (256newPNPA-low) | 797 | 6.2266 |
| 24 | 8 | 841 | 6.5703 |
| 53 | 8 (256newPNPA-high) | 841 | 6.5703 |
| 25 | 8 | 885 | 6.9141 |
| 54 | 8 (256newPNPA-low) | 885 | 6.9141 |
| 26 | 8 | 916.5 | 7.1602 |
| 55 | 8 (256newPNPA-high) | 916.5 | 7.1602 |
| 27 | 8 | 948 | 7.4063 |
| 56 | 8 (256newPNPA-low) | 948 | 7.4063 |
| 57 | 8 (256newPNPA-high) | 948 | 7.4063 |
| 28 | 2 | reserved | |
| 29 | 4 | reserved | |
| 58 | 4 (16newPNPA-low) | reserved | |
| 59 | 4 (16newPNPA-high) | reserved | |
| 30 | 6 | reserved | |
| 60 | 6 (64newPNPA-low) | reserved | |
| 61 | 6 (64newPNPA-high) | reserved | |
| 31 | 8 | reserved | |
| 62 | 8 (256newPNPA-low) | reserved | |
| 63 | 8 (256newPNPA-high) | reserved | |

Example 2:

High modulation orders and/or high code rates may be susceptible to the impact of phase noise and PA non-linearities. Different levels or values of PN variance and different PA saturation points may be applied to different modulation orders and code rates. For example, 16-point constellations that are used when the combination "PN variance and PA saturation point" is "0.08 and 0.45" and referred to as "16newPNPA-high" may be added. For example, 64-point constellations that are used when the combination "PN variance and PA saturation point" is "0.02 and 0.85" and referred to as "64newPNPA-low", constellations that are used when the combination "PN variance and PA saturation point" is "0.04 and 0.58" and referred to as "64newPNPA-mid", and constellations that are used when the combination "PN variance and PA saturation point" is "0.08 and 0.45" and referred to as "64newPNPA-high" may be added. For example, 256-point constellations that are used when the combination "PN variance and PA saturation point" is "0.02 and 0.85" and referred to as "256newPNPA-low" may be added.

Example 3:

Some of the indices associated with BPSK, QPSK, or QAM in a conventional MCS table may be replaced with "newPNPA" constellations without explicitly defined PN variance or PA saturation point. That is, the PN variance and PA saturation point may be obtained in explicit UE feedback instead of in an MCS indication. The "newPNPA" constellations may be chosen based on the combination of: MCS indication; and feedback of PN variance and PA saturation point.

Above option 2 allows MCSs that are robust to PN and PA non-linearities to be added while maintaining existing MCSs.

Option 3:

A new MCS table that includes only constellations that are robust to PN and PA non-linearities may be designed. For example, an MCS table including existing constellations that are robust to PN and PA non-linearities, such as BPSK, pi-2BPSK, pi-4BPSK, and pi-4QPSK constellations, as well as newly designed constellations, may be designed. The MCS table may include MCS indices associated with "16newPNPA", MCS indices associated with "64newPNPA", and MCS indices associated with "256newPNPA". Table 36 is an example MCS table designed according to option 3.

[Table 36]

| MCS Index $I_{MCS}$ | Modulation Order $Q_m$ | Target code Rate R x [1024] | Spectral efficiency |
|---|---|---|---|
| 0 | 4 (16newPNPA-mid) | 340 | 1.3281 |
| 1 | 4 (16newPNPA-high) | 340 | 1.3281 |
| 2 | 4 (16newPNPA-mid) | 434 | 1.6953 |
| 3 | 4 (16newPNPA-high) | 434 | 1.6953 |
| 4 | 4 (16newPNPA-mid) | 553 | 2.1602 |
| 5 | 4 (16newPNPA-high) | 553 | 2.1602 |
| 6 | 6 (64newPNPA-low) | 466 | 2.7305 |
| 7 | 6 (64newPNPA-high) | 466 | 2.7305 |
| 8 | 6 (64newPNPA-low) | 567 | 3.3223 |
| 9 | 6 (64newPNPA-high) | 567 | 3.3223 |
| 10 | 6 (64newPNPA-low) | 666 | 3.9023 |
| 11 | 6 (64newPNPA-high) | 666 | 3.9023 |
| 12 | 6 (64newPNPA-low) | 772 | 4.5234 |
| 13 | 6 (64newPNPA-high) | 772 | 4.5234 |
| 14 | 6 (64newPNPA-low) | 873 | 5.1152 |
| 15 | 6 (64newPNPA-high) | 873 | 5.1152 |

Above option 3 makes it possible to provide an MCS table that includes MCSs that are robust to PN. Multiple sets of MCS tables can be designed thus, so that it is possible to make flexible choices among different MCS tables and adjust the cost required for MCS indication.

"Operation 3-3-2: Provide related signaling suitable for use with multiple MCS tables that are robust to PN" will be explained below.

A signaling operation may be carried out according to following option 1 to option 4.

Option 1:

When an MCS table is entirely replaced with a newly designed MCS table (e.g., an MCS table designed according to option 1 or option 2 in operation 3-3-1), conventional MCS indication methods and fields (e.g., $I_{MCS}$ in NR), or signaling related to MCS indication in future systems, may be re-used.

Option 2:

When NN parameters are stored in the transmitter and the receiver in advance, constellations may be generated based on the combination of MCS, PN variance, and PA saturation point. The PN variance and/or PA saturation point may be indicated in feedback via CSI signaling or new signaling involving the physical layer or a higher layer (e.g. RRC, MAC-CE, UCI, etc.).

Option 3:

If a newly designed MCS table (e.g., an MCS table designed according to option 1, option 2, or option 3 in operation 3-3-1) is to be added to the specifications, the following methods of sending indications may be available.

Option 3-1:

New signaling, $I_{flag_PNPA}$, may indicate whether or not to use an MCS table that includes "newPNPA" constellations. The signaling $I_{flag_PNPA}$ may be sent via RRC, MAC-CE, UCI, or DCI signaling.

Alternative 1 (DL):

The UE may send the MCS index for DL transmission to the BS as feedback. The UE may send an MCS indication of whether or not use an MCS indication ($I_{flag_PNPA}$) and an MCS index ($I_{MCS}$) that are robust to PN and PA non-linearities, to the BS, in additional feedback. $I_{flag_PNPA}$ may be 1 if an MCS indication that is robust to PN and PA non-linearities is required; otherwise, $I_{flag_PNPA}$ may be 0. $I_{flag_PNPA}$ may be sent via RRC, MAC-CE, or UCI signaling. $I_{MCS}$ feedback may be sent via existing signaling.

The BS may choose the required MCS table and an $I_{MCS}$ based on feedback from the UE. First, if $I_{flag_PNPA}$ is 1, the BS may choose an MCS table including "newPNPA" constellations; otherwise, the BS may choose an existing MCS table. Then, the BS may determine the modulation order $Q_m$ and the target code rate R based on $I_{MCS}$ and the MCS table.

Alternative 2 (DL):

The BS may actively choose the MCS for DL transmission. New RRC, MAC-CE, DCI or UCI signaling may be designed to send PN variance and/or PA saturation points in feedback from the UE. Based on feedback from the UE, the BS may choose whether or not to use an MCS table that is robust to PN and PA non-linearities. In the event the PN variance is nearly 0 and/or the PA saturation point is nearly 1, the BS may choose an existing MCS table and set $I_{flag_PNPA}$ to 0. Otherwise, an MCS table including "newPNPA" constellations may be chosen and $I_{flag_PNPA}$ may be set to 1. The BS may send $I_{flag_PNPA}$ and $I_{MCS}$ to the UE via RRC, MAC-CE, or DCI signaling.

Alternative 1 (UL):

The BS may indicate the MCS for UL transmission to the UE. The BS may send an indication of whether or not to use an MCS indication ($I_{flag_PNPA}$) and MCS index ($I_{MCS}$) that are robust to PN and PA non-linearities. $I_{flag_PNPA}$ may be 1 if an MCS indication that is robust to PN and PA non-linearities is required; otherwise, $I_{flag_PNPA}$ may be 0. $I_{flag_PNPA}$ may be sent via RRC, MAC-CE, or UCI signaling. $I_{MCS}$ may be transmitted via existing signaling.

The UE may choose the required MCS table and $I_{MCS}$ based on a command from the BS. First, if $I_{flag_PNPA}$ is 1, the UE may choose an MCS table including "newPNPA" constellations; otherwise, the UE may choose an existing MCS table. Then, the UE may determine the modulation order $Q_m$ and the target code rate R based on $I_{MCS}$ and the MCS table.

Alternative 2 (UL):

The UE may actively choose the MCS for UL transmission. The UE may choose whether or not to use an MCS table that is robust to PN and PA non-linearities, based on an estimate of PN variance and/or an estimated PA saturation point. If the PN variance is nearly 0 and/or the PA saturation point is nearly 1, the UE may use an existing MCS table and set $I_{flag_PNPA}$ to 0. Otherwise, the UE may choose an MCS table that includes "newPNPA" constellations, and set $I_{flag_PNPA}$ to 1. The UE may send $I_{flag_PNPA}$ and $I_{MCS}$ to the BS via RRC, MAC-CE, or UCI signaling.

Option 3-2:

Existing methods of choosing MCS, as well as the methods of providing signaling disclosed in non-patent literature 16 or designed for future systems, may be re-used. New signaling may be introduced to indicate whether or not to use an MCS table including constellations that are robust to PN and PA non-linearities. The signaling may be sent via higher or lower layer signaling, such as RRC, MAC-CE, UCI, or DCI signaling.

Alternative 1:

The signaling may be explicitly associated with PN and PA non-linearities. For example, in DL transmission, the process described in Section 5.1.3.1 of non-patent literature 16 may be re-used. That is, if "mcs-TableDCI-1-2" is set to "PNPA", an MCS table including N "newPNPA" constellations may be used. The UE may determine the modulation order $Q_m$ and the target code rate R based on $I_{MCS}$ and an MCS table including N "newPNPA" constellations.
For example, in the case of UL transmission, a higher layer parameter "ifPNPA" may be added. If "ifPNPA" is 1, an MCS table including N "newPNPA" constellations may be used for the PUSCH.

Alternative 2:

The signaling may be implicitly associated with PN and/or PA non-linearities. For example, in a system in which a sub-THz band is configured, a newly designed MCS table including constellations that are robust to PN and PA non-linearities may be used. In other systems, an MCS table independent of PN and PA non-linearities may be used.

Option 4:

Newly designed MCS tables that are robust to PN, PA non-linearities, and the combination of PN and PA non-linearities (for example, MCS tables generated as a result of operation 1-3-1, operation 2-3-1, and operation 3-3-1) may be added to the specifications. Together with this, signaling for indicating which MCS table is used may be added to the specifications as well.
For example, in the event the PN is large and the PA non-linearities can be ignored, an MCS table obtained according to operation 1-3-1 may be used.
If the PN can be ignored and the PA non-linearities are strong, an MCS table obtained according to operation 2-3-1 may be used.
If neither the PN nor the PA non-linearities can be ignored, an MCS table obtained according to operation 3-3-1 may be used.
Here, conventional reference signals and estimation methods may be considered for use to estimate the PN variance, PA saturation point, PA model, and/or CSI-related information (e.g. SNR, SINR, CQI, CSI, etc.). In addition, the PN variance, PA saturation point, PA model, and/or CSI-related information for choosing MCS may be estimated using AI.
"Operation 4: Define UE capabilities" will be explained below.
Following UE capabilities (1) to (4) may be defined.
(1) A UE capability to indicate whether or not the UE supports APSK.
(2) A UE capability to indicate whether or not the UE supports hexagonal constellations.
(3) A UE capability to indicate whether or not the UE supports the use of NNs in modulation and demodulation.
(4) A UE capability to indicate whether or not the UE supports estimation of PN variance and/or the PA saturation point.

The UE capabilities may be reported from the UE to the BS via UE capability signaling. For example, the UE capability signaling may be sent via RRC, MAC-CE, or UCI signaling.
According to the embodiment described hereinabove, in the presence of substantial phase noise and/or PA non-linearities, the terminal 20 can still communicate properly by including constellations generated by trained NNs in MCS tables and using these constellations. Also, constellations generated by the trained NNs may be regularized and used, so that optimal performance and complexity can be achieved. Furthermore, regularized constellations can ease the complexity of demodulation.

In other words, it is possible to reduce the performance degradation due to phase noise and PA saturation points in a wireless communication system.

(Device Structures)

Next, example functional structures of the base station 10 and the terminal 20 having functions to implement the above-described processes and operations will be described. The base station 10 and the terminal 20 have functions to carry out the above-described embodiment. However, both the base station 10 and the terminal 20 may have only some of the functions of the embodiment.

<Base Station 10>

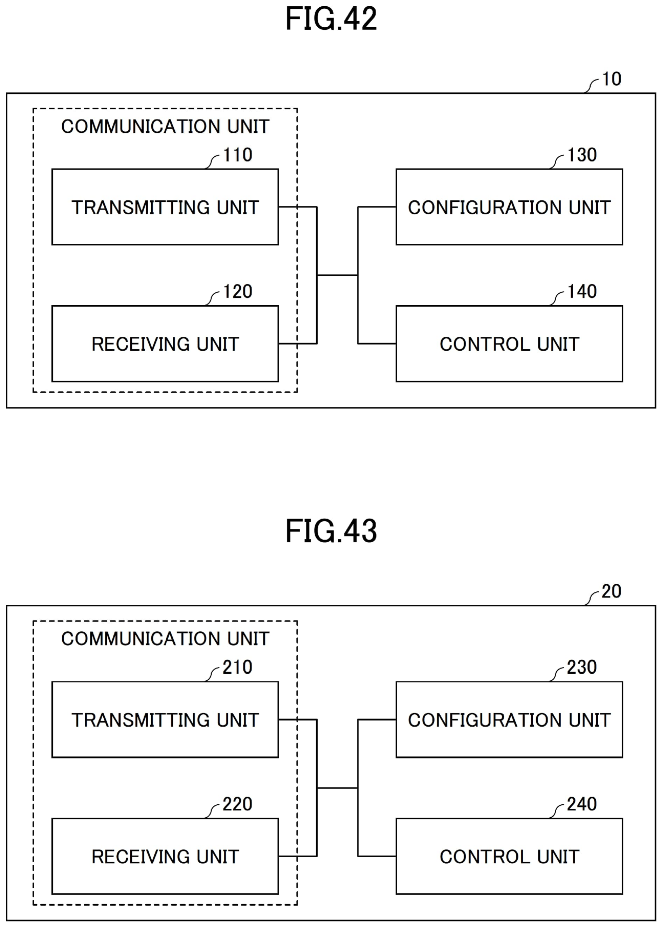

FIG. 42 is a diagram showing an example functional structure of a base station 10 according to an embodiment of the present invention. As shown in FIG. 42, the base station 10 has a transmitting unit 110, a receiving unit 120, a configuration unit 130, and a control unit 140. The functional structure shown in FIG. 42 is simply an example. As long as the operations according to the embodiment of the present invention can be implemented, any functional categories and any functional unit names may be used.

The transmitting unit 110 has, for example, a function to generate signals to be transmitted to the terminal 20 or other network nodes and transmit the signals via a wireless connection. The transmitting unit 110 also transmits inter-network node messages to other network nodes. The receiving unit 120 has, for example, a function to receive various signals transmitted from the terminal 20 and acquire, for example, higher layer information from the received signals. Also, the transmitting unit 110 has a function to transmit NR-PSS, NR-SSS, NR-PBCH, DL/UL control signals, etc., to the terminal 20. Also, the receiving unit 120 may receive inter-network node messages from other network nodes.

The configuration unit 130 stores configuration information that is set in advance, as well as various configuration information to be transmitted to the terminal 20. The content of the configuration information include, for example, information about the modulation method, coding method, channel bandwidth, waveform, subcarrier spacing, etc.

The control unit 140 executes control to implement the functions described hereinabove with the embodiment. Also, the control unit 140 executes control related to the modulation method, coding method, channel bandwidth, waveform, subcarrier spacing, etc., as has been described with the embodiment. The functional unit related to signal transmission in the control unit 140 may be included in the transmitting unit 110, and the functional unit related to signal reception in the control unit 140 may be included in the receiving unit 120.

<Terminal 20>

FIG. 43 is a diagram showing an example functional structure of a terminal 20 according to an embodiment of the present invention. As shown in FIG. 43, the terminal 20 has a transmitting unit 210, a receiving unit 220, a configuration unit 230, and a control unit 240. The functional structure shown in FIG. 43 is simply an example. As long as the operations according to the embodiment of the present invention can be implemented, any functional categories and any functional unit names may be used.

The transmitting unit 210 creates transmission signals from transmission data and transmits them via a wireless connection. The receiving unit 220 may receive various signals via a wireless connection, and obtains higher layer signals from the physical layer signals received. The receiving unit 220 also has a function to receive NR-PSS, NR-SSS, NR-PBCH, DL/UL/SL control signals, etc., transmitted from the base station 10. Furthermore, for example, in D2D communication, the transmitting unit 210 transmits a physical sidelink control channel (PSCCH), a physical sidelink shared channel (PSSCH), a physical sidelink discovery channel (PSDCH), a physical sidelink broadcast channel (PSBCH), etc., to other terminals 20, and the receiving unit 220 may receive PSCCH, PSSCH, PSDCH, PSBCH, etc., from other terminals 20.

The configuration unit 230 stores various types of configuration information received from the base station 10 by the receiving unit 220. The configuration unit 230 also stores pre-configured configuration information. The content of the configuration information includes, for example, information about the modulation method, coding method, channel bandwidth, waveform, subcarrier spacing, etc.

The control unit 240 executes control to implement the functions described hereinabove with the embodiment. Also, the control unit 240 executes control related to the modulation method, coding method, channel bandwidth, waveform, subcarrier spacing, etc., as has been described with the embodiment. The functional unit related to signal transmission in the control unit 240 may be included in the transmitting unit 210, and the functional unit related to signal reception in the control unit 240 may be included in the receiving unit 220.

The transmitting unit and receiving unit according to the embodiment of the present invention may have functions to allow the transmitter and receiver shown in FIG. 22, FIG. 29, or FIG. 38, to operate. The terminal 20 and the base station 10 may have these transmitting unit and receiving unit.

(Hardware Structures)

The block diagrams (FIG. 42 and FIG. 43) used in the description of the above embodiment illustrate blocks of functional units. These functional blocks (components) may be implemented by any combination of hardware and/or software. In addition, the method of implementing each functional block is not particularly limited. That is, each functional block may be implemented by using a single device that may be physically or logically combined, or two or more devices that may be physically or logically separated may be directly or indirectly connected (for example, by using a cable, radio, etc.), and each functional block may be implemented using these multiple devices. The functional blocks may be implemented by combining software with the device or devices.

The functions include, but are not limited to, judgment, determination, decision, calculation, computation, processing, derivation, research, search, verification, reception, transmission, output, access, resolution, selection, choosing, establishment, comparison, assumption, assumption, deeming, broadcasting, notifying, communicating, forwarding, configuring, reconfiguring, allocating, mapping, and assigning. For example, a functional block (component) that performs a transmission function may be referred to as a "transmitting unit" or a "transmitter". In either case, as described above, the method of implementation is not particularly limited.

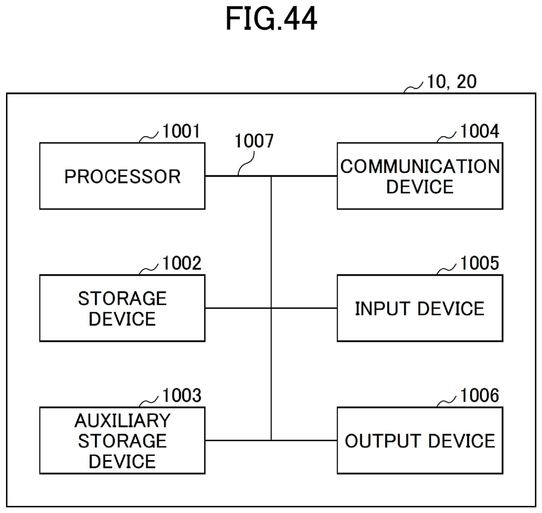

For example, the base station 10, the terminal 20, and so forth according to the embodiment of the present disclosure may function as a computer for processing the wireless communication method of the present disclosure. FIG. 44 is a diagram that illustrates an example hardware structure of the base station 10 and the terminal 20 according to the embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be read as circuit, apparatus, unit, and so forth. The hardware structure of the base station 10 and the terminal 20 may be configured to include one or more of the devices illustrated in the drawings, or may be configured without some of the devices.

The functions of the base station 10 and the terminal 20 may be realized by performing operations by the processor 1001 by reading predetermined software (programs) on hardware such as the processor 1001 and the storage device 1002, and controlling communication by the communication device 1004 and controlling at least one of reading and writing of data in the storage device 1002 and the auxiliary storage device 1003.

The processor 1001 operates, for example, an operating system to control the entire computer. The processor 1001 may be composed of a central processing unit (CPU) including an interface with peripheral devices, a control device, an arithmetic device, a register, and the like. For example, the above-described control unit 140, control unit 240, and the like may be implemented by the processor 1001.

The processor 1001 reads out programs (program codes), software modules, data, or the like from at least one of the auxiliary storage device 1003 and the communication device 1004 to the storage device 1002, and performs various processes in accordance with the above. As for the programs, programs that cause the computer to execute at least part of the operations described in the above embodiment may be used. For example, the control unit 140 of the base station 10 illustrated in FIG. 42 may be stored in the storage device 1002 and implemented by control programs that operate on the processor 1001. For example, the control unit 240 of the terminal 20 illustrated in FIG. 43 may be stored in the storage device 1002 and implemented by control programs that operate on the processor 1001. Although the foregoing processes have been described and executed by one processor 1001, they may be executed simultaneously or sequentially by two or more processors 1001. The processor 1001 may be implemented by one or more chips. The programs may be transmitted from the network via a telecommunication line.

The storage device 1002 may be a computer-readable recording medium and composed of at least one of, for example, a read-only memory (ROM), an erasable programmable ROM (EPROM), an electrically erasable programmable ROM (EEPROM), a random access memory (RAM), and the like. The storage device 1002 may be referred to as a register, cache, main memory (main storage device), or the like. The storage device 1002 can store programs (program codes), software modules, and so forth, executable to implement the communication method according to the embodiment of the present disclosure.

The auxiliary storage device 1003 may be a computer-readable recording medium and may be composed of at least one of an optical disk, such as a compact disc ROM (CD-ROM), a hard disk drive, a flexible disk, a magneto-optical disk (for example, a compact disc, a digital versatile disc, a Blu-ray disc (registered trademark), etc.), a smart card, a flash memory (for example, a card, a stick, a key drive), a floppy disk (registered trademark), a magnetic strip, and the like. The storage medium described above may be, for example, a database, a server, or other suitable medium that may include at least one of a storage device 1002 and an auxiliary storage device 1003.

The communication device 1004 may be hardware (a transceiving device) for performing communication between computers via at least one of a wired network and a wireless network, and also referred to as a "network device", a "network controller", a "network card", a "communication module", or the like. The communication device 1004 may be composed of a high frequency switch, a duplexer, a filter, a frequency synthesizer, or the like, for example, to implement at least one of frequency division duplex (FDD) and time division duplex (TDD) . For example, the transmitting/receiving antenna, the amplifier unit, the transceiving unit, the transmission line interface, and the like may be implemented by the communication device 1004. The transceiving unit may be physically or logically isolated, respective implementations of a transmitting unit and a receiving unit.

The input device 1005 may be an input device (for example, a keyboard, a mouse, a microphone, a switch, a button, a sensor, etc.) that accepts external input. The output device 1006 may be an output device (for example, a display, a speaker, an LED lamp, etc.) that implements external output. The input device 1005 and the output device 1006 may have an integral structure (for example, a touch panel).

Each device, such as the processor 1001 and the storage device 1002, may be connected by a bus 1007 for communicating information. The bus 1007 may be constructed using a single bus or may be constructed using different buses between devices.

The base station 10 and the terminal 20 may also include hardware such as a microprocessor, a digital signal processor (DSP), an application-specific integrated circuit (ASIC), a programmable logic device (PLD), a field programmable gate array (FPGA), and so forth, and some or all of the functional blocks may be implemented by the hardware. For example, the processor 1001 may be implemented by using at least one of these hardware components.

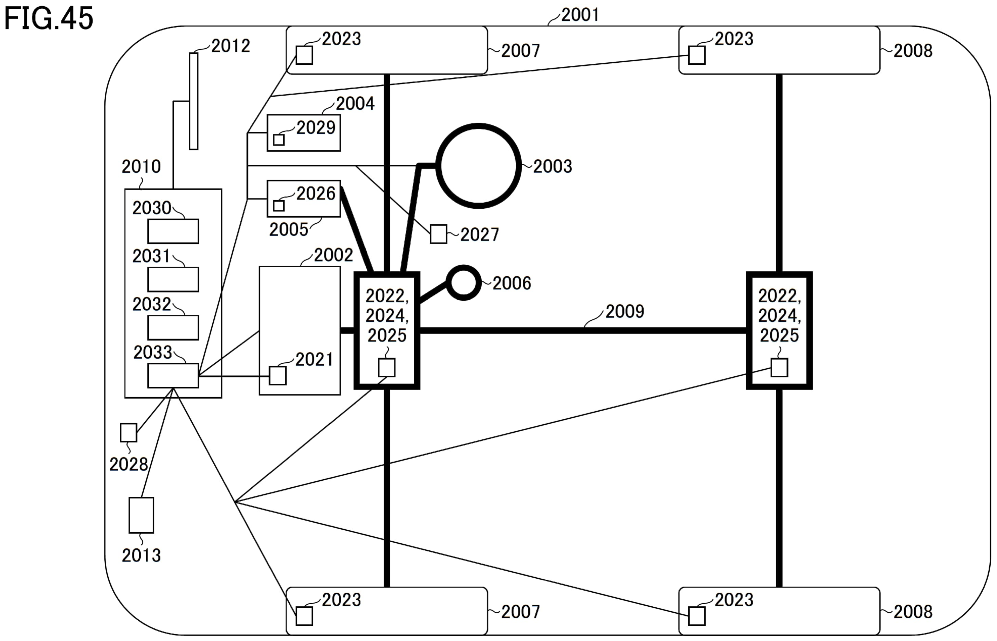

FIG. 45 shows an example structure of a vehicle 2001. As shown in FIG. 45, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. The embodiment and examples described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 may include at least a steering wheel and may be configured to steer at least one of the front wheel and the rear wheel, based on the operation of the steering wheel operated by the user.

The electronic control unit 2010 may include a microprocessor 2031, a memory (ROM, RAM) 2032, and a communication port (IO port) 2033. The electronic control unit 2010 may receive signals from the sensors 2021 to 2029 provided in the vehicle 2001. The electronic control unit 2010 may be referred to as an "electronic control unit" (ECU).

The signals from the sensors 2021 to 2029 may include a current signal from a current sensor 2021 that senses the current of the motor, a front or rear wheel rotation speed signal acquired by a rotation speed sensor 2022, a front or rear wheel air pressure signal acquired by an air pressure sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, a shift lever operation signal acquired by a shift lever sensor 2027, and a detection signal, acquired by an object detection sensor 2028, for detecting an obstacle, a vehicle, a pedestrian, and the like.

The information service unit 2012 may include various devices for providing various information such as driving information, traffic information, and entertainment information, including a car navigation system, an audio system, a speaker, a television, and a radio, and one or more ECUs that control these devices. The information service unit 2012 may provide various multimedia information and multimedia services to the occupants of the vehicle 2001 by using information obtained from external devices through the communication module 2013 or the like. The information service unit 2012 may include an input device (for example, a keyboard, a mouse, a microphone, a switch, a button, a sensor, a touch panel, etc.) that accepts external inputs, and may also include an output device (for example, a display, a speaker, an LED lamp, a touch panel, etc.) that executes external outputs.

A driver assistance system unit 2030 may include: various devices for providing functions of preventing accidents and reducing the driver's burden of driving, such as a millimeter wave radar, a light detection and ranging (LiDAR) system, a camera, a positioning locator (for example, GNSS), map information (for example, high definition (HD) map, autonomous vehicle (AV) map, etc.), a gyro system (for example, an inertial measurement unit (IMU), an inertial navigation system (INS), etc.), an artificial intelligence (AI) chip, and an AI processor; and one or more ECUs that control these devices. In addition, the driver assistance system unit 2030 may transmit and receive various information via the communication module 2013 to implement a driver assistance function or an autonomous driving function.

The communication module 2013 may communicate with the microprocessor 2031 and components of the vehicle 2001 via a communication port. For example, the communication module 2013 may transmit and receive data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031, the memory (ROM, RAM) 2032 in the electronic control unit 2010, and the sensors 2021 to 2029 provided in the vehicle 2001.

The communication module 2013 may be a communication device that can be controlled by the microprocessor 2031 of the electronic control unit 2010 and that may be capable of communicating with external devices. For example, various kinds of information may be transmitted to and received from external devices through wireless communication. The communication module 2013 may be internal or external to the electronic control unit 2010. The external devices may include, for example, a base station, a mobile station, or the like.

The communication module 2013 may transmit at least one of: signals input to the electronic control unit 2010 from the sensors 2021 to 2028; information obtained based on these signals; and information based on inputs from the outside (user) obtained via the information service unit 2012, to external devices via wireless communication. The electronic control unit 2010, the sensors 2021 to 2028, the information service unit 2012, and the like may be referred to as an "input unit" that accepts inputs. For example, PUSCH transmitted by the communication module 2013 may include information that is based on an input such as one described above.

The communication module 2013 may receive various information (traffic information, signal information, inter-vehicle distance information, etc.) transmitted from external devices and displays these pieces of information on an information service unit 2012 provided in the vehicle 2001. The information service unit 2012 may also be referred to as an "output unit" that outputs information (or that, for example, outputs information to devices such as a display or a speaker based on PDSCH (or data/information decoded from PDSCH) received by the communication module 2013). In addition, the communication module 2013 may store the information received from the external devices in the memory 2032, to which the microprocessor 2031 has access. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and so forth, mounted in the vehicle 2001.

(Summary of Embodiment)

As described above, according to the above-described embodiment of the present invention, a terminal includes: a control unit configured to: map bit sequences to indices; output one-hot encoder vectors associated with the indices; and pre-train a neural network (NN) to output modulated symbols in response to the one-hot encoder vectors, a variance of phase noise, and a power amplifier (PA) saturation point as inputs; and a transmitting unit configured to carry out a transmission to a base station by using modulated symbols that are selected based on a constellation generated by the pre-trained NN.

According to this structure, constellations may be generated by a trained NN and included in an MCS table for use by the terminal 20, so that the terminal 20 can communicate properly even when phase noise and PA saturation points work adversarially in a wireless communication system. In other words, it is possible to reduce the performance degradation due to phase noise and PA saturation points in a wireless communication system.

The transmitting unit may be further configured to regularize and transform the constellation into an amplitude phase shift keying (APSK) constellation. According to this structure, constellations may be generated by a trained NN and regularized for use, so that optimal performance and complexity can be achieved. Furthermore, regularized constellations can ease the complexity of demodulation.

The transmitting unit may be further configured to use a plurality of modulation methods, which are associated respectively with a plurality of constellations generated by the NN having been trained using a plurality of variances of phase noise and a plurality of PA saturation points as inputs. According to this structure, constellations may be generated by a trained NN and included in an MCS table for use by the terminal 20, so that the terminal 20 can communicate properly even when phase noise and PA saturation points work adversarially in a wireless communication system.

The transmitting unit may be further configured to transmit, to the base station, information that indicates whether or not a modulation method associated with the constellation is used. According to this structure, constellations may be generated by a trained NN and included in an MCS table for use by the terminal 20, so that the terminal 20 can communicate properly even when phase noise and PA saturation points work adversarially in a wireless communication system.

The terminal may further include a receiving unit configured to receive, from the base station, information that indicates whether or not a modulation method associated with the constellation is used. According to this structure, constellations may be generated by a trained NN and included in an MCS table for use by the terminal 20, so that the terminal 20 can communicate properly even when phase noise and PA saturation points work adversarially in a wireless communication system.

Furthermore, according to the above-described embodiment of the present invention, a communication method includes: a step of: mapping bit sequences to indices; outputting one-hot encoder vectors associated with the indices; and pre-training a neural network (NN) to output modulated symbols in response to the one-hot encoder vectors, a variance of phase noise, and a power amplifier (PA) saturation point as inputs; and a step of carrying out a transmission to a base station by using modulated symbols that are selected based on a constellation generated by the pre-trained NN.

According to this structure, constellations may be generated by a trained NN and included in an MCS table for use by the terminal 20, so that the terminal 20 can communicate properly even when phase noise and PA saturation points work adversarially in a wireless communication system. In other words, it is possible to reduce the performance degradation due to phase noise and PA saturation points in a wireless communication system.

(Notes on Embodiment)

An example embodiment of the present invention has been described above, but the disclosed invention is not limited to the above embodiment, and those skilled in the art would understand that there may be various modified examples, revised examples, alternative examples, substitution examples, and the like. In order to facilitate understanding of the invention, specific numerical values have been used for description, but the numerical values are merely examples, and any suitable values may be used unless otherwise specified. The classification of items in the above description is not essential to the present invention. Matters described as two or more items may be combined if necessary, and a matter described as one item may be applied to another item (as long as there is no contradiction). The boundary between functional units or processing units in a functional block diagram does not necessarily correspond to the boundary between physical parts. Operations of multiple functional units may be performed physically by one component, or an operation of one functional unit may be physically performed by multiple parts. In the processing procedures described in the embodiment, the order of the processes may be changed as long as there is no contradiction. For the sake of convenience of processing description, the base station 10 and the terminal 20 may be described using functional block diagrams, but such devices may be implemented by hardware, software, or a combination of these. Software executed by the processor included in the base station 10 according to the embodiment of the present invention and software executed by the processor included in the terminal 20 according to the embodiment of the present invention may be stored in a random access memory (RAM), a flash memory, a read-only memory (ROM), an EPROM, an EEPROM, a register, an hard disk drive (HDD), a removable disk, a CD-ROM, a database, a server, or any other appropriate storage medium.

Furthermore, indication of information is not limited to the embodiment or examples described in the present disclosure, and may be provided by using any other method. For example, the indication of information may be provided by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB), etc.), other signals, or a combination thereof. Furthermore, RRC signaling may be referred to as an "RRC message" and may be, for example, an RRC connection setup message, an RRC connection reconfiguration message, or the like.

Each embodiment and example described in the present disclosure may be applied to at least one of long-term evolution (LTE), LTE-advanced (LTE-A), SUPER 3G, IMT-Advanced, 4th generation mobile communication system (4G), 5th generation mobile communication system (5G), 6th generation mobile communication system (6G), x-th generation mobile communication system (xG) (where "x" is an integer, decimal, etc.), future radio access (FRA), new radio (NR), new radio access (NX), future generation radio access, W-CDMA (registered trademark), GSM (registered trademark), CDMA 2000, ultra-mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and next generation systems enhanced, modified, created, and defined based on these standards. Furthermore, multiple systems (for example, a combination of at least one of LTE and LTE-A, with 5G) may be combined to be applied.

The order of the processing procedures, the order of the sequences, the order of the flowcharts, and the like of the embodiment and examples described in this specification may be changed, provided that there is no contradiction. For example, the method described in the present disclosure may present elements of various steps with an example order and does not have to be limited to the presented, specific order.

In this specification, a specific operation to be performed by the base station 10 may be performed by its upper node in some cases. In a network including one or more network nodes including the base station 10, various operations performed for communication with the terminal 20 can be obviously performed by at least one of the base station 10 and any network node (for example, an MME, an S-GW, and so forth, but these are by no means limiting) other than the base station 10. Cases have been shown above in which there is one network node other than the base station 10. The one network node may be a combination of multiple other network nodes (for example, MME and S-GW).

Information, a signal, or the like described in the present disclosure may be output from a higher layer to a lower layer (or from a lower layer to a higher layer). Information, a signal, or the like described in the present disclosure may be input and output via multiple network nodes.

Input and output information and the like may be stored in a specific place (for example, a memory), or may be managed by using a management table. Input and output information and the like may be overwritten, updated, or additionally written. Output information and the like may be deleted. Input information and the like may be transmitted to other devices.

The determination in the present disclosure may be made in accordance with a value (0 or 1) represented by one bit, may be made in accordance with a Boolean value (Boolean: true or false), or may be made by a comparison of numerical values (for example, a comparison with a predetermined value).

Software should be broadly interpreted to mean a command, a command set, a code, a code segment, a program code, a program, a subprogram, a software module, an application, a software application, a software package, a routine, a subroutine, an object, an executable file, an execution thread, a procedure, a function, and the like, regardless of whether software is called "software", "firmware", "middleware", a "microcode", a "hardware description language", or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of these wired technology and radio technology may be included in a definition of a transmission medium.

Information, signals, and the like described in the present disclosure may be expressed using any one of a variety of techniques. For example, data, instructions, commands, information, signals, bits, symbols, chips, and the like, which are mentioned throughout the above description, may be expressed by voltages, currents, electromagnetic waves, magnetic fields or magnetic particles, optical fields or photons, or any combination thereof.

The terms described in the present disclosure and the terms necessary for understanding the present disclosure may be replaced with terms having the same or similar meanings. For example, at least one of a channel and a symbol may be a signal (signaling). Furthermore, a signal may be a message. Furthermore, a component carrier (CC) may be referred to as a "carrier frequency", a "cell", a "frequency carrier", or the like.

The terms "system" and "network" used in the present disclosure may be interchangeable.

Furthermore, the information, parameters, and the like described in the present disclosure may be expressed by using absolute values, may be expressed by using relative values from predetermined values, or may be expressed by using any other corresponding information. For example, radio resources may be indicated by indices.

The names used for the above-described parameters are not limited names in any point of view. Furthermore, mathematical formulas or the like using the parameters may be different from those explicitly disclosed in the present disclosure. Since various channels (for example, PUCCH, PDCCH, etc.) and information elements can be identified by any suitable names, various names assigned to the various channels and the information elements are not limited names in any point of view.

In the present disclosure, the terms "base station (BS)", "radio base station", "base station device", "fixed station" "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to by a term such as a "macrocell", a "small cell", a "femtocell", and a "picocell".

The base station can accommodate one or more (for example, three) cells. In a case in which the base station accommodates multiple cells, the entire coverage area of the base station can be partitioned into a plurality of small areas, and each small area can provide a communication service through a base station subsystem (for example, a small indoor base station (RRH: Remote Radio Head)). The term "cell" or "sector" refers to the whole or a part of the coverage area of at least one of the base station and the base station subsystem that performs a communication service in the coverage.

In the present disclosure, when a base station transmits information to a terminal, this may be interpreted as meaning that the base station controls or sends a command to the terminal based on the information.

In the present disclosure, the terms "mobile station (MS)", "user terminal", "user equipment (UE)", "terminal", and the like can be used interchangeably.

The mobile station may be referred to, by a person ordinarily skilled in the art, as a "subscriber station", a "mobile unit", a "subscriber unit", a "wireless unit", a "remote unit", a "mobile device", a "wireless device", a "wireless communication device", a "remote device", a "mobile subscriber station", an "access terminal", a "mobile terminal", a "wireless terminal", a "remote terminal", a "handset", a "user agent", a "mobile client", a "client", or some other suitable terms.

At least one of the base station and the mobile station may be also referred to as a "transmission device", a "receiving device", a "communication device", or the like. At least one of the base station and the mobile station may be a device installed in a mobile body, a mobile body itself, or the like. The moving object may be a movable object with any moving speed, and naturally a case where the moving object is stopped is also included. Examples of the moving object may include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station may also include an apparatus which does not necessarily move during communication operation. For example, at least one of a base station and a mobile station may be an Internet of Things (IoT) device such as a sensor.

Furthermore, the base station in the present disclosure may be replaced by the user terminal. For example, various embodiments and examples of the present disclosure may be applied to a configuration in which communication between the base station and the user terminal is replaced by communication between multiple terminals 20 (such communication may be referred to as "device-to-device (D2D)" communication, "vehicle-to-everything (V2X)" communication, etc.). In this case, the terminals 20 may have and perform the functions that the base station 10 described above has. The phrases "uplink" and "downlink" may also be replaced by phrases corresponding to terminal-to-terminal communication (for example, "side"). For example, an uplink channel, a downlink channel, or the like may be replaced by a side channel.

Similarly, the user terminal in the present disclosure may be replaced with the base station. In this case, the base station may have the functions of the above-described user terminal.

The terms "determination (determining)" and "decision (determining)" used in the present specification may include various types of operations. The "determination" and "decision" may include deeming "judging", "calculating", "computing", "processing", "deriving", "investigating", "looking up (for example, searching in a table, a database, or another data structure)", "searching", "inquiring", or "ascertaining" as "determining" and/or "deciding". Furthermore, the "determination" and "decision" may include deeming "receiving (for example, receiving information)", "transmitting (for example, transmitting information)", "inputting", "outputting", or "accessing (for example, accessing data in a memory)" as "determining" and/or "deciding". Furthermore, the "determination" and "decision" may include deeming "resolving", "selecting", "choosing", "establishing", or "comparing" as "determining" and/or "deciding". Namely, the "determination" and "decision" may include deeming an operation as "determining" and/or "deciding". Furthermore, "determining" may be replaced with "assuming", "expecting", "considering", or the like.

The terms "connected", "coupled", or variations thereof may mean any direct or indirect connection or coupling between two or more elements and may include the presence of one or more intermediate elements between two elements which are "connected" or "coupled". The coupling or the connection between the elements may be physical, logical, or a combination thereof. For example, "connection" may be replaced with "access". In the present disclosure, two elements may be considered to be "connected" or "coupled" with each other using at least one of one or more electric wires, cables and/or a printed electrical connection or using electromagnetic energy having a wavelength in a radio frequency region, a microwave region, or a light (both visible and non-visible) region as nonlimiting and non-exhaustive examples.

A reference signal may be abbreviated as "RS" and may be referred to as a "pilot", depending on the standard that is applied.

The phrase "based on" used in the present disclosure does not only mean "based only on", unless otherwise stated. In other words, the phrase "based on" may mean both "based only on" and "based at least on".

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

Furthermore, "means" in the structure of each of the above devices may be replaced with "unit", "part", "circuit", "device", or the like.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. In the time domain, each of one or more frames may be referred to as a "subframe". The subframe may further include one or more slots in the time domain. The subframe may have a fixed time length (for example, 1 ms) not depending on numerology.

Numerology may be a communication parameter applied to at least one of transmission and reception of a certain signal or channel. For example, numerology may indicate at least one of subcarrier spacing (SCS), the bandwidth, the symbol length, the cyclic prefix length, the transmission time interval (TTI), the number of symbols per TTI, the radio frame structure, a specific filtering process performed in the frequency domain by a transceiver, a specific windowing process performed in the time domain by a transceiver, and the like.

A slot may include one or more symbols (orthogonal frequency division multiplexing (OFDM) symbols, single carrier frequency division multiple access (SC-FDMA) symbols, etc.) in the time domain. A slot may be a time unit based on numerology.

A slot may include a plurality of mini slots. Each mini slot may include one or more symbols in the time domain. Furthermore, a mini slot may be referred to as a "sub-slot". A mini slot may include fewer symbols than a slot. PDSCH (or PUSCH) that is transmitted in a unit of time greater than a mini slot may be referred to as "PDSCH (or PUSCH) mapping type A". PDSCH (or PUSCH) that is transmitted using a mini slot may be referred to as "PDSCH (or PUSCH) mapping type B".

Any one of a radio frame, a subframe, a slot, a mini slot, and a symbol may indicate a time unit for transmitting a signal. As a radio frame, a subframe, a slot, a mini slot, and a symbol, different names corresponding to them may be used.

For example, one subframe may be referred to as a "transmission time interval (TTI)", or a plurality of consecutive subframes may be referred to as a "TTI", or one slot or one mini slot may be referred to as a "TTI". In other words, at least one of the subframe and the TTI may be a subframe (1 ms) in conventional LTE, may be a period shorter than 1 ms (for example, 1 to 13 symbols), or may be a period longer than 1 ms. A unit representing the TTI may be referred to as a "slot", a "mini slot", or the like, instead of a "subframe".

Here, for example, the TTI may refer to a minimum time unit of scheduling in wireless communication. For example, in an LTE system, the base station may perform scheduling of allocating radio resources (frequency bandwidth, transmission power, or the like which can be used in each terminal 20) to each terminal 20 in units of TTIs. The definition of the TTI is not limited thereto.

The TTI may be a transmission time unit such as a channel-coded data packet (transport block), a code block, or a codeword, or may be a processing unit of, for example, scheduling or link adaptation. Furthermore, when a TTI is provided, the time interval (for example, the number of symbols) in which a transport block, a code block, a codeword, or the like is actually mapped may be shorter than the TTI.

When one slot or one mini slot may be referred to as a "TTI", one or more TTIs (that is, one or more slots or one or more mini slots) may be a minimum time unit of scheduling. Furthermore, the number of slots (the number of mini slots) forming the minimum time unit of scheduling may be controlled.

A TTI having a time length of 1 ms may be referred to as a "common TTI" (TTI in LTE Rel. 8 to 12), a "normal TTI", a "long TTI", a "common subframe", a "normal subframe", a "long subframe", a "slot", or the like. A TTI shorter than a common TTI may be referred to as a "reduced TTI", a "short TTI", a "partial TTI" (a partial or fractional TTI), a "reduced subframe", a "short subframe", a "mini slot", a "sub slot", a "slot", or the like.

Furthermore, a long TTI (for example, a normal TTI, a subframe, etc.) may be replaced with a TTI having a time length exceeding 1 ms, and a short TTI (for example, a reduced TTI or the like) may be replaced with a TTI having a TTI length that is shorter than a TTI length of a long TTI and that is longer than or equal to 1 ms.

The resource block (RB) may be a resource allocation unit in the time domain and the frequency domain, and may include one or more consecutive subcarriers in the frequency domain. The number of subcarriers included in an RB may be the same, irrespective of the numerology and may be, for example, 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Furthermore, one or more RBs may be referred to as a "physical resource block (PRB)", a "subcarrier group (SCG)", a "resource element group (REG)", a "PRB pair", an "RB pair", or the like.

Furthermore, a resource block may be formed with one or more resource elements (REs). For example, one RE may be a radio resource field of one subcarrier and one symbol.

A bandwidth part (BWP) (which may be referred to as a "partial bandwidth" or the like) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

BWPs may include BWPs for UL (UL BWPs) and BWPs for DL (DL BWPs). In the terminal 20, one or more BWPs may be configured in one carrier.

At least one of configured BWPs may be active, and UE need not assume that predetermined signals/channels are transmitted and received outside an active BWP. Furthermore, a "cell", a "carrier", or the like in the present disclosure may be replaced with a "BWP".

Structures of the radio frame, the subframe, the slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the cyclic prefix (CP) length, and the like can be variously changed.

In the present disclosure, for example, when an article such as "a", "an", or "the" in English is added by a translation, the present disclosure may include a case in which a noun following the article is the plural.

In the present disclosure, "A and B are different" may mean "A and B are different from each other". However, this may also mean "A and B are different from C". Terms such as "separated" or "combined" may be interpreted as well as "different".

Each embodiment or example described in the present disclosure may be used alone, in combination, or may be switched in accordance with the implementation. Furthermore, indication of predetermined information (for example, indication of "being X") is not limited to indication performed explicitly, but may be performed implicitly (for example, not notifying the predetermined information).

Although the present disclosure has been described above in detail, it is obvious to those skilled in the art that the present disclosure is not limited to the embodiment described in the present disclosure. The present disclosure may be implemented as revised and modified embodiments without departing from the gist and scope of the present disclosure as set forth in the accompanying claims. Accordingly, the description of the present disclosure is for the purpose of illustration and does not have any restrictive meaning to the present disclosure.

DESCRIPTION OF REFERENCE CODES

10 base station
110 transmitting unit
120 receiving unit
130 configuration unit
140 control unit
20 terminal
210 transmitting unit
220 receiving unit
230 configuration unit
240 control unit
30 power-transmitting device
40 core network
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheel
2008 rear wheel
2009 axle
2010 electronic control unit
2012 information service unit
2013 communication module
2021 current sensor
2022 rotation speed sensor
2023 air pressure sensor
2024 vehicle speed sensor
2025 acceleration sensor
2026 brake pedal sensor
2027 shift lever sensor
2028 object detection sensor
2029 accelerator pedal sensor
2030 driver assistance system unit
2031 microprocessor
2032 memory (ROM, RAM)
2033 communication port (IO port)

## Claims

1. A terminal comprising:

    a control unit configured to:

        map bit sequences to indices;
        output one-hot encoder vectors associated with the indices; and
        pre-train a neural network (NN) to output modulated symbols in response to the one-hot encoder vectors, a variance of phase noise, and a power amplifier (PA) saturation point, as inputs; and

    a transmitting unit configured to carry out a transmission to a base station by using modulated symbols that are selected based on a constellation generated by the pre-trained NN.

2. The terminal according to claim 1, wherein the transmitting unit is further configured to regularize and transform the constellation into an amplitude phase shift keying (APSK) constellation.

3. The terminal according to claim 1, wherein the transmitting unit is further configured to use a plurality of modulation methods, which are associated respectively with a plurality of constellations generated by the NN having been trained using a plurality of variances of phase noise and a plurality of PA saturation points as inputs.

4. The terminal according to claim 1, wherein the transmitting unit is further configured to transmit, to the base station, information that indicates whether or not a modulation method associated with the constellation is used.

5. The terminal according to claim 1, further comprising a receiving unit configured to receive, from the base station, information that indicates whether or not a modulation method associated with the constellation is used.

6. A communication method to be executed by a terminal, the method comprising:

    a step of:

        mapping bit sequences to indices;
        outputting one-hot encoder vectors associated with the indices; and
        pre-training a neural network (NN) to output modulated symbols in response to the one-hot encoder vectors, a variance of phase noise, and a power amplifier (PA) saturation point, as inputs; and

    a step of carrying out a transmission to a base station by using modulated symbols that are selected based on a constellation generated by the pre-trained NN.

FIG.1

DL TRANSMISSION
20
UL
TRANSMISSION
10
CELL

FIG.2

$10^0$
$10^{-1}$
$10^{-2}$
$10^{-3}$
$10^{-4}$
SER
0
5
10
15
20
25
30
35
40
SNR

64QAM, $\sigma$ PN2=0.01
64QAM, $\sigma$ PN2=0.05
64QAM, $\sigma$ PN2=0.1
64QAM, $\sigma$ PN2=0

# FIG.3

SER
SNR
$10^0$
$10^{-1}$
$10^{-2}$
$10^{-3}$
$10^{-4}$
0
5
10
15
20
25
30
35
40



256QAM, σPN2=0.01
256QAM, σPN2=0.1
256spiral, σPN2=0.01
256spiral, σPN2=0.1
256QAM, σPN2=0
256spiral, σPN2=0, fs=0

# FIG.4

1.5
1
0.5
0
−0.5
−1
−1.5
−1.5
−1
−0.5
0
0.5
1
1.5
256Spiral, fs=0

# FIG.5

2
1.5
1
0.5
0
−0.5
−1
−1.5
−2
−2
−1.5
−1
−0.5
0
0.5
1
1.5
2
256Spiral, fs=0.00413

# FIG.6

$10^0$
$10^{-1}$
$10^{-2}$
$10^{-3}$
$10^{-4}$
SER
0
5
10
15
20
25
30
SNR
64QAM PaSat=0.58
64QAM Linear PA
64QAM PaSat=0.68

# FIG.7

1.5
1
0.5
0
−0.5
−1
−1.5
−1.5
−1
−0.5
0
0.5
1
1.5
64QAM after non-linear PA (PaSat=0.58)

# FIG.8

SER
SNR
10^0
10^-1
10^-2
10^-3
10^-4
0
5
10
15
20
25
30
64APSK4-12-20-28 Linear PA
64APSK4-12-20-28 PaSat=0.68
64APSK4-12-20-28 PaSat=0.58

# FIG.9

1.5
1
0.5
0
−0.5
−1
−1.5
−1.5
−1
−0.5
0
0.5
1
1.5
64APSK
(in DVB−S2 [2])

# FIG.10

1.5
1
0.5
0
−0.5
−1
−1.5
−1.5
−1
−0.5
0
0.5
1
1.5

64APSK after non-linear PA (PaSat=0.58)

FIG.11

N one-hot
PN variance
Encoder
DNN
DNN
DNN
2D-cons
Channel
PN variance
Decoder
DNN
DNN
DNN
Output

1.5
1
0.5
0
−0.5
−1
−1.5
−1.5 −1 −0.5 0 0.5 1 1.5
PN=0
2
1.5
1
0.5
0
−0.5
−1
−1.5
−2
−2 −1.5 −1 −0.5 0 0.5 1 1.5
PN=0.02
1.5
1
0.5
0
−0.5
−1
−1.5
−1.5 −1 −0.5 0 0.5 1 1.5
PN=0.1

FIG.12

# FIG.13

10^0
10^-1
10^-2
10^-3
SER
0
5
10
15
20
25
30
SNR
2 dB SNR
gain
@1e-2
64NNcons
64Spiral
64QAM

FIG.14
AI-trained constellation
Regularization
Proposed 64APSK
PN=0.02
SER
SNR
2 dB SNR
gain @1e-2
64APSK-pn Design
64Spiral
64QAM
64APSK-DVB (16+16+16+16)
64NNcons

FIG.15
AI−trained constellation
PN=0.02
Regularization
Proposed 64APSK
SER
SNR
2 dB SNR
gain @5e−2
64APSK−pn Design
64Spiral
64QAM
64APSK−DVB (16+16+16+16)
64NNcons

FIG.16
AI-trained constellation
Proposed 64APSK
Regularization
PN=0.02
SER
SNR
$10^0$
$10^{-1}$
$10^{-2}$
4 dB SNR
gain @4e-2
256APSK-pn Design
256Spiral
256QAM
256APSK-DVB
256NNcons

FIG.17

N one-hot
PaSat
Encoder
DNN
DNN
DNN
2D-cons
Channel
PaSat
Decoder
DNN
DNN
DNN
Output

FIG.18

PaSat=0.45
PaSat=0.68
PaSat=0.85
Constellation after non-linear PA (PaSat=0.68)

# FIG.19

10^0
10^-1
10^-2
10^-3
10^-4
SER
0
5
10
15
20
25
30
SNR
3 dB SNR
gain
@2.2e-3
64NNcons
64APSK4-12-20-28
64QAM

FIG.20
Proposed 64APSK PaSat=0.58 (before PA)
(6+12+20+26) APSK
Proposed 64APSK PaSat=0.58 (after PA)
SER
SNR
2 dB SNR
gain @1e−3
64APSK−Design
64APSK−DVB
64QAM
64NN−trained

# FIG.21

PaSat=0.58 Hexagonal constellation
Hexagonal constellation
(after PA) (PaSat=0.58)
SER
SNR
$10^0$
$10^{-1}$
$10^{-2}$
$10^{-3}$
$10^{-4}$
0
5
10
15
20
25
30
2 dB SNR
gain @1e−3
64NN−Hex Design
64APSK−DVB
64QAM
64NN−trained

FIG.22
Proposed modulation at transmitter:
Bit sequence
Bit–to–index mapping
One–hot encoder vector
PN variance
Offline–trained NN: defined by parameters pre–stored at transmitter
DNN
DNN
DNN
Modulated symbol
With modulation order $\log_2 N$ and PN variance $\sigma_{PN}^2$ :
・ Bit–to–index mapping (for bit sequences with length $\log_2 N$) + Offline–trained NN (for $N$ and $\sigma_{PN}^2$ ) = Bit–to–symbol mapping and constellation with robustness to PN with variance $\sigma_{PN}^2$
Channel (with PN and variance $\sigma_{PN}^2$ )
Received symbol
PN variance
DNN
DNN
DNN
Offline–trained NN: defined by parameters pre–stored at receiver
One–hot encoder vector
Bit–to–index de–mapping
Bit sequence
Proposed demodulation at receiver:

FIG.23

N=64, PN variance=0.02
−2
−1.5
−1
−0.5
0
0.5
1
1.5
2

N=16, PN variance=0.02
−1.5
−1
−0.5
0
0.5
1
1.5
2

N=16, PN variance=0.06
N=64, PN variance=0.1
N=256, PN variance=0.02

FIG.24

FIG.25

-1.5
-1
-0.5
0
0.5
1
1.5
2
111100
110111
101110
100101
011100
010111
001110
000101
000000
111011
110010
101001
100000
011011
010010
001001
000100
111111
110110
101101
100100
011111
010110
001101
111010
110001
101000
100011
011010
010001
001000
000011
111110
110101
101100
100111
011110
010101
001100
000111
111001
110000
101011
100010
011001
010000
001011
000010
111101
110100
101111
100110
011101
010100
001111
000110
111000
110011
101010
100001
011000
010011
001010
000001

FIG.26

Regularization
to APSK
N=64, PN variance=0.02
Irregular constellation trained by NN
Regularized 64APSK constellation
Regularization
to APSK
N=64, PN variance=0.1
Irregular constellation trained by NN
Regularized 64APSK constellation

FIG.27

N=64, PN variance=0.1
1.5
1
0.5
0
−0.5
−1
−1.5

N=64, PN variance=0.02
2
1.5
1
0.5
0
−0.5
−1
−1.5
−2

# FIG.28

PaSat
Output signal voltage [V]
2
1.8
1.6
1.4
1.2
1
0.8
0.6
0.4
0.2
0
0 0.05 0.1 0.15 0.2 0.25 0.3 0.35 0.4 0.45
Input signal voltage [V]

Modified Rapp model
Measured

FIG.29
Proposed modulation at transmitter:
Bit sequence
Bit-to-index mapping
One-hot encoder vector
PA saturation point, PaSat
Offline-trained NN: defined by parameters pre-stored at transmitter
DNN
DNN
DNN
Modulated symbol
PA saturation point PaSat
Tx symbol
With modulation order $\log_2 N$ and PA saturation point PaSat:
▪ Bit-to-index mapping (for bit sequences with length $\log_2 N$) + Offline-trained NN (for $N$ and PaSat) = Bit-to-symbol mapping and constellation with robustness to PA non-linearity and PA saturation point PaSat
Channel
Rx Symbol
PA saturation point, PaSat
DNN
DNN
DNN
Offline-trained NN: defined by parameters pre-stored at receiver
One-hot encoder vector
Bit-to-index de-mapping
Bit sequence
Proposed demodulation at receiver:

N=16, PaSat=0.58
N=64, PaSat=0.85
N=256, PaSat=0.58

FIG.30

Step 1
1/6 regularized hexagonal constellation
Rotation
Step 2
Regularized hexagonal constellation
Add points
to satisfy 2ⁿ
Step 3
Designed hexagonal constellation

FIG.31

N=64, PaSat=0.45
N=64, PaSat=0.58
N=64, PaSat=0.85
FIG.32

# FIG.33

2
1.5
1
0.5
0
−0.5
−1
−1.5
−2
−2
−1.5
−1
−0.5
0
0.5
1
1.5
2
N=64, PaSat=0.58

FIG.34

PaSat=0.45
Circumscribed circle
PaSat=0.85
PaSat=0.45
Inscribed circle
PaSat=0.85

# FIG.35

2
1.5
1
0.5
0
−0.5
−1
−1.5
−2
−2
−1.5
−1
−0.5
0
0.5
1
1.5
2

64APSK, PaSat=0.58

N one-hot
PN variance
PA saturation point
Encoder
DNN
DNN
DNN
2D-cons
Channel
PN variance
PA saturation point
Decoder
DNN
DNN
DNN
Output

FIG.36

FIG.37

2.5
2
1.5
1
0.5
0
−0.5
−1
−1.5
−2
−2.5
PN=0.1, PaSat=0.58

2.5
2
1.5
1
0.5
0
−0.5
−1
−1.5
−2
−2.5
PN=0.02, PaSat=0.58

FIG.38
Proposed modulation at transmitter:
Bit sequence
Bit-to-index mapping
One-hot encoder vector
Offline-trained NN: defined by parameters pre-stored at transmitter
DNN
DNN
DNN
PN variance, $\sigma^2_{\mathrm{PN}}$
PA saturation point, PaSat
Modulated symbol
PA saturation point PaSat
Tx symbol
With modulation order $\log_2 N$, PN variance $\sigma^2_{\mathrm{PN}}$ and PA saturation point PaSat:
· Bit-to-index mapping (for bit sequences with length $\log_2 N$) + Offline-trained NN (for $N$, $\sigma^2_{\mathrm{PN}}$ , and PaSat) = Bit-to-symbol mapping and constellation with robustness to PA non-linearity and PN
Channel (with PN and variance $\sigma^2_{\mathrm{PN}}$ )
Rx Symbol
DNN
DNN
DNN
PN variance, $\sigma^2_{\mathrm{PN}}$
PA saturation point, PaSat
Offline-trained NN: defined by parameters pre-stored at receiver
One-hot encoder vector
Bit-to-index de-mapping
Bit sequence
Proposed demodulation at receiver:

FIG.39

2.5
2
1.5
1
0.5
0
−0.5
−1
−1.5
−2
−2.5
PN=0.1, PaSat=0.58

2.5
2
1.5
1
0.5
0
−0.5
−1
−1.5
−2
−2.5
PN=0.02, PaSat=0.58

FIG.40

Regularization
to APSK
N=64, PN variance=0.02, and PaSat=0.58
Irregular constellation trained by NN
Regularized 64APSK constellation
Regularization
to APSK
N=64, PN variance=0.1, and PaSat=0.58
Irregular constellation trained by NN
Regularized 64APSK constellation

FIG.41

N=64, PN variance=0.1, and PaSat=0.58
Regularized 64APSK trained by NN

N=64, PN variance=0.02, and PaSat=0.58
Regularized 64APSK trained by NN

# FIG.42

10
COMMUNICATION UNIT
110
TRANSMITTING UNIT
120
RECEIVING UNIT
130
CONFIGURATION UNIT
140
CONTROL UNIT

# FIG.43

20
COMMUNICATION UNIT
210
TRANSMITTING UNIT
220
RECEIVING UNIT
230
CONFIGURATION UNIT
240
CONTROL UNIT

FIG.44

10, 20
1001
PROCESSOR
1007
1004
COMMUNICATION DEVICE
1002
STORAGE DEVICE
1005
INPUT DEVICE
1003
AUXILIARY STORAGE DEVICE
1006
OUTPUT DEVICE

FIG.45

2001
2012
2023
2007
2008
2004
2029
2010
2003
2026
2030
2005
2027
2031
2002
2006
2032
2022, 2024, 2025
2009
2033
2021
2028
2013

## INTERNATIONAL SEARCH REPORT

International application No.
**PCT/JP2023/017347**

**A. CLASSIFICATION OF SUBJECT MATTER**

***H04L 27/36***(2006.01)i
FI: H04L27/36

According to International Patent Classification (IPC) or to both national classification and IPC

**B. FIELDS SEARCHED**

Minimum documentation searched (classification system followed by classification symbols)

H04L27/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2023-503111 A (HUAWEI TECHNOLOGIES CO., LTD.) 26 January 2023 (2023-01-26) entire text, all drawings | 1-6 |
| A | JP 2022-33051 A (NTT DOCOMO INC.) 25 February 2022 (2022-02-25) entire text, all drawings | 1-6 |
| A | JP 2022-534603 A (NOKIA TECHNOLOGIES OY) 02 August 2022 (2022-08-02) entire text, all drawings | 1-6 |
| A | VIVO. Discussions on AI/ML for DMRS[online], 3GPP TSG RAN WG1 #109-e R1-2203556, 29 April 2022 section 4.4 | 1-6 |
| A | JP 2021-136490 A (HITACHI KOKUSAI ELECTRIC INC.) 13 September 2021 (2021-09-13) entire text, all drawings | 1-6 |
| A | WO 2022/130625 A1 (MITSUBISHI ELECTRIC CORPORATION) 23 June 2022 (2022-06-23) entire text, all drawings | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/017347**

| Patent document cited in search report | Publication date (day/month/year) | Patent family member(s) | Publication date (day/month/year) |
|---|---|---|---|
| JP 2023-503111 A | 26 January 2023 | US 2021/0160149 A1<br>entire text, all drawings<br>WO 2021/098159 A1<br>CN 114788319 A | |
| JP 2022-33051 A | 25 February 2022 | CN 114142883 A<br>entire text, all drawings | |
| JP 2022-534603 A | 02 August 2022 | US 2022/0247614 A1<br>entire text, all drawings<br>WO 2020/239232 A1<br>CN 113906704 A<br>KR 10-2022-0010565 A | |
| JP 2021-136490 A | 13 September 2021 | (Family: none) | |
| WO 2022/130625 A1 | 23 June 2022 | JP 7209915 B2<br>entire text, all drawings | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *3GPP TS 38.300 V17.3.0*, December 2022
- **C. RAPP**. Effects of HPA-Nonlinearity on a 4-DPSK/OFDM-Signal for a Digital Sound Broadcasting System. *Proceedings of the Second European Conference on Satellite Communications, Liege*, 22 October 1991, 179-184
- **A. UGOLINI** ; **A. PIEMONTESE** ; **T. ERIKSSON**. Spiral Constellations for Phase Noise Channels. *IEEE Transactions on Communications*, November 2019, vol. 67 (11), 7799-7810
- Digital Video Broadcasting (DVB); Second generation framing structure, channel coding and modulation systems for Broadcasting, Interactive Services, News Gathering and other broadband satellite applications. *ETSI EN 302 307-1 V1.4.1*, November 2014
- **Y. JI** ; **G. ZHANG** ; **J. HUANG** ; **J. YANG** ; **G. GUI** ; **H. SARI**. Deep Learning for Adaptive Modulation and Coding with Payload Length in Vehicle-to-Vehicle Communications Systems. *2021 IEEE 94th Vehicular Technology Conference (VTC2021-Fall)*, 2021, 1-5
- **L. -S. CHEN** ; **W. -H. CHUNG** ; **I. -Y. CHEN** ; **S. -Y. KUO**. AMC With a BP-ANN Scheme for 5G Enhanced Mobile Broadband. IEEE Access
- **J. P. TWARAYISENZE et al.** Artificial Neural Network Based Adaptive Spatial Modulation. *2021 IEEE 6th International Conference on Computer and Communication Systems (ICCCS)*, 2021, 553-557
- **N. KURNIAWATI** ; **Y. K. NINGSIH**. Reinforcement Learning-Based Adaptive Modulation for Vehicular Communication. *2021 18th International Conference on Electrical Engineering/Electronics, Computer, Telecommunications and Information Technology (ECTI-CON)*, 2021, 224-227
- **W. SU** ; **J. LIN** ; **K. CHEN** ; **L. XIAO** ; **C. EN**. Reinforcement Learning-Based Adaptive Modulation and Coding for Efficient Underwater Communications. IEEE Access, 2019, vol. 7, 67539-67550
- **J. P. LEITE** ; **P. H. P. DE CARVALHO** ; **R. D. VIEIRA**. A flexible framework based on reinforcement learning for adaptive modulation and coding in OFDM wireless systems. *2012 IEEE Wireless Communications and Networking Conference (WCNC)*, 2012, 809-814
- **D. LEE et al.** DQN-Based Adaptive Modulation Scheme Over Wireless Communication Channels. *IEEE Communications Letters*, June 2020, vol. 24 (6), 1289-1293
- **L. ZHANG** ; **J. TAN** ; **Y. LIANG** ; **G. FENG** ; **D. NIYATO**. Deep Reinforcement Learning-Based Modulation and Coding Scheme Selection in Cognitive Heterogeneous Networks. *IEEE Transactions on Wireless Communications*, June 2019, vol. 18 (6), 3281-3294
- **S. BICAIS** ; **J. -B. DORE** ; **J. LUIS GONZALEZ JIMENEZ**. Adaptive PSK Modulation Scheme in the Presence of Phase Noise. *2018 IEEE 19th International Workshop on Signal Processing Advances in Wireless Communications (SPAWC)*, 1-5
- RF impairment models for 60GHz-band SYS/PHY simulation. *IEEE 802.15-06-0477-01-003c*
- *3GPP TS 38.214 V17.4.0*, December 2022